# EUROPEAN PATENT SPECIFICATION

(11) **EP 4 131 900 B1**
(45) Date of publication and mention of the grant of the patent: **06.11.2024**
(21) Application number: 21788497.2
(22) Date of filing: 15.04.2021
(51) Int. Cl.: H04M 1/02, G06F 1/16

(54) **FOLDING APPARATUS AND ELECTRONIC DEVICE**
FALTVORRICHTUNG UND ELEKTRONISCHE VORRICHTUNG
APPAREIL DE PLIAGE ET DISPOSITIF ÉLECTRONIQUE

(30) Priority: 15.04.2020 CN 202010296050
(43) Date of publication of application: 08.02.2023
(73) Proprietor: Huawei Technologies Co., Ltd., Shenzhen, Guangdong 518129 (CN)
(72) Inventor: NIU, Linhui, Shenzhen, Guangdong 518129 (CN); MA, Chunjun, Shenzhen, Guangdong 518129 (CN); XU, Zhengyi, Shenzhen, Guangdong 518129 (CN); LIU, Ting, Shenzhen, Guangdong 518129 (CN); LI, Yunyong, Shenzhen, Guangdong 518129 (CN); WANG, Gangchao, Shenzhen, Guangdong 518129 (CN)
(74) Representative: Huawei European IPR
(86) International application number: PCT/CN2021/087484
(87) International publication number: WO 2021/209001

(56) References cited:
- EP-A1- 3 993 372
- EP-A1- 4 089 990
- EP-A1- 4 216 520
- WO-A1-2019/120167
- CN-A- 110 445 913
- CN-A- 110 445 913
- CN-A- 111 614 806
- CN-U- 209 375 705
- CN-U- 209 402 552
- CN-U- 209 517 203
- US-A1- 2019 391 618
- US-A1- 2020 103 935
- US-A1- 2020 103 935
- US-A1- 2020 323 091

## Description

This application claims priority to Chinese Publication Number CN111614806A, filed with the China National Intellectual Property Administration on April 15, 2020 and entitled "FOLDING APPARATUS AND ELECTRONIC DEVICE".

### TECHNICAL FIELD

This application relates to the field of foldable electronic product technologies, and in particular, to a folding apparatus and an electronic device.

### BACKGROUND

In recent years, a flexible display is widely applied to various foldable electronic devices because of characteristics such as lightness, thinness, and non-fragileness. The foldable electronic device further includes a folding apparatus configured to carry the flexible display. The folding apparatus generally includes two housings and a rotation mechanism connected between the two housings. The two housings are folded or unfolded relative to each other through deformation of the rotation mechanism, and drive the flexible display to be folded or unfolded. A current rotation mechanism usually uses a multi-section chain hinged structure. This structure can meet a bending requirement, but has a very poor effect of supporting the flexible display. As a result, when the flexible display is subjected to an external force (for example, a user presses the flexible display or holds the electronic device), the flexible display is easily dented. Consequently, the flexible display is easily damaged, and has low reliability and a short service life. US 2020/103935 A1 discloses a folding structure comprises a supporting plate 332 and a first curved rail 331, wherein the supporting plate 332 is connected to one end of a first curved rail 331, wherein the first curved rail 331 correspondingly accommodated to the curved guiding slot 325 of the first sliding block 322.
US 2019/391618 A1 discloses a a hinge device, comprising a first rotating member **10**, a second rotating member **20**, and a first movable plate **30** and a second movable plate **40** symmetrically provided. The first rotating member **10** includes a first seat body **12**. The second rotating member **20** includes a second seat body **22**. The first movable plate **30** and the second movable plate **40** are respectively provided with a first plate leg **31** and a second plate leg **41**, and these plate legs both have arc segments **32**, **42** and one end thereof is a free end; wherein the free end of the first plate leg **31** is guided into the first seat body **12**, and the arc segment **32** of the first plate leg **31** is located on the first curved guiding channel **13** to move. The free end of the second plate leg **41** is guided into the second seat body **22**.
CN 110 445 913 A discloses a folding assembly 20 includes a first housing 1, a second housing 2, and a hinge assembly 3, the first housing 1 includes a first main housing portion 11 and a first supporting portion 12. The first supporting portion 12 is connected to a side, of the first main housing portion 11, that is close to the hinge assembly 3. The second housing 2 includes a second main housing portion 21 and a second supporting portion 22. The second supporting portion 22 is connected to a side, of the second main housing portion 21, that is close to the hinge assembly 3.
WO 2019/120167 A1 discloses a rotating mechanism includes a guide shaft, at least two rotating parts, and at least two constant-length units. The rotating parts are disposed on two sides of the guide shaft. An arc-shaped slot is disposed on the guide shaft. An arc-shaped part is disposed on the rotating part, and the arc-shaped part is disposed in the arc-shaped slot in a sliding manner. The constant-length unit is a long strip that has a fixed length and can be bent. EP4 216 520 A1 (published on 26 July 2023) discloses a hinge structure include a rotary member 230, a rotary plate 262 may be coupled to a guide member 250, and the rotary plate 262 moves together wth the guide member 250 rotates relative to the rotary member 230.
EP 4 089 990 A1 (published on 16 November 2022) discloses a folding mechanism includes a bracket and two support assemblies, with the two support assemblies respectively located on two sides of the bracket in a width direction. The support assembly includes a first support, a second support, and a swing arm, with the second support and the swing arm located on a same side of the first support. The second support is pivotally connected to the bracket and is slidably connected to the first support. One end of the swing arm is pivotally connected to the bracket, and the other end of the swing arm is pivotally connected to the first support. An axis around which the swing arm is pivotally connected to the bracket is spaced apart from an axis around which the second support is pivotally connected to the bracket.

### SUMMARY

The present invention is defined by the rotation mechanism of independent claim 1 and by the electronic device of independent claim 12. Additional features of the invention are presented in the dependent claims. In the following, parts of the description and drawing referring to embodiments, which are not covered by the claims are not presented as embodiments of the invention, but as examples useful for understanding the invention.

An objective of this application is to provide a folding apparatus and an electronic device. The folding apparatus is configured to carry a flexible display. In a process of folding or unfolding the folding apparatus, a bending mechanism of the folding apparatus can strongly support the flexible display, so that the flexible display has high reliability and a long service life.

According to a first aspect, this application provides a folding apparatus. The folding apparatus may be applied to an electronic device, and is configured to carry a flexible display of the electronic device. The folding apparatus includes a first housing, a rotation mechanism, and a second housing that are sequentially connected. The rotation mechanism can deform, to enable the first housing and the second housing to be folded or unfolded relative to each other.

The rotation mechanism includes a main shaft assembly, a first fastening bracket, a first transmission arm, a first rotation arm, a first support plate, a second fastening bracket, a second transmission arm, a second rotation arm, and a second support plate.

The first fastening bracket is fastened to the first housing. The first transmission arm includes a sliding end and a rotation end, the sliding end of the first transmission arm is slidably connected to the first fastening bracket, and the rotation end of the first transmission arm is rotatably connected to the main shaft assembly. One end of the first rotation arm is rotatably connected to the first fastening bracket, and the other end is rotatably connected to the main shaft assembly. The second fastening bracket is fastened to the second housing. The second transmission arm includes a sliding end and a rotation end, the sliding end of the second transmission arm is slidably connected to the second fastening bracket, and the rotation end of the second transmission arm is rotatably connected to the main shaft assembly. One end of the second rotation arm is rotatably connected to the second fastening bracket, and the other end is rotatably connected to the main shaft assembly.

The first support plate is lapped between the first fastening bracket and the main shaft assembly, and is fixedly connected to the first rotation arm. The second support plate is lapped between the second fastening bracket and the main shaft assembly, and is fixedly connected to the second rotation arm.

In this application, the first support plate is fixedly connected to the first rotation arm, and is lapped between the first fastening bracket and the main shaft assembly. The second support plate is fixedly connected to the second rotation arm, and is connected between the second fastening bracket and the main shaft assembly. Therefore, the first support plate can move with the first rotation arm, and the second support plate can move with the second rotation arm. In this case, when the folding apparatus is in an unfolded state, an intermediate state, and a closed state, strong support for a bending part of the flexible display can be formed together with the main shaft assembly, so that the flexible display is not easily damaged under an external force, reliability of the flexible display is improved, and a service life of the flexible display and a service life of the electronic device are prolonged.

In addition, because the first support plate and the first rotation arm are assembled into one part, and the second support plate and the second rotation arm are assembled into one part, the first rotation arm can directly control a movement track of the first support plate, and the second rotation arm can directly control a movement track of the second support plate. In this case, a movement process of the first support plate and the second support plate is high in control precision with a small hysteresis error, and therefore, the rotation mechanism can better meet a support requirement of the flexible display.

In this application, the rotation mechanism jointly controls a movement track of the first fastening bracket and a movement track of the first housing by using the first transmission arm and the first rotation arm, and jointly controls a movement track of the second fastening bracket and a movement track of the second housing by using the second transmission arm and the second rotation arm, so that in a process in which the first housing and the second housing are folded relative to each other, the first fastening bracket drives the first housing to move in a direction close to the main shaft assembly, and the second fastening bracket drives the second housing to move in a direction close to the main shaft assembly. In a process in which the first housing and the second housing are unfolded relative to each other, the first fastening bracket drives the first housing to move in a direction away from the main shaft assembly, and the second fastening bracket drives the second housing to move in a direction away from the main shaft assembly. That is, the rotation mechanism can implement in-pull movement of the housing in a process in which the folding apparatus changes from the unfolded state to the closed state, and out-push movement of the housing in a process in which the folding apparatus changes from the closed state to the unfolded state, so that the folding apparatus can implement a deformation movement in a process of unfolding or folding by using the flexible display as a neutral surface. This reduces a risk of pulling or squeezing the flexible display to protect the flexible display and improve reliability of the flexible display, so that the flexible display and the electronic device each have a long service life.

In addition, when the first housing and the second housing are folded relative to each other to the closed state by using the rotation mechanism, the first housing and the second housing can be totally closed with no gap or a small gap there-between. In this way, the folding apparatus implements self-shielding because of a complete appearance. An electronic device to which the folding apparatus is applied has a complete appearance, which helps improve product reliability and user experience.

In addition, the first transmission arm is rotatably connected to the main shaft assembly and is slidably connected to the first fastening bracket, to form a connecting rod slider structure. The first rotation arm is rotatably connected to the main shaft assembly and is rotatably connected to the first fastening bracket, to form a connecting rod structure. The second transmission arm is rotatably connected to the main shaft assembly and is slidably connected to the second fastening bracket, to form a connecting rod slider structure. The second rotation arm is rotatably connected to the main shaft assembly, and is rotatably connected to the second fastening bracket to form a connecting rod structure. The rotation mechanism implements a connection between the housing and the main shaft assembly by using the connecting rod slider structure and the connecting rod structure. The rotation mechanism has a few constituent parts with a simple fitting relationship and simple fitting locations. The constituent components are easy to manufacture and assemble, thereby facilitating mass production. In addition, because the main shaft assembly is linked to the first fastening bracket by using the first transmission arm and the first rotation arm, and linked to the second fastening bracket by using the second transmission arm and the second rotation arm, the rotation mechanism has good mechanism tensile resistance and mechanism extrusion resistance.

In a possible implementation, the main shaft assembly has a support surface, and the support surface of the main shaft assembly is exposed relative to the first support plate and the second support plate. The support surface of the main shaft assembly includes a first arc surface region, a plane region, and a second arc surface region that are sequentially arranged in a direction from the first support plate to the second support plate. In other words, the first arc surface region is located between the first support plate and the plane region, and the second arc surface region is located between the plane region and the second support plate.

In this implementation, the plane region of the support surface of the main shaft assembly can provide flat strong support for the flexible display when the folding apparatus is in the unfolded state, to improve press touch experience of the flexible display. The first arc surface region and the second arc surface region of the support surface of the main shaft assembly can separately form a smooth transition with the first support plate and the second support plate when the folding apparatus is in the intermediate state and the closed state, so that the main shaft assembly, the first support plate, and the second support plate can jointly provide a smooth support surface for the bending part of the flexible display. Therefore, the rotation mechanism has a good support effect for the flexible display.

In a possible implementation, when the first housing and the second housing are unfolded relative to each other to an unfolded state, a support surface of the first support plate and a support surface of the second support plate are parallel to a plane region of a support surface of the main shaft assembly. When the first housing and the second housing are folded relative to each other to a closed state, the support surface of the first support plate is inclined relative to the plane region of the support surface of the main shaft assembly, the support surface of the second support plate is inclined relative to the plane region of the support surface of the main shaft assembly, and the support surface of the first support plate and the support surface of the second support plate are away from each other in a direction away from the support surface of the main shaft assembly.

In this implementation, when the folding apparatus is in the closed state, the first support plate and the second support plate can form a three-segment wrapper together with the main outer shaft, to provide substantially arc-shaped strong support for the bending part of the flexible display. In this way, a closed form of the bending part of the flexible display can be close to an ideal closed form. Therefore, the folding apparatus can provide more optimized support for the flexible display in the closed form.

In a possible implementation, the main shaft assembly includes a main inner shaft and a main outer shaft fastened to the main inner shaft, and the main outer shaft is partially exposed relative to the first support plate and the second support plate. A rotation center in which the first transmission arm rotates relative to the main shaft assembly is close to the main inner shaft and away from the main outer shaft, and a rotation center in which the first rotation arm rotates relative to the main shaft assembly is close to the main outer shaft and away from the main inner shaft. A rotation center in which the second transmission arm rotates relative to the main shaft assembly is close to the main inner shaft and away from the main outer shaft, and a rotation center in which the second rotation arm rotates relative to the main shaft assembly is close to the main outer shaft and away from the main inner shaft.

In this implementation, positions of the rotation centers in which the first transmission arm, the first rotation arm, the second transmission arm and the second rotation arm rotate relative to the main shaft assembly are disposed, so that the rotation mechanism easily implements in-pull movement of the housing in a process in which the folding apparatus changes from the unfolded state to the closed state and out-push movement of the housing in a process in which the folding apparatus changes from the closed state to the unfolded state.

In addition, a plurality of three-dimensional space structures are disposed on both the main inner shaft and the main outer shaft. These structures are designed, so that after the main inner shaft and the main outer shaft are assembled, a plurality of movement spaces can be formed together. A mechanical part of the rotation mechanism is movably disposed in the plurality of movement spaces of the main shaft assembly. This implements a connection to the main shaft assembly. The main inner shaft and the main outer shaft are separately designed. This helps reduce a difficulty of making the main shaft assembly, and improve precision of making the main shaft assembly and a product yield rate.

In a possible implementation, the main inner shaft and the main outer shaft jointly enclose a plurality of arc grooves. The rotation end of the first transmission arm is in an arc shape and is disposed in one of the arc grooves, and the end that is of the first rotation arm and that is rotatably connected to the main shaft assembly is in an arc shape and is disposed in another one of the arc grooves. The rotation end of the second transmission arm is in an arc shape and is disposed in another one of the arc grooves, and the end that is of the second rotation arm and that is rotatably connected to the main shaft assembly is in an arc shape and is disposed in another one of the arc grooves.

In this implementation, the first transmission arm, the first rotation arm, the second transmission arm, and the second rotation arm are all connected to the main shaft assembly by using a virtual shaft. A rotatable connection structure is simple, and occupies small space. This helps reduce a thickness of the rotation mechanism, so that the folding apparatus and the electronic device are lighter and thinner.

In a possible implementation, the first fastening bracket has a first sliding slot, a first concave region, and a second concave region. Both the first concave region and the second concave region communicate with the first sliding slot, and the first concave region is located between the main shaft assembly and the second concave region. The rotation mechanism further includes a first stopper, the first stopper is disposed on the sliding end of the first transmission arm, and the sliding end of the first transmission arm is disposed in the first sliding slot. When the first housing and the second housing are unfolded relative to each other to the unfolded state, the first stopper is partially clamped into the first concave region. When the first housing and the second housing are folded relative to each other to the closed state, the first stopper is partially clamped into the second concave region.

In this implementation, because the first stopper is clamped onto the first fastening bracket, a relative position relationship between the first transmission arm and the first fastening bracket can be limited, so that the first transmission arm and the first fastening bracket can maintain a preset relative position relationship without a large external force. In this way, the rotation mechanism can stay at a preset angle. A rotation mechanism can maintain the unfolded state or the closed state, to improve user experience of the folding apparatus and the electronic device.

In a possible implementation, the sliding end of the first transmission arm includes a first flange located on a peripheral side. The sliding end of the first transmission arm is disposed in the first sliding slot of the first fastening bracket, and the first flange is disposed in guide space of the first sliding slot. In this implementation, the guide space of the first sliding slot cooperates with the first flange of the first transmission arm, so that the sliding end of the first transmission arm can be guided in a sliding direction of the first sliding slot. In this way, a relative sliding action between the first transmission arm and the first fastening bracket is easy to implement with high control precision.

In a possible implementation, the sliding end of the first transmission arm has a first accommodating groove, and the first stopper is disposed in the first accommodating groove. The first stopper includes a first bracket and a first elastic part. The first bracket includes a control portion and an abutment portion. One end of the first elastic part is disposed on the control portion of the first bracket, and the other end abuts against a groove wall of the first accommodating groove. The abutment portion of the first bracket is clamped into the first fastening bracket.

In this implementation, the first elastic part of the first stopper can deform under an external force, so that the first stopper can smoothly move between the first concave region and the second concave region relative to the first fastening bracket. This improves limiting reliability between the first stopper and the sliding end of the first transmission arm.

In a possible implementation, the first stopper may further include a first buffer part, and the first buffer part is disposed on the abutment portion of the first bracket. The first buffer part may be made of a material (for example, rubber) with small stiffness, so that when being subjected to an external force, the first buffer part can absorb an impact force through deformation, thereby implementing buffering. Because the first buffer part sleeves the abutment portion of the first bracket, the first stopper abuts against the first fastening bracket by using the first buffer part with a buffer function. This helps reduce a risk of wear between the first bracket and the first fastening bracket in a long-time relative movement process, improve limiting reliability of the first stopper, and improve reliability of the rotation mechanism.

In a possible implementation, the first fastening bracket has a first arc groove, and the end that is of the first rotation arm and that is rotatably connected to the first fastening bracket is in an arc shape and is disposed in the first arc groove. The second fastening bracket has a second arc groove, and the end that is of the second rotation arm and that is rotatably connected to the second fastening bracket is in an arc shape and is disposed in the second arc groove.

In this implementation, the first rotation arm is connected to the first fastening bracket by using a virtual shaft, and the second rotation arm is connected to the second fastening bracket by using a virtual shaft. A rotatable connection structure is simple, and occupies small space. This helps reduce a thickness of the rotation mechanism, so that the folding apparatus and the electronic device are lighter and thinner.

In a possible implementation, the first fastening bracket includes a first fastening base and a first snapping part. The first snapping part is fastened to the first fastening base, and the first snapping part and the first fastening base jointly enclose a first arc groove. In this implementation, a processing manner in which the first fastening base and the first snapping part are separately manufactured, and then the first fastening base and the first snapping part are assembled into the first fastening bracket helps reduce a processing difficulty of the first fastening bracket, and improve a product yield rate of the first fastening bracket.

In a possible implementation, the second fastening bracket includes a second fastening base and a second snapping part. The second snapping part is fastened to the second fastening base, and the second snapping part and the second fastening base jointly enclose a second arc groove. In this implementation, a processing manner in which the second fastening base and the second snapping part are separately manufactured, and then the second fastening base and the second snapping part are assembled into the second fastening bracket helps reduce a processing difficulty of the second fastening bracket, and improve a product yield rate of the second fastening bracket.

According to the invention, the first rotation arm includes a first rotation part and a second rotation part. The first rotation part includes a fixed portion and a rotation portion. The end that is of the first rotation arm and that is rotatably connected to the first fastening bracket is formed on the rotation portion of the first rotation part, and the fixed portion of the first rotation part is fastened to the first support plate. The second rotation part includes a fixed portion and a rotation portion. The end that is of the first rotation arm and that is rotatably connected to the main shaft assembly is formed on the rotation portion of the second rotation part, and the fixed portion of the second rotation part is fastened to the first support plate.

In this implementation, because the fixed portion of the first rotation part is fastened to the first support plate, and the fixed portion of the second rotation part is also fastened to the first support plate, the second rotation part and the first rotation part are fastened to each other. The second rotation part and the first rotation part are jointly equivalent to a mechanical part that can transfer force and movement, so that the first rotation arm can transfer force and movement between the main shaft assembly and the first fastening bracket.

According to the invention, the first rotation arm includes a first rotation part, a second rotation part, and a first fastening part. The first rotation part includes a fixed portion and a rotation portion. The end that is of the first rotation arm and that is rotatably connected to the first fastening bracket is formed on the rotation portion of the first rotation part, and the fixed portion of the first rotation part is fastened to the first fastening part. The second rotation part includes a fixed portion and a rotation portion. The end that is of the first rotation arm and that is rotatably connected to the main shaft assembly is formed on the rotation portion of the second rotation part, and the fixed portion of the second rotation part is fastened to the first fastening part. The first fastening part is fixedly connected to the first support plate.

In this implementation, a plurality of mechanical parts of the first rotation arm may be first assembled to form a modular structure, and then assembled with the first support plate. This helps improve assembly precision of the rotation mechanism.

In a possible implementation, the first rotation arm is an integrally formed mechanical part. The first rotation arm includes a first rotation portion, a fixed portion, and a second rotation portion that are sequentially arranged. The end that is of the first rotation arm and that is rotatably connected to the first fastening bracket is formed on the first rotation portion of the first rotation arm. The end that is of the first rotation arm and that is rotatably connected to the main shaft assembly is formed on the second rotation portion of the first rotation arm. The first support plate is fastened to the fixed portion of the first rotation arm.

In this implementation, the integrally formed first rotation arm can simplify an assembly process of the rotation mechanism.

In a possible implementation, the rotation mechanism further includes a first shielding plate and a second shielding plate. The first shielding plate is located on a side that is of the first transmission arm and that is away from the first support plate, and is fixedly connected to the sliding end of the first transmission arm. The second shielding plate is located on a side that is of the second transmission arm and that is away from the second support plate, and is fixedly connected to the sliding end of the second transmission arm.

When the first housing and the second housing are unfolded relative to each other to the unfolded state, the first shielding plate is flush with the second shielding plate, the first shielding plate is lapped between the first fastening bracket and the main shaft assembly, and the second shielding plate is lapped between the second fastening bracket and the main shaft assembly. When the first housing and the second housing are folded relative to each other to the closed state, the first shielding plate is located between the first fastening bracket and the first housing, and the second shielding plate is located between the second fastening bracket and the second housing.

In this implementation, the first shielding plate is fastened to the sliding end of the first transmission arm, the first shielding plate moves along with the sliding end of the first transmission arm, the second shielding plate is fastened to the sliding end of the second transmission arm, and the second shielding plate moves along with the sliding end of the second transmission arm. Therefore, when the first housing and the second housing are unfolded relative to each other to the unfolded state, the first shielding plate extends out of the first housing along with the first transmission arm, the first shielding plate is lapped between the first fastening bracket and the main shaft assembly, and can shield a gap between the first fastening bracket and the main shaft assembly. The second shielding plate extends out of the second housing along with the second transmission arm. The second shielding plate is lapped between the second fastening bracket and the main shaft assembly, and can shield a gap between the second fastening bracket and the main shaft assembly. Therefore, the folding apparatus can implement self-shielding, which helps improve appearance integrity, can also reduce a risk of external dust and foreign matters entering the rotation mechanism, to ensure reliability of the folding apparatus. When the first housing and the second housing are folded relative to each other to a closed state, the first shielding plate follows the first transmission arm to approach the first housing, so that the first shielding plate can be folded between the first fastening bracket and the first housing. The second shielding plate follows the second transmission arm to approach the second housing, so that the second shielding plate can be folded between the second fastening bracket and the second housing, to implement avoidance. In this way, the folding apparatus can be smoothly folded to a closed form, and reliability of the mechanism is high.

In addition, because the first shielding plate and the first transmission arm are assembled into one part, and the second shielding plate and the second transmission arm are assembled into one part, the first transmission arm can directly control a movement track of the first shielding plate, and the second transmission arm can directly control a movement track of the second shielding plate. In this case, a movement process of the first shielding plate and the second shielding plate is high in control precision with a small hysteresis error, so that the first shielding plate and the second shielding plate accurately extend or retract in a rotation process of the folding apparatus to meet a self-shielding requirement of the flexible display.

In a possible implementation, the main shaft assembly has a shielding surface. When the first housing and the second housing are unfolded relative to each other to the unfolded state, the shielding surface of the main shaft assembly is exposed relative to the first shielding plate and the second shielding plate. Therefore, the rotation mechanism can jointly shield a gap between the first housing and the second housing by using the first shielding plate, the main shaft assembly, and the second shielding plate in the unfolded state, thereby implementing self-shielding.

In a possible implementation, the main shaft assembly further includes a shielding plate, and the shielding plate is fastened to a side that is of the main inner shaft and that is away from the main outer shaft. The shielding surface of the main shaft assembly is formed on the shielding plate, and is disposed away from the main outer shaft. In some implementations, the shielding plate may be mutually fastened to the main inner shaft in an assembly manner. In some other implementations, the shielding plate and the main inner shaft may alternatively be an integrally formed mechanical part.

In a possible implementation, the rotation mechanism further includes a third fastening bracket, a fourth fastening bracket, a first synchronous swing arm, and a second synchronous swing arm. The third fastening bracket is fastened to the first housing, and the fourth fastening bracket is fastened to the second housing. The first synchronous swing arm includes a rotation end and a movable end, the rotation end of the first synchronous swing arm is rotatably connected to the main shaft assembly, and the movable end of the first synchronous swing arm is movably connected to the third fastening bracket. In a process in which the first housing and the second housing are folded or unfolded relative to each other, the movable end of the first synchronous swing arm slides and rotates relative to the third fastening bracket. The second synchronous swing arm includes a rotation end and a movable end, the rotation end of the second synchronous swing arm is rotatably connected to the main shaft assembly, the rotation end of the second synchronous swing arm is engaged with the rotation end of the first synchronous swing arm, and the movable end of the second synchronous swing arm is movably connected to the fourth fastening bracket. In the process in which the first housing and the second housing are folded or unfolded relative to each other, the movable end of the second synchronous swing arm slides and rotates relative to the fourth fastening bracket.

In this implementation, because the rotation end of the first synchronous swing arm is engaged with the rotation end of the second synchronous swing arm, both the rotation end of the first synchronous swing arm and the rotation end of the second synchronous swing arm are rotatably connected to the main shaft assembly, the movable end of the first synchronous swing arm is movably connected to the third fastening bracket, and the movable end of the second synchronous swing arm is movably connected to the fourth fastening bracket. Therefore, in the process in which the first housing and the second housing are unfolded or folded relative to each other, the first synchronous swing arm and the second synchronous swing arm can control a rotation angle of the third fastening bracket and a rotation angle of the fourth fastening bracket relative to the main shaft assembly to be consistent. In this case, a rotation action of the first housing and a rotation action of the second housing are synchronous and consistent, and symmetry between a folding action and an unfolding action of the folding apparatus is good. This helps improve user experience.

The first synchronous swing arm is rotatably connected to the main shaft assembly, and is slidably and rotatably connected to the third fastening bracket, that is, a connecting rod slider structure is formed. The second synchronous swing arm is rotatably connected to the main shaft assembly, and is slidably and rotatably connected to the fourth fastening bracket, that is, a connecting rod slider structure is formed. The two connecting rod slider structures that are engaged with each other can well control synchronization and consistency of the rotation action of the first housing and the rotation action of the second housing.

In some implementations, a first fastening groove is disposed on a side that is of the first housing and that is close to the rotation mechanism. The first fastening bracket and the third fastening bracket are disposed and fastened to the first fastening groove, and a gap is formed between each of the first fastening bracket and the third fastening bracket and a groove bottom wall of the first fastening groove. The gap is configured to provide accommodation and movement space for the first shielding plate. In this implementation, because the first fastening bracket and the first housing are fastened to each other, the first housing moves along with the first fastening bracket, and the rotation mechanism can control the movement track of the first housing by controlling the movement track of the first fastening bracket. For example, the first housing has a first support surface, and a top surface of the first fastening bracket is flush with the first support surface, to jointly support the flexible display.

According to a second aspect, this application further provides an electronic device, including a flexible display and the folding apparatus according to any one of the foregoing implementations. The flexible display includes a first non-bending part, a bending part, and a second non-bending part that are sequentially arranged. The first non-bending part is fastened to the first housing, the second non-bending part is fastened to the second housing, and the bending part deforms in the process in which the first housing and the second housing are folded or unfolded relative to each other.

In this application, the flexible display can be unfolded or folded with the folding apparatus. When the electronic device is in an unfolded state, the flexible display is in an unfolded form, and can perform full-screen display, so that the electronic device has a large display area, to improve viewing experience of a user. When the electronic device is in a closed state, a planar size of the electronic device is small, so that it is convenient for a user to carry and place the electronic device.

The first support plate, the main shaft assembly, and the second support plate of the rotation mechanism of the folding apparatus can jointly provide strong support for the flexible display in various forms, so that the flexible display is not easily dented under an external force. This helps reduce a risk of damage to the display, improve reliability of the flexible display, and enable the flexible display and the electronic device to have a long service life respectively.

### BRIEF DESCRIPTION OF DRAWINGS

FIG. 1 is a schematic diagram of a structure of an electronic device in an unfolded state according to an embodiment of this application;
FIG. 2 is a schematic diagram of a structure of a folding apparatus of the electronic device shown in FIG. 1;
FIG. 3 is a schematic diagram of a structure of the electronic device shown in FIG. 1 in an intermediate state;
FIG. 4 is a schematic diagram of a structure of a folding apparatus of the electronic device shown in FIG. 3;
FIG. 5 is a schematic diagram of a structure of the electronic device shown in FIG. 1 in a closed state;
FIG. 6 is a schematic diagram of a structure of a folding apparatus of the electronic device shown in FIG. 5;
FIG. 7 is a schematic exploded view of a partial structure of the folding apparatus shown in FIG. 2;
FIG. 8 is a schematic exploded view of a partial structure of the rotation mechanism shown in FIG. 7;
FIG. 9 is a schematic diagram of a structure of the folding apparatus shown in FIG. 2 from another angle;
FIG. 10 is a partial schematic exploded view of a partial structure of the folding apparatus shown in FIG. 2;
FIG. 11 is a schematic exploded view of a structure of the main shaft assembly shown in FIG. 10;
FIG. 12 is a schematic diagram of a structure of the main outer shaft shown in FIG. 11 from another angle;
FIG. 13 is a schematic diagram of a structure of the main shaft assembly shown in FIG. 10 that is cut along a line A-A;
FIG. 14 is a schematic diagram of a structure of the main shaft assembly shown in FIG. 10 that is cut along a line B-B;
FIG. 15 is a schematic diagram of a structure of the main shaft assembly shown in FIG. 10 that is cut along a line C-C;
FIG. 16 is a schematic diagram of a structure of the main shaft assembly shown in FIG. 10 that is cut along a D-D line;
FIG. 17 is a schematic diagram of a structure of the main shaft assembly shown in FIG. 10 that is cut along a line E-E;
FIG. 18 is a schematic diagram of a structure of the end connection component shown in FIG. 10 from another angle;
FIG. 19 is a schematic exploded view of a partial structure of the end connection component shown in FIG. 18;
FIG. 20 is a schematic diagram of a structure of the end connection component shown in FIG. 10 from still another angle;
FIG. 21 is a schematic exploded view of a partial structure of the end connection component shown in FIG. 20;
FIG. 22 is a schematic diagram of an exploded structure of a first fastening bracket of the end connection component shown in FIG. 21;
FIG. 23 is a schematic diagram of an exploded structure of a second fastening bracket of the end connection component shown in FIG. 21;
FIG. 24 is a schematic diagram of an exploded structure of a first stopper of the end connection component shown in FIG. 21;
FIG. 25 is a schematic diagram of a partial structure of the rotation mechanism shown in FIG. 7;
FIG. 26 is a schematic diagram of a structure of the first support plate shown in FIG. 25;
FIG. 27 is a schematic diagram of another partial structure of the rotation mechanism shown in FIG. 7;
FIG. 28 is a schematic diagram of a structure of the first rotation arm shown in FIG. 21 in some other embodiments;
FIG. 29 is a schematic diagram of a structure of the first rotation arm shown in FIG. 21 in still some other embodiments;
FIG. 30 is a schematic diagram of still another partial structure of the rotation mechanism shown in FIG. 7;
FIG. 31 is a schematic diagram of structures of the first shielding plate and the second shielding plate shown in FIG. 7;
FIG. 32 is a schematic diagram of a structure of a synchronous connection component of the rotation mechanism shown in FIG. 8;
FIG. 33 is a schematic diagram of an exploded structure of the synchronous connection component shown in FIG. 32;
FIG. 34 is a schematic diagram of a structure of the synchronous connection component shown in FIG. 33 from another angle;
FIG. 35 is a schematic diagram of a partial structure of the folding apparatus shown in FIG. 2;
FIG. 36 is a schematic diagram of another partial structure of the folding apparatus shown in FIG. 2;
FIG. 37 is a schematic diagram of another partial structure of the folding apparatus shown in FIG. 2;
FIG. 38 is a schematic diagram of another partial structure of the folding apparatus shown in FIG. 2;
FIG. 39 is a schematic diagram of a sectional structure of the folding apparatus shown in FIG. 2 at a position corresponding to a first transmission arm;
FIG. 40 is a schematic diagram of a sectional structure of the folding apparatus shown in FIG. 2 at a position corresponding to a first rotation part and a fourth rotation part;
FIG. 41 is a schematic diagram of a sectional structure of the folding apparatus shown in FIG. 2 at a position corresponding to a second rotation part and a third rotation part;
FIG. 42 is a schematic diagram of a sectional structure of the folding apparatus shown in FIG. 2 at a position corresponding to a second transmission arm;
FIG. 43 is a schematic diagram of a sectional structure of the folding apparatus shown in FIG. 4 at a position corresponding to a first transmission arm;
FIG. 44 is a schematic diagram of a sectional structure of the folding apparatus shown in FIG. 4 at a position corresponding to a first rotation part and a fourth rotation part;
FIG. 45 is a schematic diagram of a sectional structure of the folding apparatus shown in FIG. 4 at a position corresponding to a second rotation part and a third rotation part;
FIG. 46 is a schematic diagram of a sectional structure of the folding apparatus shown in FIG. 4 at a position corresponding to a second transmission arm;
FIG. 47 is a schematic diagram of a sectional structure of the folding apparatus shown in FIG. 6 at a position corresponding to a first transmission arm;
FIG. 48 is a schematic diagram of a sectional structure of the folding apparatus shown in FIG. 6 at a position corresponding to a first rotation part and a fourth rotation part;
FIG. 49 is a schematic diagram of a sectional structure of the folding apparatus shown in FIG. 6 at a position corresponding to a second rotation part and a third rotation part;
FIG. 50 is a schematic diagram of a sectional structure of the folding apparatus shown in FIG. 6 at a position corresponding to a second transmission arm;
FIG. 51 is a schematic diagram of a sectional structure of the folding apparatus shown in FIG. 2 at a position corresponding to a first synchronous swing arm and a second synchronous swing arm; and
FIG. 52 is a schematic diagram of a sectional structure of the folding apparatus shown in FIG. 6 at a position corresponding to a first synchronous swing arm and a second synchronous swing arm.

### DESCRIPTION OF EMBODIMENTS

The following describes embodiments of this application with reference to the accompanying drawings in the following embodiments of this application.

Embodiments of this application provide a folding apparatus and an electronic device. The electronic device includes a folding apparatus and a flexible display fastened to the folding apparatus. The folding apparatus may be unfolded to an unfolded state, or may be folded to a closed state, or may be in an intermediate state between the unfolded state and the closed state. The flexible display is unfolded and folded with the folding apparatus. A first support plate, a main shaft assembly, and a second support plate of a rotation mechanism of the folding apparatus can jointly provide strong support for the flexible display in various forms, so that the flexible display is not easily dented under an external force. This helps reduce a risk of damage to the display, improve reliability of the flexible display, and enable the flexible display and the electronic device to have a long service life each.

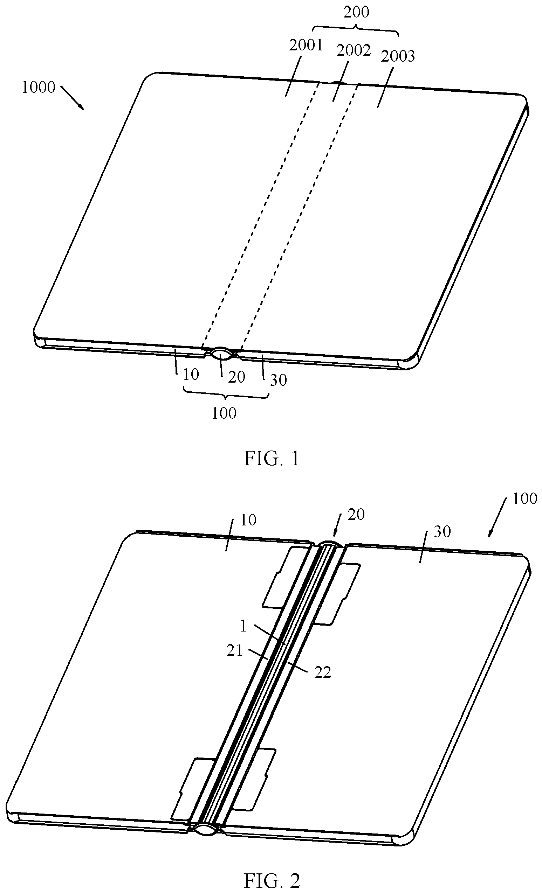

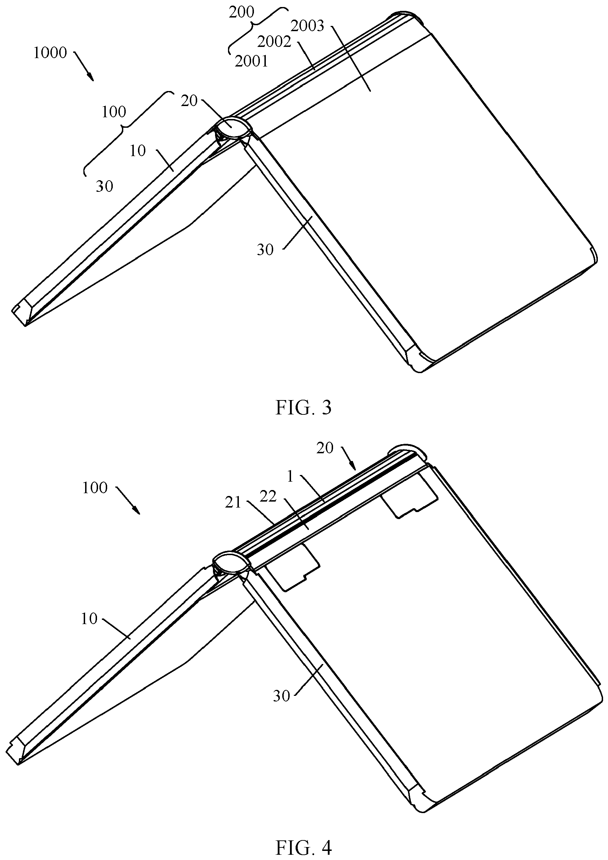

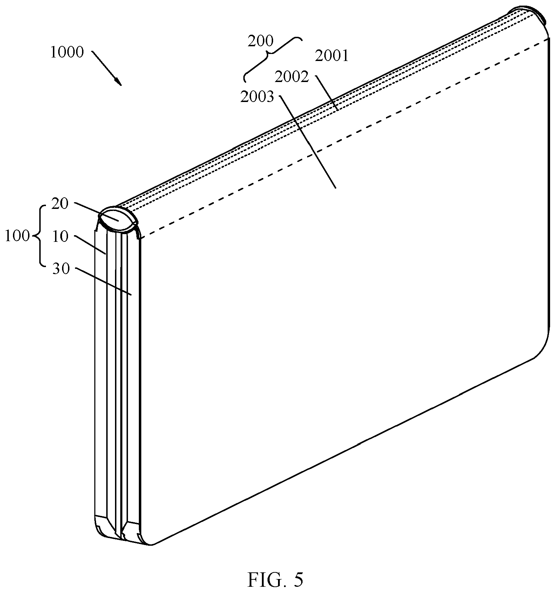

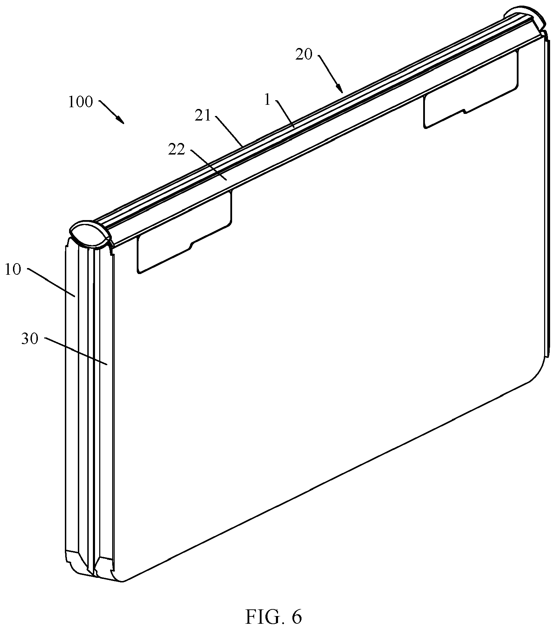

Refer to FIG. 1 to FIG. 6. FIG. 1 is a schematic diagram of a structure of an electronic device 1000 in an unfolded state according to an embodiment of this application. FIG. 2 is a schematic diagram of a structure of a folding apparatus 100 of the electronic device 1000 shown in FIG. 1. FIG. 3 is a schematic diagram of a structure of the electronic device 1000 shown in FIG. 1 in an intermediate state. FIG. 4 is a schematic diagram of a structure of a folding apparatus 100 of the electronic device 1000 shown in FIG. 3. FIG. 5 is a schematic diagram of a structure of the electronic device 1000 shown in FIG. 1 in a closed state. FIG. 6 is a schematic diagram of a structure of a folding apparatus 100 of the electronic device 1000 shown in FIG. 5. The electronic device 1000 may be a product such as a mobile phone, a tablet computer, or a notebook computer. This embodiment is described by using an example in which the electronic device 1000 is a mobile phone.

The electronic device 1000 includes a folding apparatus 100 and a flexible display 200. The folding apparatus 100 includes a first housing 10, a rotation mechanism 20, and a second housing 30 that are sequentially connected. The rotation mechanism 20 can deform, to enable the first housing 10 and the second housing 30 to be folded or unfolded relative to each other. As shown in FIG. 1 and FIG. 2, the first housing 10 and the second housing 30 can be unfolded relative to each other to an unfolded state, so that the electronic device 1000 is in the unfolded state. For example, when the first housing 10 and the second housing 30 are in the unfolded state, an included angle between the first housing 10 and the second housing 30 may be substantially 180° (a slight deviation is allowed, for example, the included angle is 165°, 177°, or 185°). As shown in FIG. 3 and FIG. 4, the first housing 10 and the second housing 30 can rotate (unfold or fold) relative to each other to an intermediate state, so that the electronic device 1000 is in the intermediate state. As shown in FIG. 5 and FIG. 6, the first housing 10 and the second housing 30 can be folded relative to each other to a closed state, so that the electronic device 1000 is in the closed state. For example, when the first housing 10 and the second housing 30 are in the closed state, the first housing 10 and the second housing 30 can be totally closed to be parallel to each other (a slight deviation is allowed). The intermediate state shown in FIG. 3 and FIG. 4 may be any state between the unfolded state and the closed state. Therefore, the electronic device 1000 may switch between the unfolded state and the closed state through deformation of the rotation mechanism 20.

In some embodiments, the flexible display 200 is configured to display an image. For example, the flexible display 200 may be an organic light-emitting diode (OLED) display, an active-matrix organic light-emitting diode (AMOLED) display, a mini light-emitting diode display, a micro light-emitting diode display, a micro organic light-emitting diode display, or a quantum dot light-emitting diode (QLED) display.

The flexible display 200 includes a first non-bending part 2001, a bending part 2002, and a second non-bending part 2003 that are sequentially arranged. The flexible display 200 is fastened to the folding apparatus 100. For example, the flexible display 200 may be bonded to the folding apparatus 100 by using an adhesive layer. The first non-bending part 2001 of the flexible display 200 is fastened to the first housing 10, and the second non-bending part 2003 is fastened to the second housing 30. In a process in which the first housing 10 and the second housing 30 are folded or unfolded relative to each other, the bending part 2002 deforms. As shown in FIG. 1, when the first housing 10 and the second housing 30 are in an unfolded state, the flexible display 200 is in an unfolded form. As shown in FIG. 3, when the first housing 10 and the second housing 30 are in an intermediate state, the flexible display 200 is in an intermediate form between an unfolded form and a closed form. As shown in FIG. 5, when the first housing 10 and the second housing 30 are in a closed state, the flexible display 200 is in a closed form. When the electronic device 1000 is in the closed state, the flexible display 200 is located on an outer side of the folding apparatus 100, and the flexible display 200 may be roughly in a U shape.

In this embodiment, the flexible display 200 can be unfolded or folded with the folding apparatus 100. When the electronic device 1000 is in the unfolded state, the flexible display 200 is in the unfolded form, and can perform full-screen display, so that the electronic device 1000 has a large display area, to improve viewing experience of a user. When the electronic device 1000 is in the closed state, a plane size of the electronic device 1000 is small (with a small width size), so that it is convenient for the user to carry and place the electronic device 1000.

It may be understood that this embodiment is described by using an example in which "a rotation center of the electronic device 1000 is parallel to a width direction of the electronic device 1000" . In this case, the electronic device 1000 can rotate leftward and rightward, and folding and unfolding of the electronic device 1000 affect a width size of the electronic device 1000. In some other embodiments, a rotation center of the electronic device 1000 may alternatively be parallel to a length direction of the electronic device 1000. In this case, the electronic device 1000 can rotate up and down, and folding and unfolding of the electronic device 1000 affect a length size of the electronic device 1000.

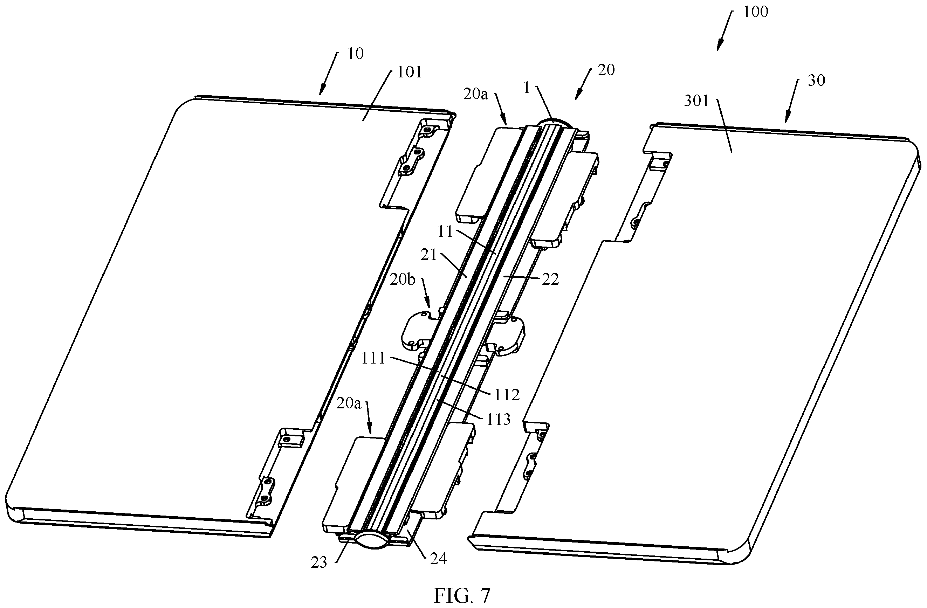

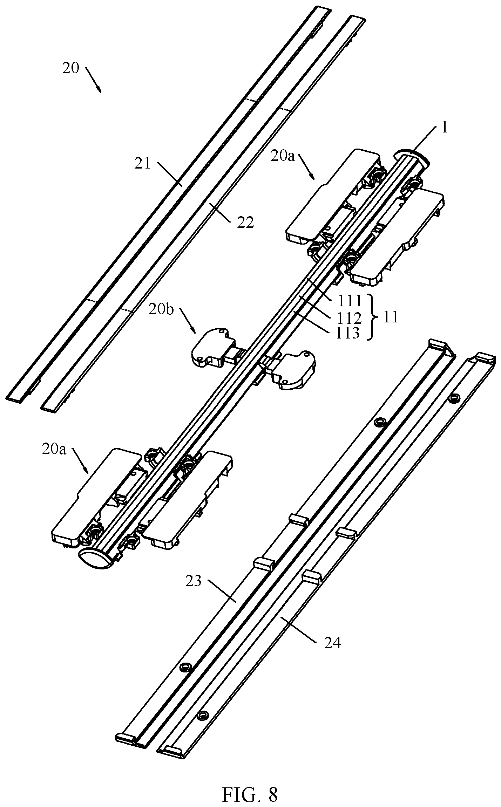

Refer to FIG. 7 and FIG. 8 together. FIG. 7 is a schematic exploded view of a partial structure of the folding apparatus 100 shown in FIG. 2. FIG. 8 is a schematic exploded view of a partial structure of the rotation mechanism 20 shown in FIG. 7. A fastener in the folding apparatus 100 is not shown in the accompanying drawings of this application, so as to simplify the drawings and show a main structure of the folding apparatus 100 more clearly.

The rotation mechanism 20 of the folding apparatus 100 includes a main shaft assembly 1, end connection components 20a, a synchronous connection component 20b, a first support plate 21, a second support plate 22, a first shielding plate 23, and a second shielding plate 24. The main shaft assembly 1 is located between the first housing 10 and the second housing 30. The end connection components 20a are connected to the first housing 10, the main shaft assembly 1, and the second housing 30. There are two end connection components 20a, and the two end connection components 20a are arranged at intervals in an axial direction of the main shaft assembly 1, for example, may be respectively connected to a top and a bottom of the main shaft assembly 1. The synchronous connection component 20b is connected to the first housing 10, the main shaft assembly 1, and the second housing 30. The synchronous connection component 20b is located between the two end connection components 20a. The first support plate 21 and the second support plate 22 are located on one side of the plurality of connection components (that is, the two end connection components 20a and the synchronous connection component 20b), and the first shielding plate 23 and the second shielding plate 24 are located on the other side of the plurality of connection components (20a and 20b). In some other embodiments, there may alternatively be one or more than three end connection components 20a, and there may alternatively be more than two synchronous connection components 20b. This is not strictly limited in this application.

The first support plate 21 is located on a side that is of the main shaft assembly 1 and that faces the first housing 10, and the first support plate 21 connects the two end connection components 20a. The second support plate 22 is located on a side that is of the main shaft assembly 1 and that faces the second housing 30, and the second support plate 22 connects the two end connection components 20a. The main shaft assembly 1 has a support surface 11, and the support surface 11 of the main shaft assembly 1 is partially exposed relative to the first support plate 21 and the second support plate 22. The support surface 11 of the main shaft assembly 1 is configured to support the flexible display 200. With reference to FIG. 2, FIG. 4, and FIG. 6, the first support plate 21 and the second support plate 22 move along with the end connection components 20a, so that when the first housing 10 and the second housing 30 are in an unfolded state, an intermediate state, and a closed state, the first support plate 21 and the second support plate 22 can provide strong support for the bending part 2002 of the flexible display 200 together with the main shaft assembly 1. In this way, the flexible display 200 is not easily damaged due to touching by an external force, reliability of the flexible display 200 is improved, and a service life of the flexible display 200 is long.

In some embodiments, as shown in FIG. 7 and FIG. 8, the support surface 11 of the main shaft assembly 1 includes a first arc surface region 111, a plane region 112, and a second arc surface region 113 that are sequentially arranged in a direction from the first support plate 21 to the second support plate 22. The direction from the first support plate 21 to the second support plate 22 is perpendicular to an extension direction of the main shaft assembly 1. In other words, the first arc surface region 111 is located between the first support plate 21 and the plane region 112, and the second arc surface region 113 is located between the plane region 112 and the second support plate 22.

In this embodiment, the plane region 112 of the support surface 11 of the main shaft assembly 1 can provide flat strong support for the flexible display 200 when the folding apparatus 100 is in the unfolded state, to improve press touch experience of the flexible display 200. The first arc surface region 111 and the second arc surface region 113 of the support surface 11 of the main shaft assembly 1 can respectively form a smooth transition with the first support plate 21 and the second support plate 22 when the folding apparatus 100 is in the intermediate state and the closed state. In this way, the main shaft assembly 1, the first support plate 21, and the second support plate 22 can jointly provide a smooth support surface for the bending part 2002 of the flexible display 200. Therefore, the rotation mechanism 20 has a good support effect for the flexible display 200.

In some other embodiments, the support surface 11 of the main shaft assembly 1 may alternatively have another shape. For example, the support surface 11 of the main shaft assembly 1 is in an arc shape. Alternatively, the support surface 11 of the main shaft assembly 1 is disposed in a semi-ellipse shape, so as to reduce a width of the folding apparatus 100 in the closed state. In this way, the folding apparatus 100 is easy to carry and place. A shape of the support surface 11 of the main shaft assembly 1 is not strictly limited in this embodiment of this application.

In some embodiments, as shown in FIG. 7, the first housing 10 has a first support surface 101, and the first support surface 101 is configured to support the flexible display 200. The second housing 30 has a second support surface 301, and the second support surface 301 is configured to support the flexible display 200. When the first housing 10 and the second housing 30 are unfolded relative to each other to the unfolded state, the first support surface 101 is flush with the second support surface 301, to well support the flexible display 200. In this way, the flexible display 200 is more flat, thereby improving user experience.

In some embodiments, as shown in FIG. 8, the two end connection components 20a may be of a mirror symmetric structure, and the symmetry mirror is perpendicular to a circumferential direction of the main shaft assembly 1. In this case, the rotation mechanism 20 has a simple overall structure and low processing costs. In addition, in a rotation process of the folding apparatus 100, stress between the two end connection components 20a and the main shaft assembly 1, the first housing 10, and the second housing 30 is uniform. This helps improve reliability of the folding apparatus 100. In this embodiment of this application, a structure of one end connection component 20a is mainly used for description.

In some other embodiments, structures of the two end connection components may alternatively be different. It may be understood that a structure of the rotation mechanism 20 may have a plurality of combination and deformation manners. This is not strictly limited in this embodiment of this application.

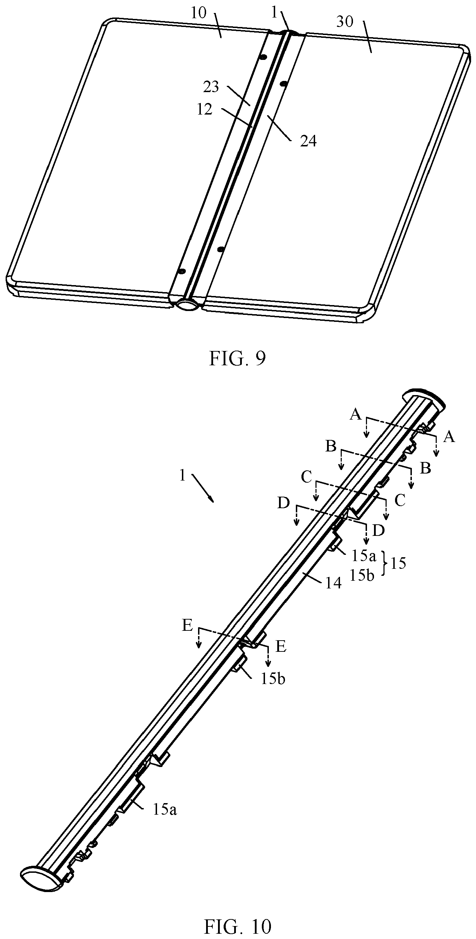

Refer to FIG. 8 and FIG. 9 together. FIG. 9 is a schematic diagram of a structure of the folding apparatus 100 shown in FIG. 2 from another angle. A field of view of the folding apparatus 100 in FIG. 9 is a field of view obtained after the field of view in FIG. 2 is flipped.

In some embodiments, the first shielding plate 23 is located on a side that is of the main shaft assembly 1 and that faces the first housing 10, and the first shielding plate 23 connects the two end connection components 20a. The second shielding plate 24 is located on a side that is of the main shaft assembly 1 and that faces the second housing 30, and the second shielding plate 24 connects the two end connection components 20a.

The main shaft assembly 1 has a shielding surface 12. When the first housing 10 and the second housing 30 are unfolded relative to each other to an unfolded state, the shielding surface 12 of the main shaft assembly 1 is exposed relative to the first shielding plate 23 and the second shielding plate 24. The first shielding plate 23 is located between the first housing 10 and the main shaft assembly 1, and can shield a gap between the first housing 10 and the main shaft assembly 1. The second shielding plate 24 is located between the second housing 30 and the main shaft assembly 1, and can shield a gap between the second housing 30 and the main shaft assembly 1. Therefore, the rotation mechanism 20 can shield, in the unfolded state, a gap between the first housing 10 and the second housing 30 by using the first shielding plate 23, the main shaft assembly 1, and the second shielding plate 24 together. This implements self-shielding, improves appearance integrity, and reduces a risk of external dust and foreign matters entering the rotation mechanism 20, to ensure reliability of the folding apparatus 100.

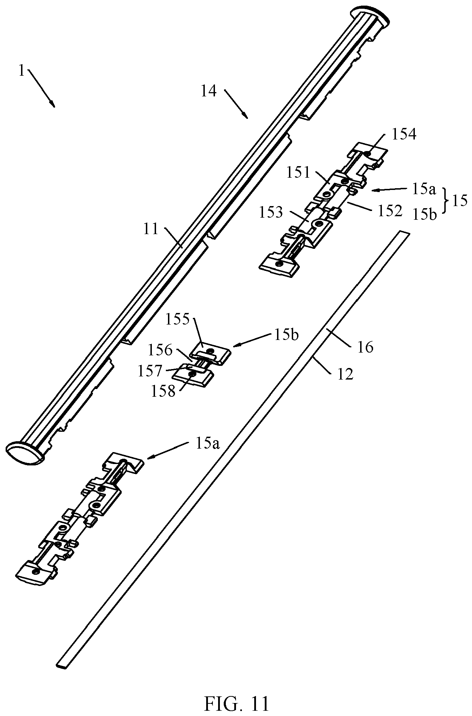

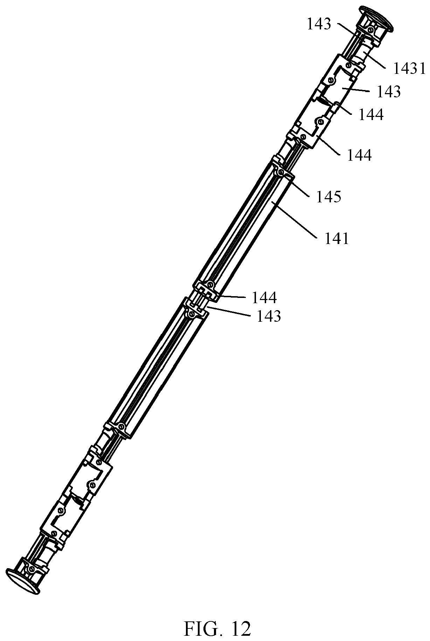

Refer to FIG. 10 to FIG. 12 together. FIG. 10 is a partial schematic exploded view of a partial structure of the folding apparatus 100 shown in FIG. 2. FIG. 11 is a schematic exploded view of a structure of the main shaft assembly 1 shown in FIG. 10. FIG. 12 is a schematic diagram of a structure of the main outer shaft 14 shown in FIG. 11 from another angle.

In some embodiments, the main shaft assembly 1 includes a main outer shaft 14, a main inner shaft 15, and a shielding plate 16. The main outer shaft 14 is fastened to one side of the main inner shaft 15, and the shielding plate 16 is fastened to the other side of the main inner shaft 15. The support surface 11 of the main shaft assembly 1 is formed on the main outer shaft 14, and is disposed away from the main inner shaft 15. The shielding surface 12 of the main shaft assembly 1 is formed on the shielding plate 16, and is disposed away from the main outer shaft 14. For example, the main inner shaft 15 may include a plurality of portions, and the plurality of portions are respectively fastened to the main outer shaft 14. In some other embodiments, the main inner shaft 15 may alternatively be an integrally formed structure. For example, the shielding plate 16 may be mutually fastened to the main inner shaft 15 in an assembly manner. In some other embodiments, the shielding plate 16 and the main inner shaft 15 may alternatively be integrally formed mechanical parts.

A plurality of three-dimensional space structures are disposed on both the main inner shaft 15 and the main outer shaft 14. These structures are designed, so that after the main inner shaft 15 and the main outer shaft 14 are assembled, a plurality of movement spaces can be formed together, and mechanical parts of the plurality of connection components (20a and 20b) are movably disposed in the plurality of movement spaces of the main shaft assembly 1. This implements a connection to the main shaft assembly 1. The main inner shaft 15 and the main outer shaft 14 are separately designed. This helps reduce a difficulty of making the main shaft assembly 1, and improve precision of making the main shaft assembly 1 and a product yield rate. A rotation center of the rotation mechanism 20 is integrally parallel to an axial direction of the main shaft assembly 1, and the main shaft assembly 1 extends in the axial direction thereof.

In some embodiments, as shown in FIG. 10 and FIG. 11, the main inner shaft 15 includes a first portion 15a, a second portion 15b, and a third portion 15c. The third portion 15c and the first portion 15a may be of a mirror symmetric structure, and the second portion 15b is located between the third portion 15c and the first portion 15a. The first portion 15a of the main inner shaft 15 includes a body 151 and a plurality of grooves 152, a plurality of bumps 153, and a plurality of fastening holes 154 that are formed on the body 151. The plurality of grooves 152 and the plurality of bumps 153 are mutually combined to form a plurality of three-dimensional space structures. The second portion 15b of the main inner shaft 15 includes a body 155 and two grooves 156, two bumps 157, and two fastening holes 158 that are formed on the body 155. The two grooves 156 and the two bumps 157 are mutually combined to form a three-dimensional space structure. In FIG. 11, reference numerals of some grooves 152, some bumps 153, some fastening holes 154, some grooves 156, some bumps 157, and some fastening holes 158 are schematically marked.

As shown in FIG. 12, the main outer shaft 14 includes a main outer shaft body 141, two end stoppers, a plurality of grooves 143, a plurality of bumps 144, and a plurality of fastening holes 145. The two end stoppers are respectively fastened at two ends of the main outer shaft body 141. The plurality of bumps 144 are formed on the main outer shaft body 141, and the plurality of grooves 143 and the plurality of fastening holes 145 are formed on the main outer shaft body 141 and/or the bumps 144. The plurality of grooves 143 and the plurality of bumps 144 are mutually combined to form a plurality of three-dimensional space structures. Reference numerals of some grooves 143, some bumps 144, and some fastening holes 145 are schematically marked in FIG. 12.

After the main outer shaft 14 and the main inner shaft 15 are mutually fastened, the main outer shaft body 141 and the main inner shaft body 151 are in contact with each other, the end stopper 142 of the main outer shaft 14 is exposed, and the plurality of fastening holes 145 of the main outer shaft 14 are aligned with the plurality of fastening holes (154, 158) of the main inner shaft 15. The main inner shaft 15 and the main outer shaft 14 are fastened by using a fastener (not shown in the figure). The fastener includes but is not limited to a screw, a bolt, a rivet, a pin, and the like. The plurality of three-dimensional space structures of the main outer shaft 14 and the plurality of three-dimensional space structures of the main inner shaft 15 jointly form a plurality of movement spaces of the main shaft assembly 1. For example, some of the plurality of movement spaces are the same in structure, and some of the plurality of movement spaces are different in structure. Movement spaces with different structures are used to cooperate with mechanical parts with different structures, so that a connection structure between the main shaft assembly 1 and the plurality of connection components (20a and 20b) is more flexible and diversified. The movement space having a same structure is used to cooperate with the mechanical part having a same structure. This helps reduce design difficulty and costs of the main shaft assembly 1 and the connection component.

In some embodiments, as shown in FIG. 12, limiting grooves 1431 are disposed on groove walls of some grooves 143 of the main outer shaft 14, to limit, in an axial direction of the main shaft assembly 1, a mechanical part disposed in a corresponding movement space, so as to improve reliability of a connection structure.

In some embodiments, as shown in FIG. 12, some bumps 144 of the main outer shaft 14 have a limiting function. These bumps 144 are located in the movement space of the main shaft assembly 1, and are configured to limit the mechanical part of the connection component, so as to prevent the mechanical part from accidentally detaching from the main shaft assembly 1. This improves reliability of connection and movement between the connection component and the main shaft assembly 1, so that reliability of the rotation mechanism 20 and the folding apparatus 100 is high. It may be understood that, the main shaft assembly 1 may also be provided with a bump for positioning or limiting on the main inner shaft 15.

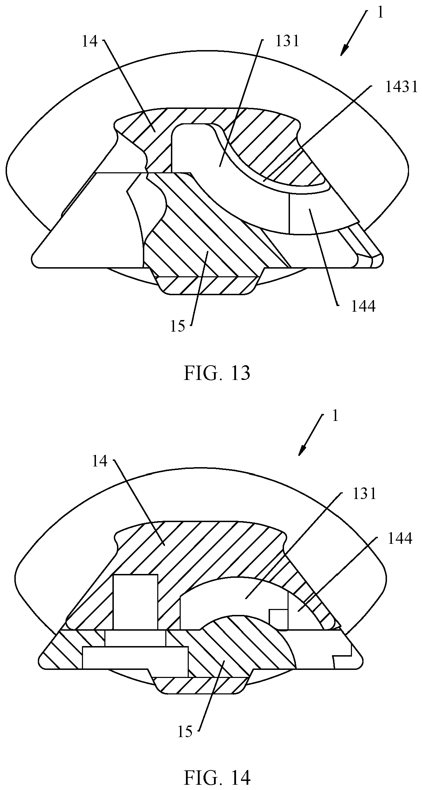

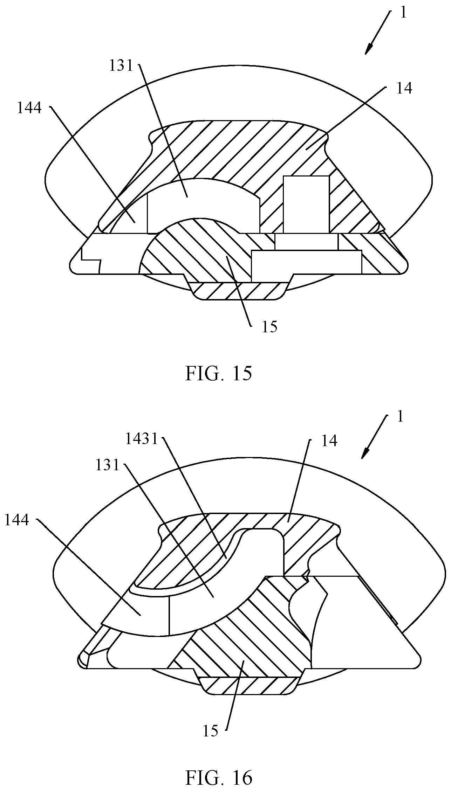

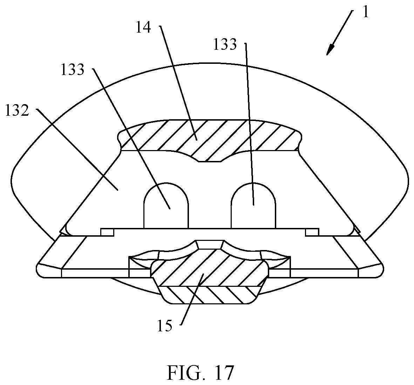

Refer to FIG. 13 to FIG. 17 together. FIG. 13 is a schematic diagram of a structure of the main shaft assembly 1 shown in FIG. 10 that is cut along a line A-A. FIG. 14 is a schematic diagram of a structure of the main shaft assembly 1 shown in FIG. 10 that is cut along a line B-B. FIG. 15 is a schematic diagram of a structure of the main shaft assembly 1 shown in FIG. 10 that is cut along a line C-C. FIG. 16 is a schematic diagram of a structure of the main shaft assembly 1 shown in FIG. 10 that is cut along a D-D line. FIG. 17 is a schematic diagram of a structure of the main shaft assembly 1 shown in FIG. 10 that is cut along a line E-E.

For example, in this embodiment, the main shaft assembly 1 forms a plurality of movement spaces, and the plurality of movement spaces are used to cooperate with different mechanical parts of the connection component.

As shown in FIG. 13, the main outer shaft 14 and the main inner shaft 15 jointly enclose an arc groove 131. A circle center of the arc groove 131 is close to the main outer shaft 14 and away from the main inner shaft 15, to form a movement space. In some embodiments, the movement space may further include a limiting groove 1431 connected to the arc groove 131, and the limiting groove 1431 is formed on the main outer shaft 14. In some embodiments, the main outer shaft 14 may further include a bump 144 having a limiting function, and the bump 144 extends into the arc groove 131, to limit the mechanical part disposed in the movement space.

As shown in FIG. 14, the main outer shaft 14 and the main inner shaft 15 jointly enclose an arc groove 131. A circle center of the arc groove 131 is close to the main inner shaft 15 and away from the main outer shaft 14, to form a movement space. In some embodiments, the main outer shaft 14 may further include a bump 144 having a limiting function, and the bump 144 extends into the arc groove 131, to limit the mechanical part disposed in the movement space.

As shown in FIG. 15, the main outer shaft 14 and the main inner shaft 15 jointly enclose an arc groove 131. A circle center of the arc groove 131 is close to the main inner shaft 15 and away from the main outer shaft 14, to form a movement space. In some embodiments, the main outer shaft 14 may further include a bump 144 having a limiting function, and the bump 144 extends into the arc groove 131, to limit the mechanical part disposed in the movement space. The movement space shown in FIG. 15 and the movement space shown in FIG. 14 are disposed in pairs.

As shown in FIG. 16, the main outer shaft 14 and the main inner shaft 15 jointly enclose an arc groove 131. A circle center of the arc groove 131 is close to the main outer shaft 14 and away from the main inner shaft 15, to form a movement space. In some embodiments, the movement space may further include a limiting groove 1431 connected to the arc groove 131, and the limiting groove 1431 is formed on the main outer shaft 14. In some embodiments, the main outer shaft 14 may further include a bump 144 having a limiting function, and the bump 144 extends into the arc groove 131, to limit the mechanical part disposed in the movement space. The movement space shown in FIG. 16 and the movement space shown in FIG. 13 are disposed in pairs.

As shown in FIG. 17, the main outer shaft 14 and the main inner shaft 15 jointly enclose an M-shaped groove 132. Two concave grooves 133 disposed at intervals are formed on a side wall of the M-shaped groove 132, and the M-shaped groove 132 and the two concave grooves 133 jointly form a movement space.

It may be understood that the main shaft assembly 1 in this embodiment of this application may alternatively have another structure. This is not strictly limited in this application.

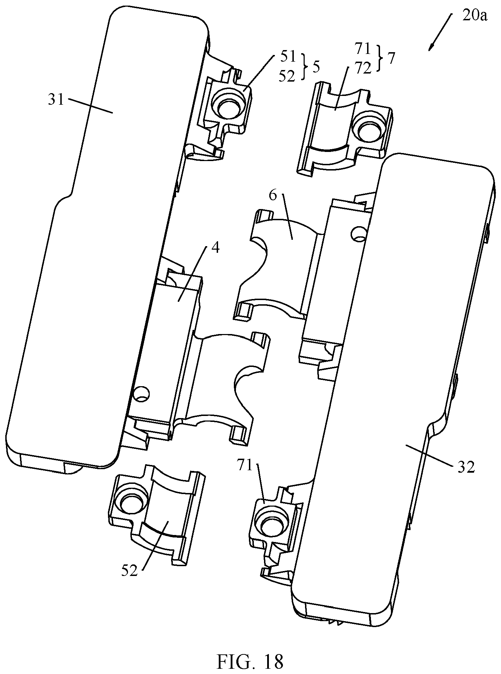

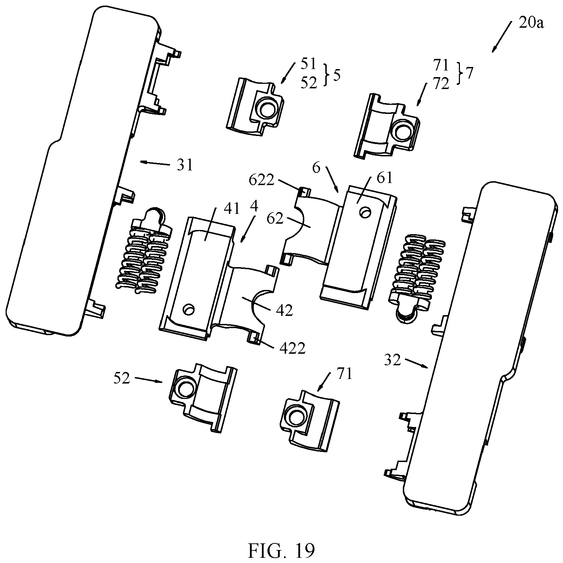

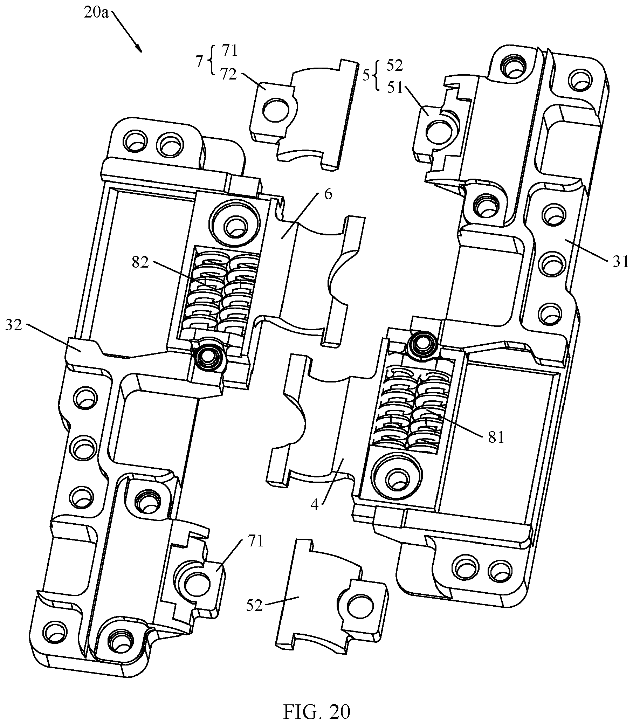

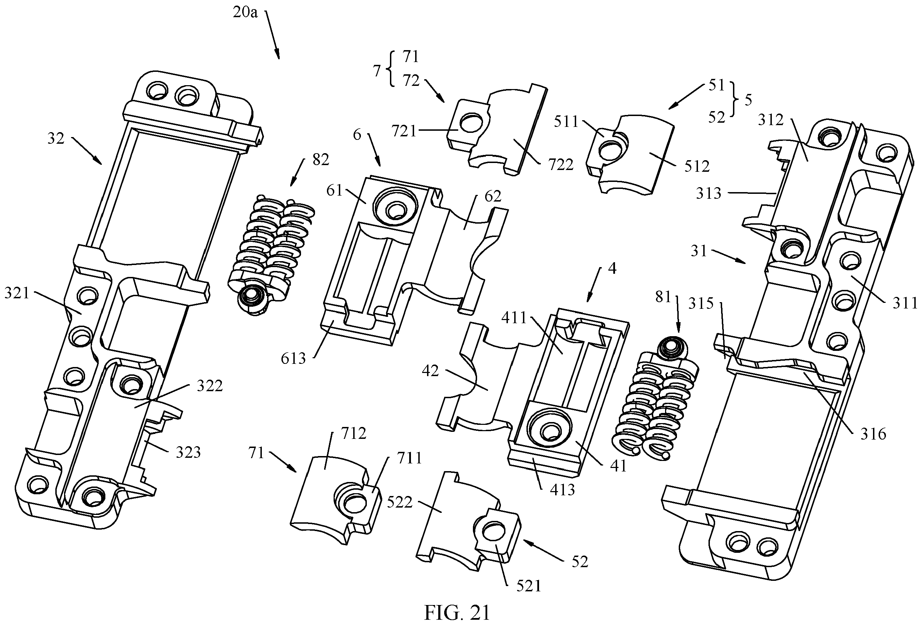

Refer to FIG. 18 to FIG. 21 together. FIG. 18 is a schematic diagram of a structure of the end connection component 20a shown in FIG. 10 from another angle. FIG. 19 is a schematic exploded view of a partial structure of the end connection component 20a shown in FIG. 18. FIG. 20 is a schematic diagram of a structure of the end connection component 20a shown in FIG. 10 from still another angle. FIG. 21 is a schematic exploded view of a partial structure of the end connection component 20a shown in FIG. 20. A field of view shown in FIG. 20 is flipped relative to a field of view shown in FIG. 18.

The end connection component 20a of the rotation mechanism 20 includes a first fastening bracket 31, a first transmission arm 4, a first rotation arm 5, a second fastening bracket 32, a second transmission arm 6, and a second rotation arm 7. The first rotation arm 5 includes a first rotation part 51 and a second rotation part 52, and the second rotation part 52 and the first rotation part 51 are two mechanical parts independent of each other. The second rotation arm 7 includes a third rotation part 71 and a fourth rotation part 72, and the fourth rotation part 72 and the third rotation part 71 are two mechanical parts independent of each other.

For example, the first fastening bracket 31 is fastened to the first housing 10. The first transmission arm 4 includes a sliding end 41 and a rotation end 42. The sliding end 41 of the first transmission arm 4 is slidably connected to the first fastening bracket 31, and the rotation end 42 of the first transmission arm 4 is rotatably connected to the main shaft assembly 1. The first rotation arm 5 is rotatably connected to the first fastening bracket 31 by using the first rotation part 51, and is rotatably connected to the main shaft assembly 1 by using the second rotation part 52. That is, one end of the first rotation arm 5 is rotatably connected to the first fastening bracket 31, and the other end is rotatably connected to the main shaft assembly 1.

The second fastening bracket 32 is fastened to the second housing 30. The second transmission arm 6 includes a sliding end 61 and a rotation end 62, the sliding end 61 of the second transmission arm 6 is slidably connected to the second fastening bracket 32, and the rotation end 62 of the second transmission arm 6 is rotatably connected to the main shaft assembly 1. The second rotation arm 7 is rotatably connected to the second fastening bracket 31 by using the third rotation part 71, and is rotatably connected to the main shaft assembly 1 by using the fourth rotation part 72. One end of the second rotation arm 7 is rotatably connected to the second fastening bracket 32, and the other end is rotatably connected to the main shaft assembly 1.

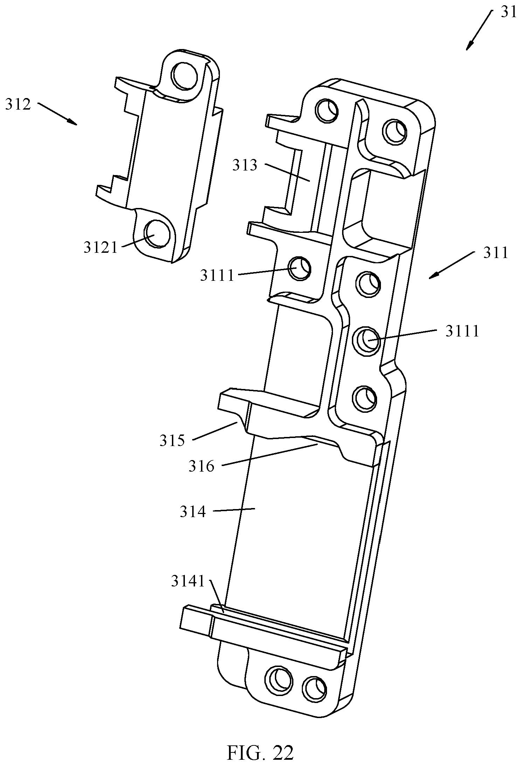

Refer to FIG. 21 and FIG. 22 together. FIG. 22 is a schematic diagram of an exploded structure of a first fastening bracket 31 of the end connection component 20a shown in FIG. 21.

In some embodiments, the first fastening bracket 31 includes a first fastening base 311 and a first snapping part 312. The first snapping part 312 is fastened to the first fastening base 311, and the first snapping part 312 and the first fastening base 311 jointly enclose a first arc groove 313. For example, the first snapping part 312 may be mutually fastened to the first fastening base 311 by using a fastener.

In this embodiment, a processing manner in which the first fastening base 311 and the first snapping part 312 are separately manufactured, and then the first fastening base 311 and the first snapping part 312 are assembled into the first fastening bracket 31 helps reduce a processing difficulty of the first fastening bracket 31, and improve a product yield rate of the first fastening bracket 31. In some other embodiments, the first fastening bracket 31 may alternatively be an integrally formed structure.

In some embodiments, as shown in FIG. 22, the first fastening base 311 of the first fastening bracket 31 may further have a first sliding slot 314. For example, a side wall of the first sliding slot 314 may have concave guide space 3141. The first fastening base 311 may further have a first concave region 315 and a second concave region 316, and both the first concave region 315 and the second concave region 316 communicate with the first sliding slot 314. The first concave region 315 is located on a side that is of the second concave region 316 and that is close to the second fastening bracket 32. Refer to FIG. 8, the first concave region 315 is located between the main shaft assembly 1 and the second concave region 316.

As shown in FIG. 22, in some embodiments, the first fastening base 311 of the first fastening bracket 31 has a plurality of fastening holes 3111. The rotation mechanism 20 may fasten the first fastening bracket 31 to the first housing 10 by using a plurality of fasteners. The first snapping part 312 has a fastening hole 3121, configured to align with some fastening holes 3111 of the first fastening base 311, so as to mutually lock and fasten the first snapping part 312 and the first fastening base 311 by using a fastener.

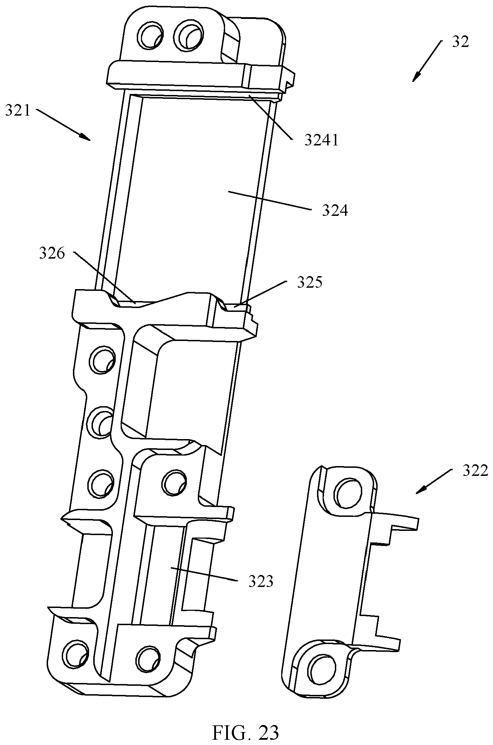

Refer to FIG. 21 and FIG. 23 together. FIG. 23 is a schematic diagram of an exploded structure of a second fastening bracket 32 of the end connection component 20a shown in FIG. 21.

In some embodiments, the second fastening bracket 32 includes a second fastening base 321 and a second snapping part 322. The second snapping part 322 is fastened to the second fastening base 321, and the second snapping part 322 and the second fastening base 321 jointly enclose a second arc groove 323. The second fastening base 321 of the second fastening bracket 32 may further have a second sliding slot 324. For example, a side wall of the second sliding slot 324 may have concave guide space 3241. The second fastening base 321 may further have a third concave region 325 and a fourth concave region 326, and both the third concave region 325 and the fourth concave region 326 communicate with the second sliding slot 324. The third concave region 325 is located on a side that is of the fourth concave region 326 and that is close to the first fastening bracket 31. Refer to FIG. 8, the third concave region 325 is located between the main shaft assembly 1 and the fourth concave region 326.

As shown in FIG. 19, in some embodiments, the rotation end 42 of the first transmission arm 4 is in an arc shape. With reference to FIG. 15 and FIG. 19, the rotation end 42 of the first transmission arm 4 may be disposed in one arc groove 131 of the main shaft assembly 1, so that the first transmission arm 4 is rotatably connected to the main shaft assembly 1. In this case, a rotation center in which the first transmission arm 4 rotates relative to the main shaft assembly 1 is close to the main inner shaft 15 and is away from the main outer shaft 14. In this embodiment, the first transmission arm 4 is connected to the main shaft assembly 1 by using a virtual shaft. A rotatable connection structure is simple, and occupies small space. This helps reduce a thickness of the rotation mechanism 20, so that the folding apparatus 100 and the electronic device 1000 are lighter and thinner. In some other embodiments, the first transmission arm 4 and the main shaft assembly 1 may alternatively be connected by using a real shaft. This is not strictly limited in this embodiment of this application. For example, the rotation end 42 of the first transmission arm 4 may include a limiting bump 422, and the limiting bump 422 is formed at an end position of the rotation end 42. The limiting bump 422 is configured to cooperate with a bump 144 having a limiting function of the main shaft assembly 1, to prevent the first transmission arm 4 from accidentally detaching from the main shaft assembly 1.

As shown in FIG. 21, in some embodiments, the sliding end 41 of the first transmission arm 4 includes a first flange 413 located on a peripheral side. With reference to FIG. 20 to FIG. 22, the sliding end 41 of the first transmission arm 4 is disposed in the first sliding slot 314 of the first fastening bracket 31, and the first flange 413 is disposed in the guide space 3141 of the first sliding slot 314. In this embodiment, the guide space 3141 of the first sliding slot 314 cooperates with the first flange 413 of the first transmission arm 4, so that the sliding end 41 of the first transmission arm 4 can be guided in a sliding direction of the first sliding slot 314. In this way, a relative sliding action between the first transmission arm 4 and the first fastening bracket 31 is easy to implement with high control precision.

As shown in FIG. 20 and FIG. 21, in some embodiments, the rotation mechanism 20 further includes a first stopper 81, and the first stopper 81 is disposed on the sliding end 41 of the first transmission arm 4. The first stopper 81 is clamped into the first fastening bracket 31. In this embodiment, because the first stopper 81 is clamped into the first fastening bracket 31, a relative position relationship between the first transmission arm 4 and the first fastening bracket 31 can be limited, so that the first transmission arm 4 and the first fastening bracket 31 can maintain a preset relative position relationship without a large external force, the rotation mechanism 20 can stay at a preset angle, and a rotation mechanism can maintain an unfolded state or a closed state. This improves user experience of the folding apparatus 100 and the electronic device 1000. In some embodiments, with reference to FIG. 20 and FIG. 22, when the first housing 10 and the second housing 30 are unfolded relative to each other to an unfolded state, the first stopper 81 is partially clamped into the first concave region 315. When the first housing 10 and the second housing 30 are folded relative to each other to a closed state, the first stopper 81 is partially clamped into the second concave region 316.

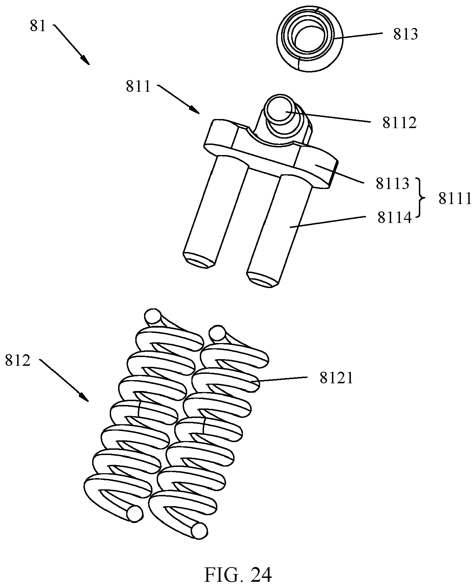

FIG. 24 is a schematic diagram of an exploded structure of a first stopper 81 of the end connection component 20a shown in FIG. 21.

In some embodiments, the first stopper 81 includes a first bracket 811 and a first elastic part 812. The first bracket 811 is of a rigid structure, and is not prone to deformation under an external force. The first bracket 811 includes a control portion 8111 and an abutment portion 8112. The abutment portion 8112 is configured to abut against an external mechanical part, to limit the mechanical part. The control portion 8111 is configured to control a position of the abutment portion 8112. For example, the control portion 8111 includes a substrate 8113 and a plurality of guide posts 8114, and the plurality of guide posts 8114 are fastened to one side of the substrate 8113 at intervals. The abutment portion 8112 is fastened to the other side of the substrate 8113. The first elastic part 812 is of an elastic structure, and is prone to deformation under an external force. One end of the first elastic part 812 is disposed on the control portion 8111 of the first bracket 811. For example, the first elastic part 812 may include a plurality of springs 8121, and the plurality of springs 8121 sleeve the plurality of guide posts 8114 in a one-to-one correspondence.

With reference to FIG. 20, FIG. 21, and FIG. 24, the sliding end 41 of the first transmission arm 4 has a first accommodating groove 411, and the first stopper 81 is disposed in the first accommodating groove 411. The other end (that is, an end away from the control portion 8111) of the first elastic part 812 abuts against a groove wall of the first accommodating groove 411, the first elastic part 812 is in a compressed state, and the abutment portion 8112 of the first bracket 811 is clamped into the first fastening bracket 31. The first elastic part 812 of the first stopper 81 can deform under an external force, so that the first stopper 81 can smoothly move between the first concave region 315 and the second concave region 316 relative to the first fastening bracket 31. This improves limiting reliability between the first stopper 81 and the sliding end 41 of the first transmission arm 4.

In some embodiments, the first stopper 81 may further include a first buffer part 813, and the first buffer part 813 is disposed on the abutment portion 8112 of the first bracket 811. The first buffer part 813 may be made of a material (for example, rubber) with small stiffness, so that when being subjected to an external force, the first buffer part 813 can absorb an impact force through deformation, thereby implementing buffering. The first stopper 81 can buffer stress between the abutment portion 8112 and the mechanical part by disposing the first buffer part 813. Therefore, reliability of a limiting structure is improved. Because the first buffer part 813 sleeves the abutment portion 8112 of the first bracket 811, the first stopper 81 abuts against the first fastening bracket 31 by using the first buffer part 813 having a buffer function. This helps reduce a risk of wear between the first bracket 811 and the first fastening bracket 31 in a long-time relative movement process, improve limiting reliability of the first stopper 81, and improve reliability of the rotation mechanism 20.

As shown in FIG. 19, in some embodiments, the rotation end 62 of the second transmission arm 6 is in an arc shape. With reference to FIG. 14 and FIG. 19, the rotation end 62 of the second transmission arm 6 may be disposed in one arc groove 131 of the main shaft assembly 1, so that the second transmission arm 6 is rotatably connected to the main shaft assembly 1. In this case, a rotation center in which the second transmission arm 6 rotates relative to the main shaft assembly 1 is close to the main inner shaft 15 and is away from the main outer shaft 14. In this embodiment, the second transmission arm 6 is connected to the main shaft assembly 1 by using a virtual shaft. A rotatable connection structure is simple, and occupies small space. This helps reduce a thickness of the rotation mechanism 20, so that the folding apparatus 100 and the electronic device 1000 are lighter and thinner. In some other embodiments, the second transmission arm 6 and the main shaft assembly 1 may alternatively be connected by using a real shaft. This is not strictly limited in this embodiment of this application. For example, the rotation end 62 of the second transmission arm 6 may include a limiting bump 622, and the limiting bump 622 is formed at an end position of the rotation end 62. The limiting bump 622 is configured to cooperate with a bump having a limiting function of the main shaft assembly 1, to prevent the second transmission arm 6 from accidentally detaching from the main shaft assembly 1.

As shown in FIG. 21, in some embodiments, the sliding end 61 of the second transmission arm 6 includes a second flange 613 located on a peripheral side. With reference to FIG. 20, FIG. 21, and FIG. 23, the sliding end 61 of the second transmission arm 6 is disposed in the second sliding slot 324 of the second fastening bracket 32, and the second flange 613 is disposed in the guide space 3241 of the second sliding slot 324. In this embodiment, the guide space 3241 of the second sliding slot 324 cooperates with the second flange 613 of the second transmission arm 6, so that the sliding end 61 of the second transmission arm 6 can be guided in a sliding direction of the first sliding slot 314. In this way, a relative sliding action between the first transmission arm 4 and the first fastening bracket 31 is easy to implement, and high in control precision.

As shown in FIG. 20 and FIG. 21, in some embodiments, the rotation mechanism 20 further includes a second stopper 82, and the second stopper 82 is disposed on the sliding end 61 of the second transmission arm 6. The second stopper 82 is clamped into the second fastening bracket 32. In this embodiment, because the second stopper 82 is clamped into the second fastening bracket 32, a relative position relationship between the second transmission arm 6 and the second fastening bracket 32 can be limited, so that the second transmission arm 6 and the second fastening bracket 32 can maintain a preset relative position relationship without a large external force. The rotation mechanism 20 can stay at a preset angle, and a rotation mechanism can maintain an unfolded state or a closed state, to improve user experience of the folding apparatus 100 and the electronic device 1000. In some embodiments, with reference to FIG. 20 and FIG. 23, when the first housing 10 and the second housing 30 are unfolded relative to each other to an unfolded state, the second stopper 82 is partially clamped into the third concave region 325. When the first housing 10 and the second housing 30 are folded relative to each other to a closed state, the second stopper 82 is partially clamped into the fourth concave region 326.

For example, a structure of the second stopper 82 may be the same as a structure of the first stopper 81, to simplify material types of the rotation mechanism 20, and reduce design difficulty and costs of the rotation mechanism 20. A structure of the second stopper 82 is not described in detail in this embodiment of this application.

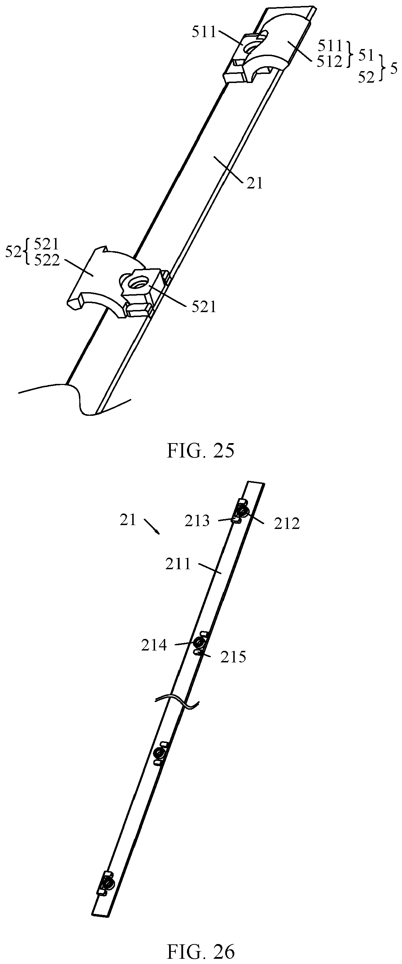

Refer to FIG. 21, FIG. 25, and FIG. 26 together. FIG. 25 is a schematic diagram of a partial structure of the rotation mechanism 20 shown in FIG. 7. FIG. 26 is a schematic diagram of a structure of the first support plate 21 shown in FIG. 25. FIG. 25 shows structures of the first support plate 21, the first rotation part 51, and the second rotation part 52 of the rotation mechanism 20.

As shown in FIG. 21, the first rotation part 51 of the first rotation arm 5 includes a fixed portion 511 and a rotation portion 512. The rotation portion 512 of the first rotation part 51 is fastened to the fixed portion 511 of the first rotation part 51, and the first rotation part 51 may be an integrally formed mechanical part. The second rotation part 52 of the first rotation arm 5 includes a fixed portion 521 and a rotation portion 522. The rotation portion 522 of the second rotation part 52 is fastened to the fixed portion 521 of the second rotation part 52, and the second rotation part 52 may be an integrally formed mechanical part.

As shown in FIG. 25, the fixed portion 511 of the first rotation part 51 is fastened to the first support plate 21. The fixed portion 521 of the second rotation part 52 is fastened to the first support plate 21. The rotation portion 512 of the first rotation part 51 and the rotation portion 522 of the second rotation part 52 respectively extend towards two sides of the first support plate 21. In other words, the first support plate 21 is fixedly connected to the first rotation arm 5.

As shown in FIG. 26, the first support plate 21 includes a plate body 211 and a first fastening block 212, a first positioning block 213, a second fastening block 214, and a second positioning block 215 that are fastened to the plate body 211. The first support plate 21 may be an integrally formed mechanical part. As shown in FIG. 25 and FIG. 26, the fixed portion 511 of the first rotation part 51 is fastened to the first fastening block 212, and abuts against the first positioning block 213. The fixed portion 521 of the second rotation part 52 is fastened to the second fastening block 214, and abuts against the second positioning block 215. For example, the fixed portion 511 of the first rotation part 51 may sleeve on the outside of the first fastening block 212, and fastening holes are disposed in both the fixed portion 511 and the first fastening block 212, so as to mutually lock and fasten the fixed portion 511 and the first fastening block 212 by using a fastener. The fixed portion 521 of the second rotation part 52 may sleeve on the outside of the second fastening block 214, and fastening holes are disposed in both the fixed portion 521 and the second fastening block 214, so as to mutually lock and fasten the fixed portion 521 and the second fastening block 214 by using a fastener. In some other embodiments, the fixed portion 511 of the first rotation part 51 and the fixed portion 521 of the second rotation part 52 may also be fastened to the first support plate 21 by bonding or the like.

In this embodiment, because the fixed portion 511 of the first rotation part 51 is fastened to the first support plate 21, and the fixed portion 521 of the second rotation part 52 is also fastened to the first support plate 21, the second rotation part 52 and the first rotation part 51 are fastened to each other, and the second rotation part 52 and the first rotation part 51 are equivalent to a mechanical part that can transmit force and movement.

Refer to both FIG. 20 and FIG. 21. An end that is of the first rotation arm 5 and that is rotatably connected to the first fastening bracket 31 is formed on the rotation portion 512 of the first rotation part 51, and the rotation portion 512 of the first rotation part 51 is rotatably connected to the first fastening bracket 31. For example, the rotation portion 512 of the first rotation part 51 is in an arc shape, and the rotation portion 512 of the first rotation part 51 is disposed in the first arc groove 313 of the first fastening bracket 31. In other words, the end that is of the first rotation arm 5 and that is rotatably connected to the first fastening bracket 31 is in an arc shape and is disposed in the first arc groove 313. In this embodiment, the first rotation arm 5 is connected to the first fastening bracket 31 by using a virtual shaft. A rotatable connection structure is simple, and occupies small space. This helps reduce a thickness of the rotation mechanism 20, so that the folding apparatus 100 and the electronic device 1000 are lighter and thinner. In some other embodiments, the first rotation arm 5 and the first fastening bracket 31 may alternatively be connected by using a real shaft. This is not strictly limited in this embodiment of this application.

An end that is of the first rotation arm 5 and that is rotatably connected to the main shaft assembly 1 is formed on the rotation portion 522 of the second rotation part 52, and the rotation portion 522 of the second rotation part 52 is rotatably connected to the main shaft assembly 1. For example, the rotation portion 522 of the second rotation part 52 is in an arc shape, and the rotation portion 522 of the second rotation part 52 can be disposed in the movement space of the main shaft assembly 1 (as shown in FIG. 16), so as to be rotatably connected to the main shaft assembly 1. That is, the end that is of the first rotation arm 5 and that is rotatably connected to the main shaft assembly 1 is in an arc shape and is disposed in one arc groove 131 of the main shaft assembly 1. In this case, a rotation center in which the first rotation arm 5 rotates relative to the main shaft assembly 1 is close to the main outer shaft 14 and away from the main inner shaft 15.

In this embodiment, the first rotation arm 5 is connected to the main shaft assembly 1 by using a virtual shaft. A rotatable connection structure is simple, and occupies small space. This helps reduce a thickness of the rotation mechanism 20, so that the folding apparatus 100 and the electronic device 1000 are lighter and thinner. In some other embodiments, the first rotation arm 5 and the main shaft assembly 1 may alternatively be connected by using a real shaft. This is not strictly limited in this embodiment of this application.

Because the first rotation part 51 is rotatably connected to the first fastening bracket 31 and is fixedly connected to the first support plate 21, and the second rotation part 52 is rotatably connected to the main shaft assembly 1 and is fixedly connected to the first support plate 21, the first rotation arm 5 including the first rotation part 51 and the second rotation part 52 can transfer force and movement between the main shaft assembly 1 and the first fastening bracket 31. In addition, because the first transmission arm 4 is also configured to transfer force and movement between the main shaft assembly 1 and the first fastening bracket 31, the rotation mechanism 20 controls relative movement between the first fastening bracket 31 and the main shaft assembly 1 by using both the first transmission arm 4 and the first rotation arm 5.

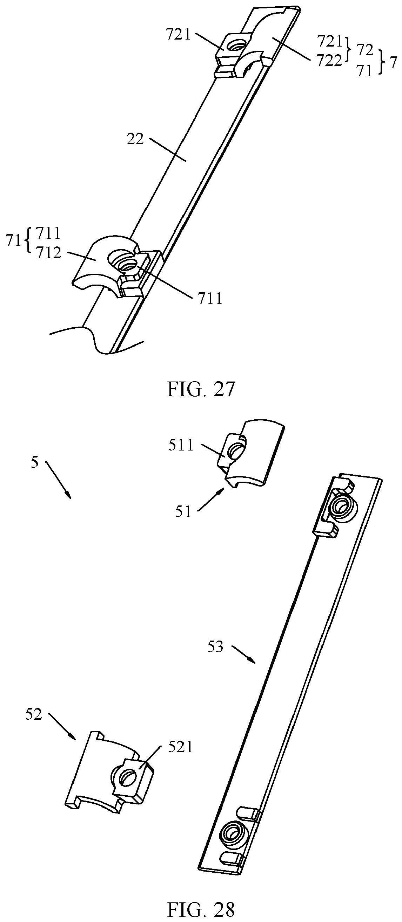

Refer to FIG. 21 and FIG. 27 together. FIG. 27 is a schematic diagram of another partial structure of the rotation mechanism 20 shown in FIG. 7. FIG. 27 shows structures of the second support plate 22, the third rotation part 71, and the fourth rotation part 72 of the rotation mechanism 20.

As shown in FIG. 21, the third rotation part 71 of the second rotation arm 7 includes a fixed portion 711 and a rotation portion 712. The rotation portion 712 of the third rotation part 71 is fastened to the fixed portion 711 of the third rotation part 71, and the third rotation part 71 may be an integrally formed mechanical part. The fourth rotation part 72 of the second rotation arm 7 includes a fixed portion 721 and a rotation portion 722. The rotation portion 722 of the fourth rotation part 72 is fastened to the fixed portion 721 of the fourth rotation part 72, and the fourth rotation part 72 may be an integrally formed mechanical part.

As shown in FIG. 27, the fixed portion 711 of the third rotation part 71 is fastened to the second support plate 22. The fixed portion 721 of the fourth rotation part 72 is fastened to the second support plate 22. The rotation portion 712 of the third rotation part 71 and the rotation portion 722 of the fourth rotation part 72 respectively extend to two sides of the second support plate 22. In other words, the second support plate 22 is fixedly connected to the second rotation arm 7. A structure of the second support plate 22 may be similar to a structure of the first support plate 21. A fastening structure of the third rotation part 71 and the fourth rotation part 72 to the second support plate 22 may also be similar to a fastening structure of the first rotation part 51 and the second rotation part 52 to the first support plate 21. Details are not described in this embodiment of this application.

In this embodiment, because the fixed portion 711 of the third rotation part 71 is fastened to the second support plate 22, and the fixed portion 721 of the fourth rotation part 72 is also fastened to the second support plate 22, the fourth rotation part 72 and the third rotation part 71 are fastened to each other, and the fourth rotation part 72 and the third rotation part 71 are jointly equivalent to a mechanical part that can transfer force and movement.

Refer to both FIG. 20 and FIG. 21. An end that is of the second rotation arm 7 and that is rotatably connected to the second fastening bracket 32 is formed on the rotation portion 712 of the third rotation part 71, and the rotation portion 712 of the third rotation part 71 is rotatably connected to the second fastening bracket 32. For example, the rotation portion 712 of the third rotation part 71 is in an arc shape, and the rotation portion 712 of the third rotation part 71 is disposed in the second arc groove 323 of the second fastening bracket 32. In other words, the end that is of the second rotation arm 7 and that is rotatably connected to the second fastening bracket 32 is in an arc shape and is disposed in the second arc groove 323.

In this embodiment, the second rotation arm 7 is connected to the second fastening bracket 32 by using a virtual shaft. A rotatable connection structure is simple, and occupies small space. This helps reduce a thickness of the rotation mechanism 20, so that the folding apparatus 100 and the electronic device 1000 are lighter and thinner. In some other embodiments, the second rotation arm 7 and the second fastening bracket 32 may alternatively be connected by using a real shaft. This is not strictly limited in this embodiment of this application.

An end that is of the second rotation arm 7 and that is rotatably connected to the main shaft assembly 1 is formed on the rotation portion 722 of the fourth rotation part 72, and the rotation portion 722 of the fourth rotation part 72 is rotatably connected to the main shaft assembly 1. For example, the rotation portion 722 of the fourth rotation part 72 is in an arc shape, and the rotation portion 722 of the fourth rotation part 72 can be disposed in the movement space of the main shaft assembly 1 (as shown in FIG. 13), so as to be rotatably connected to the main shaft assembly 1. That is, the end that is of the second rotation arm 7 and that is rotatably connected to the main shaft assembly 1 is in an arc shape and is disposed in one arc groove 131 of the main shaft assembly 1. In this case, a rotation center in which the second rotation arm 7 rotates relative to the main shaft assembly 1 is close to the main outer shaft 14 and away from the main inner shaft 15.

In this embodiment, the second rotation arm 7 is connected to the main shaft assembly 1 by using a virtual shaft. A rotatable connection structure is simple, and occupies small space. This helps reduce a thickness of the rotation mechanism 20, so that the folding apparatus 100 and the electronic device 1000 are lighter and thinner. In some other embodiments, the second rotation arm 7 and the main shaft assembly 1 may alternatively be connected by using a real shaft. This is not strictly limited in this embodiment of this application.

Because the third rotation part 71 is rotatably connected to the first fastening bracket 31 and is fixedly connected to the second support plate 22, and the fourth rotation part 72 is rotatably connected to the main shaft assembly 1 and is fixedly connected to the second support plate 22, the second rotation arm 7 including the third rotation part 71 and the fourth rotation part 72 can transfer force and movement between the main shaft assembly 1 and the second fastening bracket 32. In addition, because the second transmission arm 6 is also configured to transfer force and movement between the main shaft assembly 1 and the second fastening bracket 32, the rotation mechanism 20 controls relative movement between the second fastening bracket 32 and the main shaft assembly 1 by using both the second transmission arm 6 and the second rotation arm 7.

In this embodiment, because the first support plate 21 and the first rotation arm 5 are assembled into one part, and the second support plate 22 and the second rotation arm 7 are assembled into one part, the first rotation arm 5 can directly control a movement track of the first support plate 21, and the second rotation arm 7 can directly control a movement track of the second support plate 22. In this case, a movement process of the first support plate 21 and the second support plate 22 is high in control precision with a small hysteresis error, and therefore, the rotation mechanism 20 can meet a support requirement of the flexible display 200.

It may be understood that, in some other embodiments, the first rotation arm 5 and the second rotation arm 7 may have another implementation.

FIG. 28 is a schematic diagram of a structure of the first rotation arm 5 shown in FIG. 21 in some other embodiments.

For example, the first rotation arm 5 may further include a first fastening part 53. That is, the first rotation arm 5 includes the first rotation part 51, the second rotation part 52, and the first fastening part 53. The fixed portion 511 of the first rotation part 51 is fastened to the first fastening part 53, and the fixed portion 521 of the second rotation part 52 is fastened to the first fastening part 53. For a fastening structure of the fixed portion 511 of the first rotation part 51 to the first fastening part 53, refer to the fastening structure of the fixed portion 511 of the first rotation part 51 to the first support plate 21. For a fastening structure of the fixed portion 521 of the second rotation part 52 to the first fastening part 53, refer to the fastening structure of the fixed portion 521 of the second rotation part 52 to the first support plate 21. The first fastening part 53 is fixedly connected to the first support plate 21. The first fastening part 53 and the first support plate 21 may be fastened in a manner of bonding, fastener connection, or the like.

A plurality of mechanical parts of the first rotation arm 5 may be first assembled to form a modular structure, and then assembled with the first support plate 21. This helps improve assembly precision. In addition, for structures of the first fastening bracket 31 and the main shaft assembly 1 that cooperate with the first fastening part 53, refer to the foregoing embodiments.

The second rotation arm 7 further includes a second fastening part. That is, the second rotation arm 7 includes the third rotation part 71, the fourth rotation part 72, and the second fastening part. The fixed portion 711 of the third rotation part 71 is fixedly connected to the second fastening part, the fixed portion 721 of the fourth rotation part 72 is fixedly connected to the second fastening part, and the second fastening part is fixedly connected to the second support plate 22. Other details of the second rotation arm 7 are not described in this embodiment of this application.

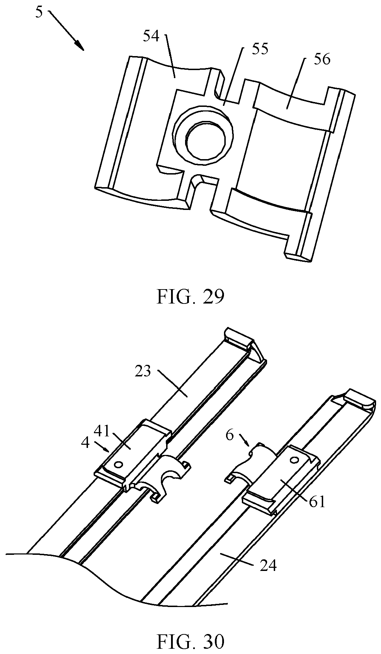

FIG. 29 is a schematic diagram of a structure of the first rotation arm 5 shown in FIG. 21 in still some other embodiments.

For example, the first rotation arm 5 is an integrally formed mechanical part. The first rotation arm 5 includes a first rotation portion 54, a fixed portion 55, and a second rotation portion 56 that are sequentially arranged, and the first rotation portion 54 and the second rotation portion 56 extend in different directions. An end that is of the first rotation arm 5 and that is rotatably connected to the first fastening bracket 31 is formed on the first rotation portion 54 of the first rotation arm 5, an end that is of the first rotation arm 5 and that is rotatably connected to the main shaft assembly 1 is formed on the second rotation portion 56 of the first rotation arm 5, and the first support plate 21 is fastened to the fixed portion 55 of the first rotation arm 5. The first rotation portion 54 is rotatably connected to the first fastening bracket 31, and the second rotation portion 56 is rotatably connected to the main shaft assembly 1. For a structure of the first rotation portion 54, refer to the structure of the rotation portion 512 of the first rotation part 51 in the foregoing embodiment. For a structure of the second rotation portion 56, refer to the structure of the rotation portion 522 of the second rotation part 52 in the foregoing embodiment. The fixed portion 55 of the first rotation arm 5 and the first support plate 21 may be connected by using a fastener, bonding, or the like.

The integrally formed first rotation arm 5 can simplify an assembly process of the rotation mechanism 20. Structures of the first fastening bracket 31 and the main shaft assembly 1 that cooperate with the first rotation arm 5 are adaptively adjusted, including but not limited to a position, a shape, and the like of a groove structure. A structure of the second rotation arm 7 may be disposed with reference to a structure of the first rotation arm 5.

In some embodiments, the second rotation arm 7 includes a first rotation portion, a fixed portion, and a second rotation portion that are sequentially arranged, and the first rotation portion and the second rotation portion extend in different directions. An end that is of the second rotation arm 7 and that is rotatably connected to the second fastening bracket 32 is formed on the first rotation portion of the second rotation arm 7, an end that is of the second rotation arm 7 and that is rotatably connected to the main shaft assembly 1 is formed on the second rotation portion of the second rotation arm 7, and the second support plate 22 is fastened to the fixed portion of the second rotation arm 7. Other details of the second rotation arm 7 are not described in this embodiment of this application.

FIG. 30 is a schematic diagram of still another partial structure of the rotation mechanism 20 shown in FIG. 7. FIG. 30 shows structures of the first shielding plate 23, the second shielding plate 24, the first transmission arm 4, and the second transmission arm 6 of the rotation mechanism 20.

In some embodiments, the first shielding plate 23 is fixedly connected to the sliding end 41 of the first transmission arm 4, and the second shielding plate 24 is fixedly connected to the sliding end 61 of the second transmission arm 6. In this case, because the first shielding plate 23 and the first transmission arm 4 are assembled into one part, and the second shielding plate 24 and the second transmission arm 6 are assembled into one part, the first transmission arm 4 can directly control a movement track of the first shielding plate 23, and the second transmission arm 6 can directly control a movement track of the second shielding plate 24. In this case, a movement process of the first shielding plate 23 and the second shielding plate 24 is high in control precision with a small hysteresis error, so that the first shielding plate 23 and the second shielding plate 24 accurately extend or retract in a rotation process of the folding apparatus 100, to meet a self-shielding requirement of the flexible display 200.

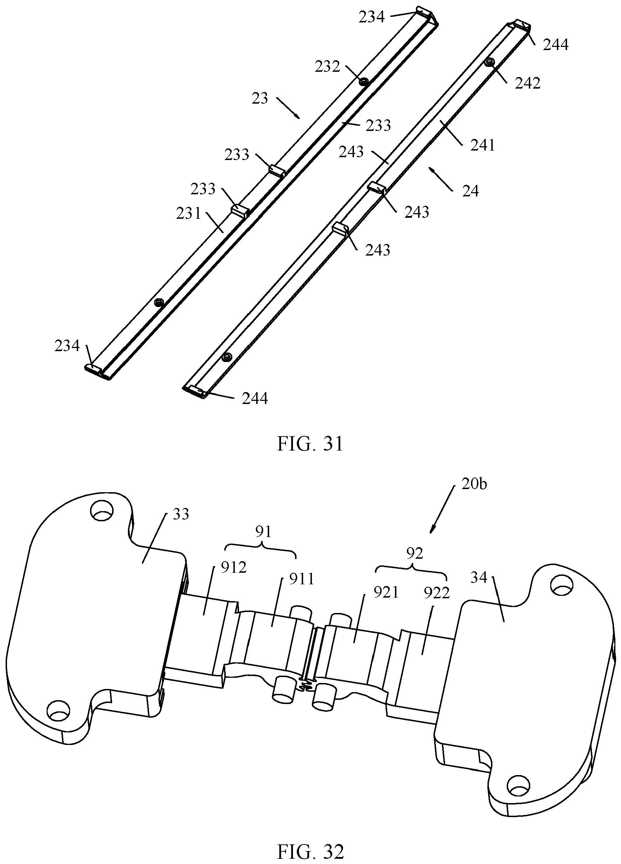

FIG. 31 is a schematic diagram of a structure of the first shielding plate 23 and a structure of the second shielding plate 24 shown in FIG. 7.

In some embodiments, the first shielding plate 23 includes a plate body 231, a first fastening block 232 fastened to the plate body 231, and a first limiting groove 233 formed on the plate body 231. The second shielding plate 24 includes a plate body 241, a second fastening block 242 fastened to the plate body 241, and a second limiting groove 243 formed on the plate body 241.

As shown in FIG. 30 and FIG. 31, the sliding end 41 of the first transmission arm 4 is fixedly connected to the first fastening block 232. Fastening holes may be disposed at both the sliding end 41 of the first transmission arm 4 and the first fastening block 232, so as to lock and fasten the sliding end 41 and the first fastening block 232 by using a fastener. The sliding end 41 of the first transmission arm 4 abuts against the plate body 231 of the first shielding plate 23, and partially extends into the first limiting groove 233, to well mutually limit the first transmission arm 4 and the first shielding plate 23, so that stability of a connection structure is good. The sliding end 61 of the second transmission arm 6 is fixedly connected to the second fastening block 242. Fastening holes may be disposed at both the sliding end 61 of the second transmission arm 6 and the second fastening block 242, so as to lock and fasten the sliding end 61 and the second fastening block 242 by using a fastener. The sliding end 61 of the second transmission arm 6 abuts against the plate body 241 of the second shielding plate 24, and partially extends into the second limiting groove 243, to well mutually limit the second transmission arm 6 and the second shielding plate 24, so that stability of a connection structure is good.

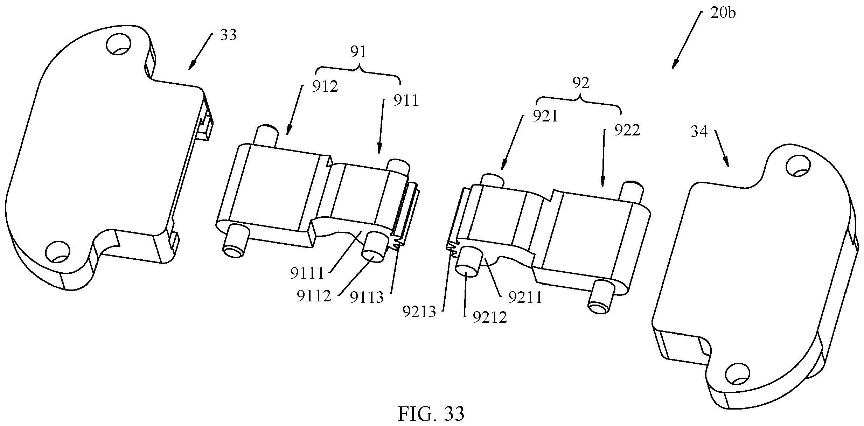

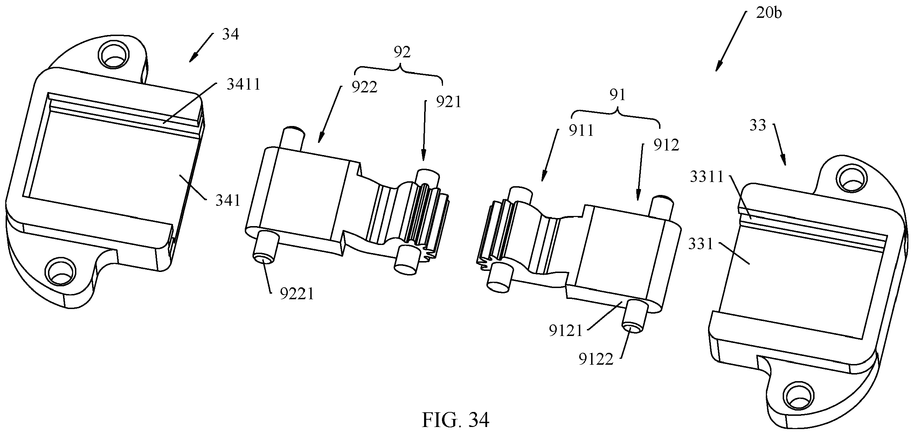

Refer to FIG. 32 to FIG. 34 together. FIG. 32 is a schematic diagram of a structure of a synchronous connection component 20b of the rotation mechanism 20 shown in FIG. 8. FIG. 33 is a schematic diagram of an exploded structure of the synchronous connection component 20b shown in FIG. 32. FIG. 34 is a schematic diagram of a structure of the synchronous connection component 20b shown in FIG. 33 from another angle. A field of view shown in FIG. 34 is flipped relative to a field of view shown in FIG. 33.

The rotation mechanism 20 further includes a third fastening bracket 33, a fourth fastening bracket 34, a first synchronous swing arm 91, and a second synchronous swing arm 92. The third fastening bracket 33 is fastened to the first housing 10, and the fourth fastening bracket 34 is fastened to the second housing 30. For example, the third fastening bracket 33 has a third sliding slot 331, and a side wall of the third sliding slot 331 may have concave guide space 3311. The fourth fastening bracket 34 has a fourth sliding slot 341, and a side wall of the fourth sliding slot 341 may have concave guide space 3411.

The first synchronous swing arm 91 includes a rotation end 911 and a movable end 912. The rotation end 911 of the first synchronous swing arm 91 is rotatably connected to the main shaft assembly 1. The movable end 912 of the first synchronous swing arm 91 is movably connected to the third fastening bracket 33. In a process in which the first housing 10 and the second housing 30 are folded or unfolded relative to each other, the movable end 912 of the first synchronous swing arm 91 slides and rotates relative to the third fastening bracket 33. The second synchronous swing arm 92 includes a rotation end 921 and a movable end 922. The rotation end 921 of the second synchronous swing arm 92 is rotatably connected to the main shaft assembly 1, the rotation end 921 of the second synchronous swing arm 92 is engaged with the rotation end 911 of the first synchronous swing arm 91, and the movable end 922 of the second synchronous swing arm 92 is movably connected to the fourth fastening bracket 34. In a process in which the first housing 10 and the second housing 30 are folded or unfolded relative to each other, the movable end 922 of the second synchronous swing arm 92 slides and rotates relative to the fourth fastening bracket 34.

In this embodiment, because the rotation end 911 of the first synchronous swing arm 91 is engaged with the rotation end 921 of the second synchronous swing arm 92, both the rotation end 911 of the first synchronous swing arm 91 and the rotation end 921 of the second synchronous swing arm 92 are rotatably connected to the main shaft assembly 1, the movable end 912 of the first synchronous swing arm 91 is movably connected to the third fastening bracket 33, and the movable end 922 of the second synchronous swing arm 92 is movably connected to the fourth fastening bracket 34. Therefore, in a process in which the third fastening bracket 33 and the fourth fastening bracket 34 are unfolded or folded relative to each other, the first synchronous swing arm 91 and the second synchronous swing arm 92 can control a rotation angle of the third fastening bracket 33 relative to the main shaft assembly 1 to be consistent with a rotation angle of the fourth fastening bracket 34 relative to the main shaft assembly 1. In this case, a rotation action of the third fastening bracket 33 and a rotation action of the fourth fastening bracket 34 are synchronous and consistent, and symmetry between a folding action and an unfolding action of the rotation mechanism 20 is good. This helps improve user experience.

The first synchronous swing arm 91 is rotatably connected to the main shaft assembly 1, and is slidably and rotatably connected to the third fastening bracket 33, that is, a connecting rod slider structure is formed. The second synchronous swing arm 92 is rotatably connected to the main shaft assembly 1, and is slidably and rotatably connected to the fourth fastening bracket 34, that is, a connecting rod slider structure is formed. The two connecting rod slider structures that are engaged with each other can well control synchronization and consistency of rotation actions of the first housing 10 and the second housing 30.

For example, as shown in FIG. 33, the rotation end 911 of the first synchronous swing arm 91 includes a first rotation body 9111, a first rotation shaft 9112, and a first gear 9113. The first rotation body 9111 includes a front face, a back face, and a peripheral side face that is connected between the front face and the back face. The first gear 9113 is fastened to the peripheral side surface of the first rotation body 9111. The first rotation shaft 9112 is fastened to the front face and/or back face of the first rotation body 9111. In this embodiment of this application, "A and/or B" includes three cases: "A", "B", and "A and B". In some embodiments, the first rotation shaft 9112 includes two portions, which are respectively fastened to the front face and the back face of the first rotation body 9111, so that the first synchronous swing arm 91 has better balance and stability when the first synchronous swing arm 91 is rotatably connected to another structure by using the first rotation shaft 9112. In some other embodiments, the first rotation shaft 9112 includes one portion, and the first rotation shaft 9112 is fastened to the front face or the back face of the first rotation body 9111, so as to reduce an accommodating space requirement of the first synchronous swing arm 91. The first rotation shaft 9112 is rotatably connected to the main shaft assembly 1. The first synchronous swing arm 91 may be disposed in one of the M-shaped grooves 132 (as shown in FIG. 17) of the main shaft assembly 1, and the first rotation shaft 9112 is disposed in a concave groove 133 of the M-shaped groove 132. In this embodiment, the rotation end 911 of the first synchronous swing arm 91 and the main shaft assembly 1 are rotatably connected by using a real shaft. In some other embodiments, the rotation end 911 of the first synchronous swing arm 91 and the main shaft assembly 1 may alternatively be rotatably connected by using a virtual shaft. This is not strictly limited in this embodiment of this application.

The rotation end 921 of the second synchronous swing arm 92 includes a second rotation body 9211, a second rotation shaft 9212, and a second gear 9213. The second rotation shaft 9212 is fastened to a front face and/or a back face of the second rotation body 9211, and the second gear 9213 is fastened to a peripheral side face of the second rotation body 9211. The rotation end 921 of the second synchronous swing arm 92 may be disposed in one of the M-shaped grooves 132 (as shown in FIG. 17) of the main shaft assembly 1, and the second rotation shaft 9212 is disposed in another concave groove 133 of the M-shaped groove 132. The second rotation shaft 9212 is rotatably connected to the main shaft assembly 1, and the second gear 9213 is engaged with the first gear 9113. In this embodiment, because the rotation end 911 of the first synchronous swing arm 91 and the rotation end 921 of the second synchronous swing arm 92 are directly engaged with the second gear 9213 by using the first gear 9113, the synchronous connection component 20b formed by the first synchronous swing arm 91 and the second synchronous swing arm 92 has a simple structure, and an easy-to-control movement process with high accuracy.

For example, as shown in FIG. 34, the movable end 912 of the first synchronous swing arm 91 includes a third rotation body 9121 and a third rotation shaft 9122, and the third rotation shaft 9122 is fastened to a front face and/or a back face of the third rotation body 9121. The movable end 912 of the first synchronous swing arm 91 may be disposed in the third sliding slot 331 of the third fastening bracket 33, and the third rotation shaft 9122 may be disposed in the guide space 3311 of the third sliding slot 331. In this embodiment, the guide space 3311 of the third sliding slot 331 cooperates with the first rotation shaft 9112 of the first synchronous swing arm 91, so that the movable end 912 of the first synchronous swing arm 91 can be guided in a sliding direction of the third sliding slot 331. In this case, a relative movement action between the first synchronous swing arm 91 and the third fastening bracket 33 is easy to implement and high in control precision.

The movable end 922 of the second synchronous swing arm 92 has a fourth rotation shaft 9221, the second synchronous swing arm 92 is disposed in the fourth sliding slot 341, and the fourth rotation shaft 9221 is disposed in the guide space 3411 of the fourth sliding slot 341. The guide space 3411 of the fourth sliding slot 341 cooperates with the fourth rotation shaft 9221 of the second synchronous swing arm 92, so that the movable end 922 of the second synchronous swing arm 92 can be guided in a sliding direction of the fourth sliding slot 341. In this case, a relative movement action between the second synchronous swing arm 92 and the fourth fastening bracket 34 is easy to implement with high control precision.

In some other embodiments, the first synchronous swing arm 91 may alternatively be connected to the third fastening bracket 33 by using an adapter, and the second synchronous swing arm 92 may alternatively be connected to the fourth fastening bracket 34 by using an adapter. In some other embodiments, for example, the rotation mechanism 20 further includes a first adapter and a second adapter. The first adapter is slidably disposed in the guide space 3311 of the third sliding slot 331. The first rotation shaft 9112 is rotatably connected to the first adapter. The second adapter is slidably disposed in the guide space 3411 of the fourth sliding slot 341. The second rotation shaft 9212 is rotatably connected to the second adapter.

For example, a structure of the second synchronous swing arm 92 may be substantially the same as a structure of the first synchronous swing arm 91, to simplify material types of the rotation mechanism 20, and reduce design difficulty and costs of the rotation mechanism 20. A structure difference between the second synchronous swing arm 92 and the first synchronous swing arm 91 lies in that the first gear 9113 and the second gear 9213 are arranged at different angles, so as to facilitate engagement with each other.

It may be understood that, in some embodiments, a structure of the second fastening bracket 32 of the rotation mechanism 20 may be the same as a structure of the first fastening bracket 31, and/or a structure of the second transmission arm 6 may be the same as a structure of the first transmission arm 4, and/or a structure of the second rotation arm 7 may be the same as a structure of the first rotation arm 5, and/or a structure of the third fastening bracket 33 may be the same as a structure of the fourth fastening bracket 34. This simplifies material types of the rotation mechanism 20, and reduces design difficulty and costs of the rotation mechanism 20.

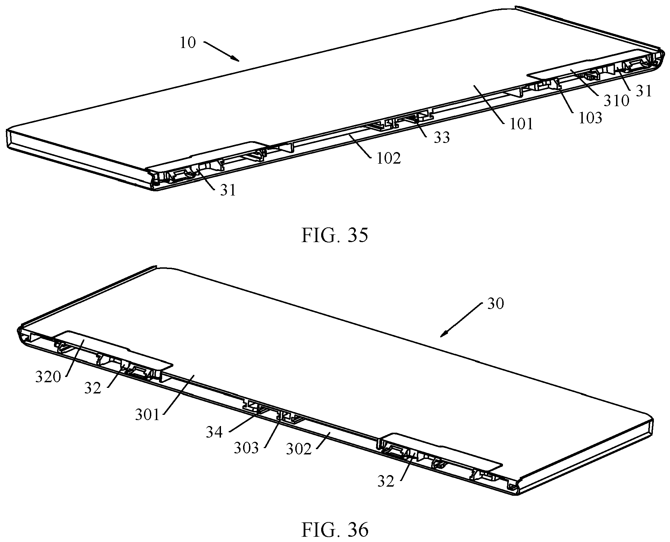

FIG. 35 is a schematic diagram of a partial structure of the folding apparatus 100 shown in FIG. 2. The structure shown in FIG. 30 includes the first housing 10, the first fastening bracket 31 for two end connection components 20a, and the third fastening bracket 33 for the synchronous connection component 20b.

In some embodiments, a first fastening groove 102 is disposed on a side that is of the first housing 10 and that is close to the rotation mechanism 20. The first fastening bracket 31 and the third fastening bracket 33 are disposed in and fastened to the first fastening groove 102, and a gap 103 is formed between each of the first fastening bracket 31 and the third fastening bracket 33 and a groove bottom wall of the first fastening groove 102. The gap 103 is configured to provide accommodation and movement space for the first shielding plate 23. In this embodiment, because the first fastening bracket 31 and the first housing 10 are fastened to each other, the first housing 10 moves along with the first fastening bracket 31, and the rotation mechanism 20 can control a movement track of the first housing 10 by controlling a movement track of the first fastening bracket 31. For example, the first housing 10 has the first support surface 101, and a top surface 310 of the first fastening bracket 31 is flush with the first support surface 101, to jointly support the flexible display 200.

FIG. 36 is a schematic diagram of another partial structure of the folding apparatus 100 shown in FIG. 2. The structure shown in FIG. 36 includes a second housing 30, the second fastening bracket 32 for two end connection components 20a, and a fourth fastening bracket 34 for the synchronous connection component 20b.

In some embodiments, a second fastening groove 302 is disposed on a side that is of the second housing 30 and that is close to the rotation mechanism 20, the second fastening bracket 32 and the fourth fastening bracket 34 are disposed in and fastened to the second fastening groove 302, and a gap 303 is formed between each of the second fastening bracket 32 and the fourth fastening bracket 34 and a groove bottom wall of the second fastening groove 302. The gap 303 is configured to provide accommodation and movement space for the second shielding plate 24. In this embodiment, because the second fastening bracket 32 and the second housing 30 are fastened to each other, the second housing 30 moves along with the second fastening bracket 32, and the rotation mechanism 20 can control a movement track of the second housing 30 by controlling a movement track of the second fastening bracket 32. For example, the second housing 30 has the second support surface 301, and a top surface 320 of the second fastening bracket 32 is flush with the second support surface 301, to jointly support the flexible display 200.

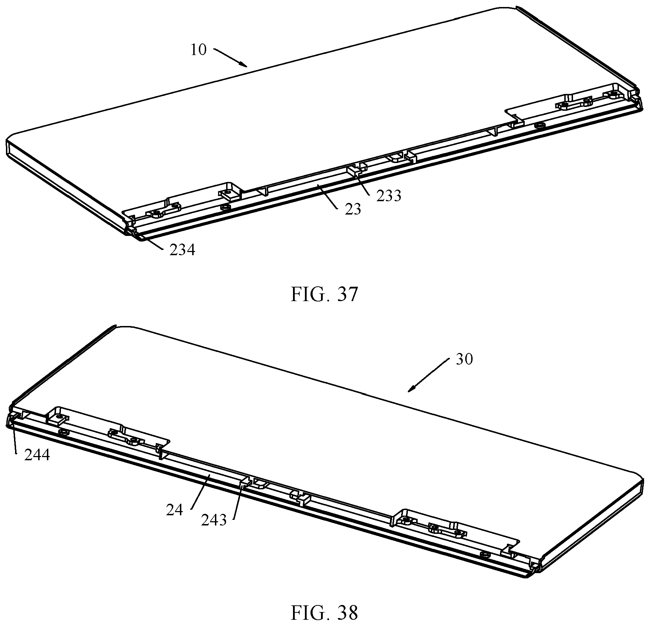

Refer to FIG. 31, FIG. 37, and FIG. 38 together. FIG. 37 is a schematic diagram of another partial structure of the folding apparatus 100 shown in FIG. 2. FIG. 38 is a schematic diagram of another partial structure of the folding apparatus 100 shown in FIG. 2. A structure shown in FIG. 37 includes the first housing 10 and the first shielding plate 23, and a structure shown in FIG. 38 includes the second housing 30 and the second shielding plate 24.

As shown in FIG. 31, the first shielding plate 23 further includes two middle sliders 233 and two end sliders 234 that are fastened to the plate body 231, and the two middle sliders 233 are located between the two end sliders 234. The second shielding plate 24 further includes two middle sliders 243 and two end sliders 244 that are fastened to the plate body 241, and the two middle sliders 243 are located between the two end sliders 244.

As shown in FIG. 37, the middle sliders 233 of the first shielding plate 23 are slidably connected to the first housing 10, the end sliders 234 of the first shielding plate 23 are slidably connected to the first housing 10, and the first shielding plate 23 can slide relative to the first housing 10, to extend into the first fastening groove 102 or partially extend out of the first fastening groove 102. In this embodiment, the first shielding plate 23 is slidably connected to the first housing 10, so that the first shielding plate 23 can extend or retract better relative to the first housing 10 under control of the rotation mechanism 20, to meet a self-shielding requirement of the folding apparatus 100.

As shown in FIG. 38, the middle sliders 243 of the second shielding plate 24 are slidably connected to the second housing 30, the end sliders 244 of the second shielding plate 24 are slidably connected to the second housing 30, and the second shielding plate 24 can slide relative to the second housing 30, to extend into the second fastening groove 302 or partially extend out of the second fastening groove 302. In this embodiment, the second shielding plate 24 is slidably connected to the second housing 30, so that the second shielding plate 24 can extend or retract better relative to the second housing 30 under control of the rotation mechanism 20, to meet a self-shielding requirement of the folding apparatus 100.

The following describes a structure of the folding apparatus 100 with reference to a plurality of internal structural diagrams of the folding apparatus 100 in an unfolded state, an intermediate state, and a closed state respectively.

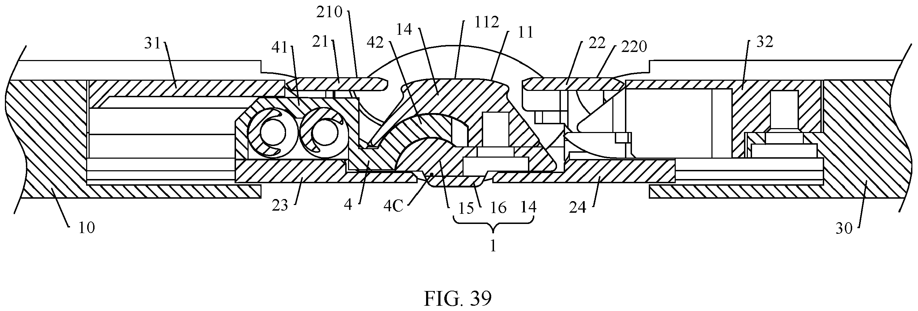

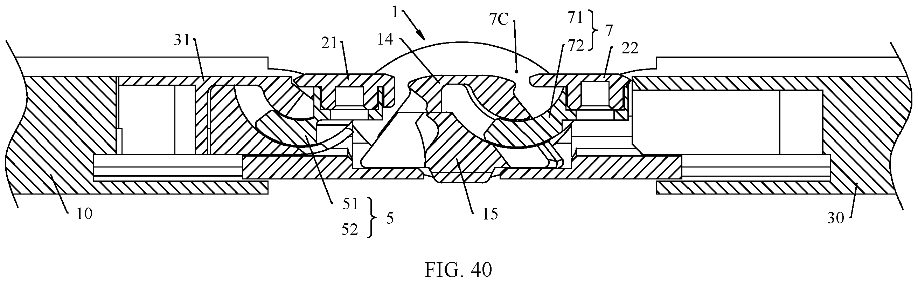

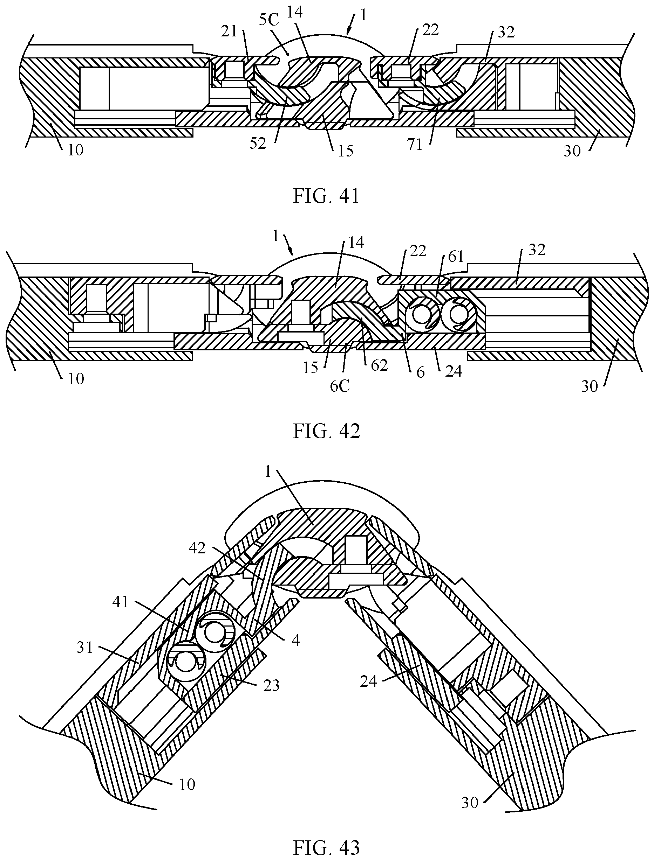

Refer to FIG. 39 to FIG. 42 together. FIG. 39 is a schematic diagram of a sectional structure of the folding apparatus 100 shown in FIG. 2 at a position corresponding to a first transmission arm 4. FIG. 40 is a schematic diagram of a sectional structure of the folding apparatus 100 shown in FIG. 2 at a position corresponding to a first rotation part 51 and a fourth rotation part 72. FIG. 41 is a schematic diagram of a sectional structure of the folding apparatus 100 shown in FIG. 2 at a position corresponding to a second rotation part 52 and a third rotation part 71. FIG. 42 is a schematic diagram of a sectional structure of the folding apparatus 100 shown in FIG. 2 at a position corresponding to a second transmission arm 6. The structures shown in FIG. 39 to FIG. 42 correspond to the unfolded state of the folding apparatus 100.

As shown in FIG. 39, when the first housing 10 and the second housing 30 are unfolded relative to each other to an unfolded state, the first transmission arm 4 is substantially parallel to the main shaft assembly 1, the rotation end 42 of the first transmission arm 4 is at a rotation-in position relative to the main shaft assembly 1, the sliding end 41 of the first transmission arm 4 is at a sliding-out position relative to the first fastening bracket 31, the first transmission arm 4 is away from the first fastening bracket 31 and the first housing 10, and the first fastening bracket 31 and the first housing 10 are away from the main shaft assembly 1. The main outer shaft 14 and the shielding plate 16 of the main shaft assembly 1 are respectively fastened to two sides of the main inner shaft 15. A rotation center 4C in which the first transmission arm 4 rotates relative to the main shaft assembly 1 is close to the main inner shaft 15 and away from the main outer shaft 14.

The first support plate 21 is lapped between the first fastening bracket 31 and the main shaft assembly 1, and the second support plate 22 is lapped between the second fastening bracket 32 and the main shaft assembly 1. The main outer shaft 14 of the main shaft assembly 1 is partially exposed relative to the first support plate 21 and the second support plate 22. The first support plate 21 is flush with the second support plate 22. For example, the support surface 210 of the first support plate 21 and the support surface 220 of the second support plate 22 are parallel to the plane region 112 of the support surface 11 of the main shaft assembly 1. The plane region 112 of the support surface 11 of the main shaft assembly 1 may be lower than the support surface 210 of the first support plate 21 and the support surface 220 of the second support plate 22, so that an adhesive layer used to bond the flexible display 200 is disposed in the plane region 112 of the support surface 11 of the main shaft assembly 1.

The first shielding plate 23 is located on a side that is of the first transmission arm 4 and that is away from the first support plate 21. In other words, the first shielding plate 23 and the first support plate 21 are separately located on two sides of the first transmission arm 4. The first shielding plate 23 is lapped between the first fastening bracket 31 and the main shaft assembly 1. The second shielding plate 24 is lapped between the second fastening bracket 32 and the main shaft assembly 1. The second shielding plate 24 is flush with the first shielding plate 23.

As shown in FIG. 40, when the first housing 10 and the second housing 30 are unfolded relative to each other to an unfolded state, the first rotation part 51 is at a rotation-out position relative to the first fastening bracket 31. The first support plate 21 is fixedly connected to the first rotation part 51. The fourth rotation part 72 is at a rotation-out position relative to the main shaft assembly 1. The second support plate 22 is fixedly connected to the fourth rotation part 72.

As shown in FIG. 41, when the first housing 10 and the second housing 30 are unfolded relative to each other to an unfolded state, the second rotation part 52 is at a rotation-out position relative to the main shaft assembly 1. The first support plate 21 is fixedly connected to the second rotation part 52. The third rotation part 71 is at a rotation-out position relative to the second fastening bracket 32. The second support plate 22 is fixedly connected to the third rotation part 71.

With reference to FIG. 40 and FIG. 41, when the first housing 10 and the second housing 30 are unfolded relative to each other to an unfolded state, one end of the first rotation arm 5 is at a rotation-out position relative to the first fastening bracket 31, the other end is at a rotation-out position relative to the main shaft assembly 1, one end of the second rotation arm 7 is at a rotation-out position relative to the second fastening bracket 32, and the other end is at a rotation-out position relative to the main shaft assembly 1. A rotation center 5C in which the first rotation arm 5 rotates relative to the main shaft assembly 1 is close to the main outer shaft 14 and away from the main inner shaft 15, and a rotation center 7C in which the second rotation arm 7 rotates relative to the main shaft assembly 1 is close to the main outer shaft 14 and away from the main inner shaft 15.

As shown in FIG. 42, when the first housing 10 and the second housing 30 are unfolded relative to each other to an unfolded state, the second transmission arm 6 is substantially parallel to the main shaft assembly 1, the rotation end 62 of the second transmission arm 6 is at a rotation-in position relative to the main shaft assembly 1, the sliding end 61 of the second transmission arm 6 is at a sliding-out position relative to the second fastening bracket 32, the second transmission arm 6 is away from the second fastening bracket 32 and the second housing 30, and the second fastening bracket 32 and the second housing 30 are away from the main shaft assembly 1. A rotation center 6C in which the second transmission arm 6 rotates relative to the main shaft assembly 1 is close to the main inner shaft 15 and away from the main outer shaft 14. The second shielding plate 24 is located on a side that is of the second transmission arm 6 and that is away from the second support plate 22. In other words, the second shielding plate 24 and the second support plate 22 are separately located on two sides of the second transmission arm 6.

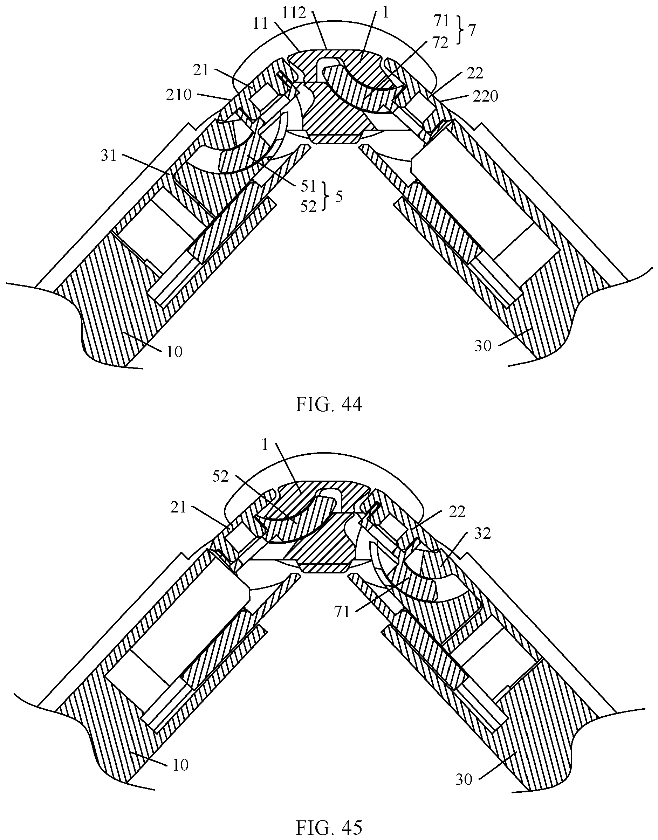

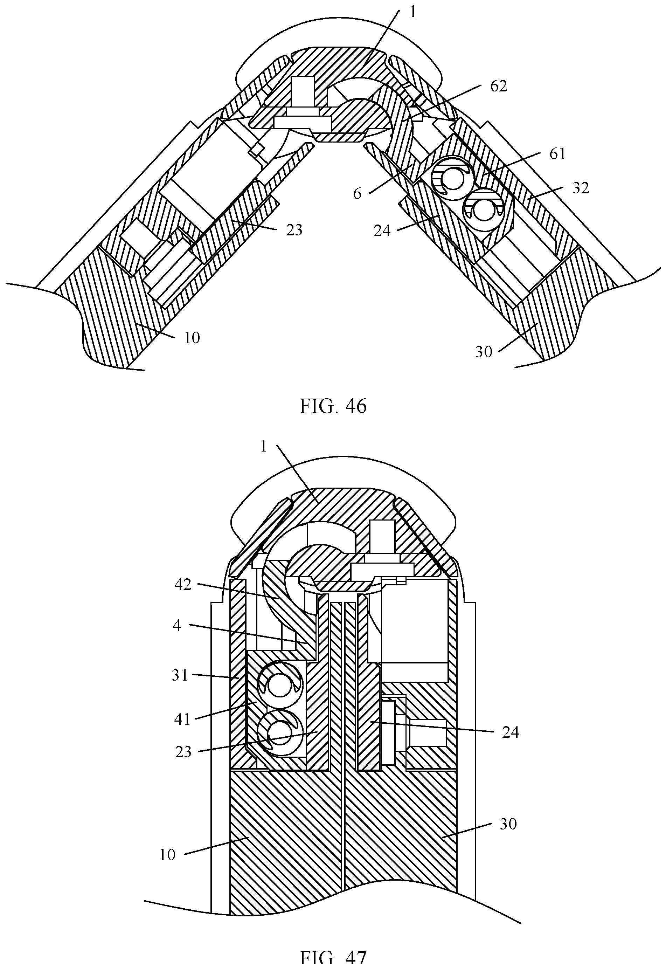

Refer to FIG. 43 to FIG. 46 together. FIG. 43 is a schematic diagram of a sectional structure of the folding apparatus 100 shown in FIG. 4 at a position corresponding to a first transmission arm 4. FIG. 44 is a schematic diagram of a sectional structure of the folding apparatus 100 shown in FIG. 4 at a position corresponding to a first rotation part 51 and a fourth rotation part 72. FIG. 45 is a schematic diagram of a sectional structure of the folding apparatus 100 shown in FIG. 4 at a position corresponding to a second rotation part 52 and a third rotation part 71. FIG. 46 is a schematic diagram of a sectional structure of the folding apparatus 100 shown in FIG. 4 at a position corresponding to a second transmission arm 6. The structures shown in FIG. 43 to FIG. 46 correspond to an intermediate state of the folding apparatus 100.

As shown in FIG. 43, when the first housing 10 and the second housing 30 are in an intermediate state, the first transmission arm 4 is inclined relative to the main shaft assembly 1, the rotation end 42 of the first transmission arm 4 is at a partial rotation-out/partial rotation-in position relative to the main shaft assembly 1, and the sliding end 41 of the first transmission arm 4 is at a partial sliding-in/partial sliding-out position relative to the first fastening bracket 31. In this case, the first transmission arm 4 gradually approaches the first fastening bracket 31 and the first housing 10, and the first fastening bracket 31 and the first housing 10 gradually approach the main shaft assembly 1.

As shown in FIG. 44, when the first housing 10 and the second housing 30 are in an intermediate state, the first rotation part 51 is at a partial rotation-out/partial rotation-in position relative to the first fastening bracket 31. The fourth rotation part 72 is at a partial rotation-out/partial rotation-in position relative to the main shaft assembly 1. As shown in FIG. 45, when the first housing 10 and the second housing 30 are in an intermediate state, the second rotation part 52 is at a partial rotation-out/partial rotation-in position relative to the main shaft assembly 1. The third rotation part 71 is at a partial rotation-out/partial rotation-in position relative to the second fastening bracket 32. That is, when the first housing 10 and the second housing 30 are in an intermediate state, one end of the first rotation arm 5 is at a partial rotation-out/partial rotation-in position relative to the first fastening bracket 31, the other end is at a partial rotation-out/partial rotation-in position relative to the main shaft assembly 1, one end of the second rotation arm 7 is at a partial rotation-out/partial rotation-in position relative to the second fastening bracket 32, and the other end is at a partial rotation-out/partial rotation-in position relative to the main shaft assembly 1.

As shown in FIG. 46, when the first housing 10 and the second housing 30 are in an intermediate state, the second transmission arm 6 is inclined relative to the main shaft assembly 1, the rotation end 62 of the second transmission arm 6 is at a partial rotation-out/partial rotation-in position relative to the main shaft assembly 1, and the sliding end 61 of the second transmission arm 6 is at a partial sliding-in/partial sliding-out position relative to the second fastening bracket 32. In this case, the second transmission arm 6 gradually approaches the second fastening bracket 32 and the second housing 30, and the second fastening bracket 32 and the second housing 30 gradually approach the main shaft assembly 1.

As shown in FIG. 44 and FIG. 45, the first support plate 21 rotates with the first rotation arm 5 relative to the main shaft assembly 1 to an inclined position, and is lapped between the first fastening bracket 31 and the main shaft assembly 1, so that the first fastening bracket 31 and the main shaft assembly 1 can be smoothly transited. The second support plate 22 rotates with the second rotation arm 7 relative to the main shaft assembly 1 to an inclined position, and is lapped between the second fastening bracket 32 and the main shaft assembly 1, so that the second fastening bracket 32 and the main shaft assembly 1 can be smoothly transited. The support surface 210 of the first support plate 21 is inclined relative to the plane region 112 of the support surface 11 of the main shaft assembly 1. The support surface 220 of the second support plate 22 is inclined relative to the plane region 112 of the support surface 11 of the main shaft assembly 1. The support surface 210 of the first support plate 21 and the support surface 220 of the second support plate 22 are away from each other in a direction away from the support surface 11 of the main shaft assembly 1.

As shown in FIG. 43 and FIG. 46, the first shielding plate 23 rotates with the first transmission arm 4 relative to the main shaft assembly 1 and moves relative to the first housing 10. The first shielding plate 23 partially retracts into the first housing 10, and is located between the first fastening bracket 31 and the first housing 10. The second shielding plate 24 rotates with the second transmission arm 6 relative to the main shaft assembly 1 and moves relative to the second housing 30. The second shielding plate 24 partially retracts into the second housing 30, and is located between the second fastening bracket 32 and the second housing 30.

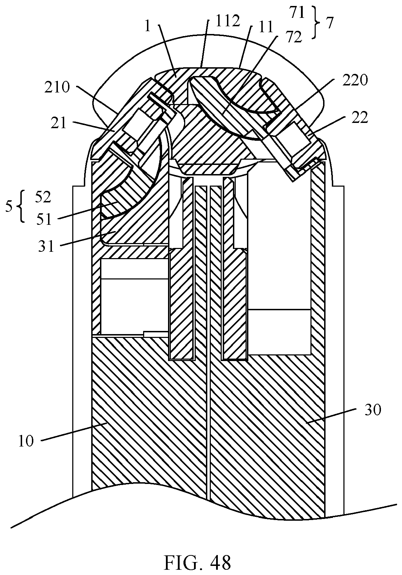

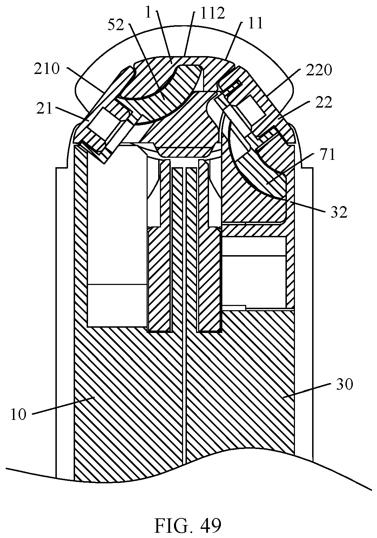

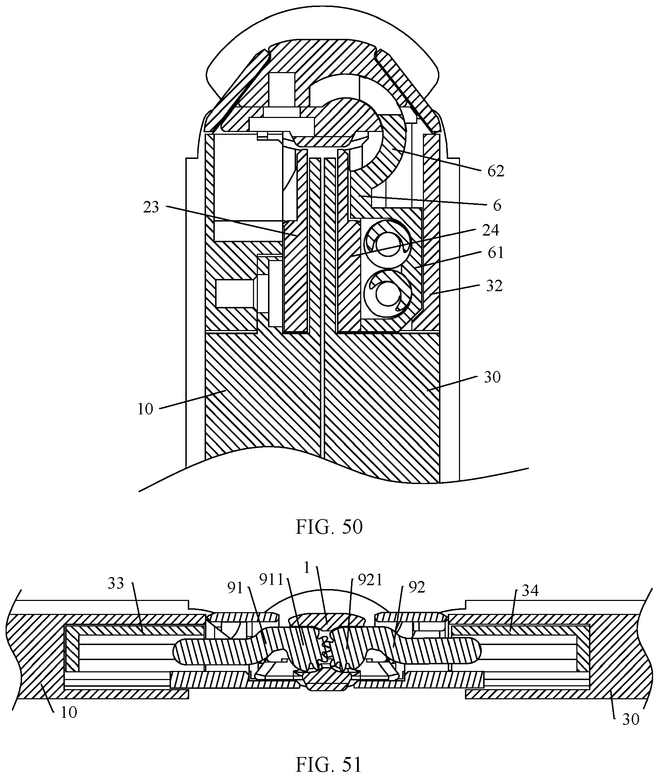

Refer to FIG. 47 to FIG. 50. FIG. 47 is a schematic diagram of a sectional structure of the folding apparatus 100 shown in FIG. 6 at a position corresponding to a first transmission arm 4. FIG. 48 is a schematic diagram of a sectional structure of the folding apparatus 100 shown in FIG. 6 at a position corresponding to a first rotation part 51 and a fourth rotation part 72. FIG. 49 is a schematic diagram of a sectional structure of the folding apparatus 100 shown in FIG. 6 at a position corresponding to a second rotation part 52 and a third rotation part 71. FIG. 50 is a schematic diagram of a sectional structure of the folding apparatus 100 shown in FIG. 6 at a position corresponding to a second transmission arm 6. The structures shown in FIG. 47 to FIG. 50 correspond to a closed state of the folding apparatus 100.

As shown in FIG. 47, when the first housing 10 and the second housing 30 are folded relative to each other to a closed state, the first transmission arm 4 is substantially perpendicular to the main shaft assembly 1, the rotation end 42 of the first transmission arm 4 is at a rotation-out position relative to the main shaft assembly 1, and the sliding end 41 of the first transmission arm 4 is at a sliding-in position relative to the first fastening bracket 31. In this case, the first transmission arm 4 is close to first fastening bracket 31 and the first housing 10, and the first fastening bracket 31 and the first housing 10 are close to the main shaft assembly 1.

As shown in FIG. 48, when the first housing 10 and the second housing 30 are folded relative to each other to a closed state, the first rotation part 51 is at a rotation-in position relative to the first fastening bracket 31. The fourth rotation part 72 is at a rotation-in position relative to the main shaft assembly 1. As shown in FIG. 49, when the first housing 10 and the second housing 30 are folded relative to each other to a closed state, the second rotation part 52 is at a rotation-in position relative to the main shaft assembly 1. The third rotation part 71 is at a rotation-in position relative to the second fastening bracket 32. That is, when the first housing 10 and the second housing 30 are in an intermediate state, one end of the first rotation arm 5 is at a rotation-in position relative to the first fastening bracket 31, the other end is at a rotation-in position relative to the main shaft assembly 1, one end of the second rotation arm 7 is at a rotation-in position relative to the second fastening bracket 32, and the other end is at a rotation-in position relative to the main shaft assembly 1.

As shown in FIG. 50, when the first housing 10 and the second housing 30 are folded relative to each other to a closed state, the second transmission arm 6 is substantially parallel to the main shaft assembly 1, the rotation end 62 of the second transmission arm 6 is at a rotation-out position relative to the main shaft assembly 1, and the sliding end 61 of the second drive arm 6 is at a sliding-in position relative to the second fastening bracket 32. In this case, the second transmission arm 6 is close to the second fastening bracket 32 and the second housing 30, and the second fastening bracket 32 and the second housing 30 are close to the main shaft assembly 1.

As shown in FIG. 48 and FIG. 49, when the first housing 10 and the second housing 30 are folded relative to each other to a closed state, the first support plate 21 rotates with the first rotation arm 5 relative to the main shaft assembly 1, and the first support plate 21 is lapped between the first fastening bracket 31 and the main shaft assembly 1, so that the first fastening bracket 31 and the main shaft assembly 1 can be smoothly transited. The second support plate 22 rotates with the second rotation arm 7 relative to the main shaft assembly 1, and the second support plate 22 is disposed between the second fastening bracket 32 and the main shaft assembly 1, so that the second fastening bracket 32 and the main shaft assembly 1 can be smoothly transited. The support surface 210 of the first support plate 21 is inclined relative to the plane region 112 of the support surface 11 of the main shaft assembly 1. The support surface 220 of the second support plate 22 is inclined relative to the plane region 112 of the support surface 11 of the main shaft assembly 1. The support surface 210 of the first support plate 21 and the support surface 220 of the second support plate 22 are away from each other in a direction away from the support surface 11 of the main shaft assembly 1.

As shown in FIG. 47 and FIG. 50, the first shielding plate 23 rotates with the first transmission arm 4 relative to the main shaft assembly 1 and moves relative to the first housing 10. The first shielding plate 23 retracts into the first housing 10, and is located between the first fastening bracket 31 and the first housing 10. The second shielding plate 24 rotates with the second transmission arm 6 relative to the main shaft assembly 1 and moves relative to the second housing 30. The second shielding plate 24 retracts into the second housing 30, and is located between the second fastening bracket 32 and the second housing 30.

As shown in FIG. 39 to FIG. 50, in this embodiment of this application, the rotation mechanism 20 jointly controls a movement track of the first fastening bracket 31 and the first housing 10 by using the first transmission arm 4 and the first rotation arm 5, and jointly controls a movement track of the second fastening bracket 32 and the second housing 30 by using the second transmission arm 6 and the second rotation arm 7. In this case, in a process in which the first housing 10 and the second housing 30 are folded relative to each other, the first fastening bracket 31 drives the first housing 10 to move towards the main shaft assembly 1, and the second fastening bracket 32 drives the second housing 30 to move towards the main shaft assembly 1. In a process in which the first housing 10 and the second housing 30 are unfolded relative to each other, the first fastening bracket 31 drives the first housing 10 to move away from the main shaft assembly 1, and the second fastening bracket 32 drives the second housing 30 to move away from the main shaft assembly 1. That is, the rotation mechanism 20 can implement in-pull movement of the housing in a process in which the folding apparatus 100 changes from the unfolded state to the closed state, and out-push movement of the housing in a process in which the folding apparatus 100 changes from the closed state to the unfolded state, so that the folding apparatus 100 can implement deformation movement in a process of unfolding or folding by using the flexible display 200 as a neutral surface. This reduces a risk of pulling or squeezing the flexible display 200 to protect the flexible display 200 and improve reliability of the flexible display 200, so that the flexible display 200 and the electronic device 1000 each have a long service life.

In addition, when the first housing 10 and the second housing 30 are folded relative to each other to a closed state by using the rotation mechanism 20, the first housing 10 and the second housing 30 can be totally closed with no gap or a small gap there-between. In this way, the folding apparatus 100 implements self-shielding because of a complete appearance. The electronic device 1000 to which the folding apparatus 100 is applied has a complete appearance, which helps improve product reliability and user experience.

In addition, the first transmission arm 4 is rotatably connected to the main shaft assembly 1 and slidably connected to the first fastening bracket 31 to form a connecting rod slider structure. The first rotation arm 5 is rotatably connected to the main shaft assembly 1 and is rotatably connected to the first fastening bracket 31 to form a connecting rod structure. The second transmission arm 6 is rotatably connected to the main shaft assembly 1 and slidably connected to the second fastening bracket 32 to form a connecting rod slider structure. The second rotation arm 7 is rotatably connected to the main shaft assembly 1 and is rotatably connected to the second fastening bracket 32 to form a connecting rod structure. The rotation mechanism 20 implements connection between the housing and the main shaft assembly 1 by using the connecting rod slider structure and the connecting rod structure, and has a few constituent parts with a simple fitting relationship and simple fitting locations. The constituent components are easy to manufacture and assemble, thereby facilitating mass production. In addition, because the main shaft assembly 1 is linked to the first fastening bracket 31 by using the first transmission arm 4 and the first rotation arm 5, and linked to the second fastening bracket 32 by using the second transmission arm 6 and the second rotation arm 7, the rotation mechanism 20 has good mechanism tensile resistance and mechanism extrusion resistance.

In this embodiment of this application, the rotation center 4C in which the first transmission arm 4 rotates relative to the main shaft assembly 1 is close to the main inner shaft 15 and away from the main outer shaft 14, and the rotation center 5C in which the first rotation arm 5 rotates relative to the main shaft assembly 1 is close to the main outer shaft 14 and away from the main inner shaft 15. The rotation center 6C in which the second rotation arm 6 rotates relative to the main shaft assembly 1 is close to the main inner shaft 15 and away from the main outer shaft 14, and the rotation center 7C in which the second rotation arm 7 rotates relative to the main shaft assembly 1 is close to the main outer shaft 14 and away from the main inner shaft 15. By setting a position of the rotation center 4C, a position of the rotation center 5C, a position of the rotation center 6C, and a position of the rotation center 7C, the rotation mechanism 20 easily implements the in-pull movement of the housing in the process in which the folding apparatus 100 changes from the unfolded state to the closed state and the out-push movement of the housing in the process in which the folding apparatus 100 changes from the closed state to the unfolded state.

Because the first support plate 21 is fixedly connected to the first rotation arm 5 and is lapped between the first fastening bracket 31 and the main shaft assembly 1, the second support plate 22 is fixedly connected to the second rotation arm 7 and is connected between the second fastening bracket 32 and the main shaft assembly 1. Therefore, the first support plate 21 can move with the first rotation arm 5, and the second support plate 22 can move with the second rotation arm 7. In this case, when the folding apparatus 100 is in the unfolded state, the intermediate state, and the closed state, strong support for the bending part 2002 of the flexible display 200 can be formed together with the main shaft assembly 1, so that the flexible display 200 is not easily damaged under an external force, reliability of the flexible display 200 is improved, and a service life of the flexible display 200 and a service life of the electronic device 1000 are prolonged. In addition, when the folding apparatus 100 is in the closed state, the first support plate 21 and the second support plate 22 can form a three-segment wrapper together with the main outer shaft 14, to provide substantially arc-shaped strong support for the bending part 2002 of the flexible display 200. In this way, a closed form of the bending part 2002 of the flexible display 200 can be close to an ideal closed form. Therefore, the folding apparatus 100 can provide more optimized support for the flexible display 200 in the closed form.

The first shielding plate 23 is fastened to the sliding end 41 of the first transmission arm 4, the first shielding plate 23 moves along with the sliding end 41 of the first transmission arm 4, the second shielding plate 24 is fastened to the sliding end 61 of the second transmission arm 6, and the second shielding plate 24 moves along with the sliding end 61 of the second transmission arm 6. Therefore, when the first housing 10 and the second housing 30 are unfolded relative to each other to the unfolded state, the first shielding plate 23 extends out of the first housing 10 along with the first transmission arm 4, the first shielding plate 23 is lapped between the first fastening bracket 31 and the main shaft assembly 1, and can shield a gap between the first fastening bracket 31 and the main shaft assembly 1. The second shielding plate 24 extends out of the second housing 30 along with the second transmission arm 6. The second shielding plate 24 is lapped between the second fastening bracket 32 and the main shaft assembly 1, and can shield a gap between the second fastening bracket 32 and the main shaft assembly 1. Therefore, the folding apparatus 100 can implement self-shielding, which helps improve appearance integrity, can also reduce a risk of external dust and foreign matters entering the rotation mechanism 20, to ensure reliability of the folding apparatus 100. When the first housing 10 and the second housing 30 are folded relative to each other to a closed state, the first shielding plate 23 follows the first transmission arm 4 to approach the first housing 10, so that the first shielding plate 23 can be folded between the first fastening bracket 31 and the first housing 10. The second shielding plate 24 follows the second transmission arm 6 to approach the second housing 30, so that the second shielding plate 24 can be folded between the second fastening bracket 32 and the second housing 30, to implement avoidance. In this way, the folding apparatus 100 can be smoothly folded to a closed form, and reliability of the mechanism is high.

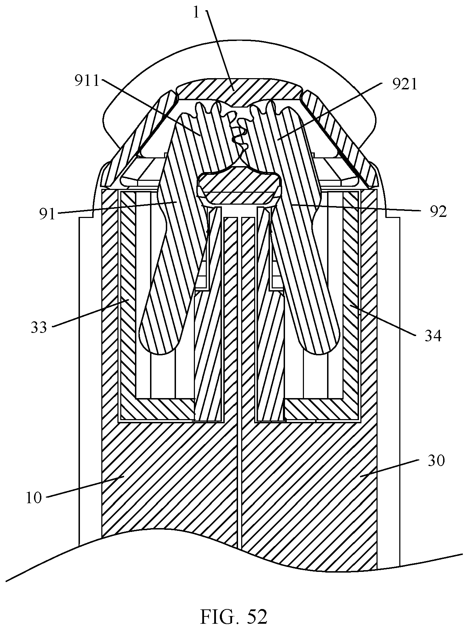

Refer to FIG. 51 and FIG. 52. FIG. 51 is a schematic diagram of a sectional structure of the folding apparatus 100 shown in FIG. 2 at a position corresponding to a first synchronous swing arm 91 and a second synchronous swing arm 92. FIG. 52 is a schematic diagram of a sectional structure of the folding apparatus 100 shown in FIG. 6 at a position corresponding to a first synchronous swing arm 91 and a second synchronous swing arm 92.

As shown in FIG. 51, when the first housing 10 and the second housing 30 are unfolded relative to each other to an unfolded state, the first synchronous swing arm 91 and the second synchronous swing arm 92 are in an unfolded state. The first synchronous swing arm 91 is at an extended-out position relative to the third fastening bracket 33, so that the first synchronous swing arm 91 is away from the third fastening bracket 33 and the first housing 10. The second synchronous swing arm 92 is at an extended-out position relative to the fourth fastening bracket 34, so that the second synchronous swing arm 92 is away from the fourth fastening bracket 34 and the second housing 30. As shown in FIG. 52, when the first housing 10 and the second housing 30 are folded relative to each other to a closed state, the first synchronous swing arm 91 and the second synchronous swing arm 92 are in a folded state. The first synchronous swing arm 9 is at a retracted position relative to the third fastening bracket 33, so that the first synchronous swing arm 91 is close to the third fastening bracket 33 and the first housing 10. The second synchronous swing arm 92 is at a retracted position relative to the fourth fastening bracket 34, so that the second synchronous swing arm 92 is close to the fourth fastening bracket 34 and the second housing 30.

In this embodiment, because the rotation end 911 of the first synchronous swing arm 91 is engaged with the rotation end 921 of the second synchronous swing arm 92, both the rotation end 911 of the first synchronous swing arm 91 and the rotation end 921 of the second synchronous swing arm 92 are rotatably connected to the main shaft assembly 1, the movable end 912 of the first synchronous swing arm 91 is movably connected to the third fastening bracket 33, and the movable end 922 of the second synchronous swing arm 92 is movably connected to the fourth fastening bracket 34. Therefore, in the process in which the first housing 10 and the second housing 30 are unfolded or folded relative to each other, the first synchronous swing arm 91 and the second synchronous swing arm 92 can control a rotation angle of the third fastening bracket 33 relative to the main shaft assembly 1 to be consistent with a rotation angle of the fourth fastening bracket 34 relative to the main shaft assembly 1. In this case, a rotation action of the first housing 10 and a rotation action of the second housing 30 are synchronous and consistent, and symmetry between a folding action and an unfolding action of the folding apparatus 100 is good. This helps improve user experience.

The first synchronous swing arm 91 is rotatably connected to the main shaft assembly 1, and is slidably and rotatably connected to the third fastening bracket 33, that is, a connecting rod slider structure is formed. The second synchronous swing arm 92 is rotatably connected to the main shaft assembly 1, and is slidably and rotatably connected to the fourth fastening bracket 34, that is, a connecting rod slider structure is formed. The two connecting rod slider structures that are engaged with each other can well control synchronization and consistency of rotation actions of the first housing 10 and the second housing 30.

In this embodiment of this application, the first support plate 21, the main shaft assembly 1, and the second support plate 22 of the rotation mechanism 20 of the folding apparatus 100 can jointly provide strong support for the flexible display 200 in various forms, so that the flexible display 200 is not easily dented under an external force. This helps reduce a risk of damage to the display, improve reliability of the flexible display 200, and enable the flexible display 200 and the electronic device 1000 to have a long service life each.

The foregoing descriptions are merely specific embodiments of this application, but are not intended to limit the protection scope of this application. Any variation or replacement, for example, reducing or adding a mechanical part, and changing a shape of a mechanical part, can readily figured out by a person skilled in the art within the technical scope disclosed in this application. When no conflict occurs, embodiments of this application and the features in the embodiments may be mutually combined. Therefore, the protection scope of this application shall be subject to the protection scope of the claims.

## Claims

1. A rotation mechanism (20), comprising a main shaft assembly (1), a first fastening bracket (31), a first transmission arm (4), a first rotation arm (5), a first support plate (21), a second fastening bracket (32), a second transmission arm (6), a second rotation arm (7), and a second support plate (22);
wherein the first transmission arm (4) comprises a sliding end (41) and a rotation end (42), the sliding end (41) of the first transmission arm (4) is slidably connected to the first fastening bracket (31), the rotation end (42) of the first transmission arm (4) is rotatably connected to the main shaft assembly (1), one end of the first rotation arm (5) is rotatably connected to the first fastening bracket (31), the other end of the first rotation arm (5) is rotatably connected to the main shaft assembly (1), and the first support plate (21) is lapped between the first fastening bracket (31) and the main shaft assembly (1), and is fixedly connected to the first rotation arm (5);
wherein the first rotation arm (5) includes a first rotation part (51) and a second rotation part (52), the first rotation part 51 includes a first fixed portion (511) and a first rotation portion (512), the second rotation part (52) includes a second fixed portion (521) and a second rotation portion (522), the first fixed portion (511) and the second fixed portion (521) are fastened to the first support plate (21);
the one end of the first rotation arm (5) is rotatably connected to the first fastening bracket (31), the other end of the first rotation arm (5) is rotatably connected to the main shaft assembly (1), comprising: the first rotation arm (5) is rotatably connected to the first fastening bracket (31) by using the first rotation portion (512), and the first rotation arm (5) is rotatably connected to the main shaft assembly (1) by using the second rotation portion (522);
the second transmission arm (6) comprises a sliding end (61) and a rotation end (62), the sliding end (61) of the second transmission arm (6) is slidably connected to the second fastening bracket (32), the rotation end (62) of the second transmission arm (6) is rotatably connected to the main shaft assembly (1), one end of the second rotation arm (7) is rotatably connected to the second fastening bracket (32), the other end is rotatably connected to the main shaft assembly (1), and the second support plate (22) is lapped between the second fastening bracket (32) and the main shaft assembly (1), and is fixedly connected to the second rotation arm (7);
wherein the second rotation arm (7) includes a third rotation part (71) and a fourth rotation part (72), the third rotation part (71) includes a third fixed portion (711) and a third rotation portion (712), the fourth rotation part (72) includes a fourth fixed portion (721) and a fourth rotation portion (722), the third fixed portion (711) and the fourth fixed portion (721) are fastened to the second support plate (22); and
the one end of the second rotation arm (7) is rotatably connected to the second fastening bracket (32), the other end of the second rotation arm (7) is rotatably connected to the main shaft assembly (1), comprising: the second rotation arm (7) is rotatably connected to the second fastening bracket (32) by using the third rotation portion (712), and the second rotation arm (7) is rotatably connected to the main shaft assembly (1) by using the fourth rotation portion (722).

2. The rotation mechanism (20) according to claim 1, wherein the rotation end (42) of the first transmission arm (4) is rotatably connected to the main shaft assembly (1) by a first arc groove, the rotation end (62) of the second transmission arm (6) is rotatably connected to the main shaft assembly (1) by a second arc groove.

3. The rotation mechanism (20) according to claim 1 or 2, wherein
the one end of the first rotation arm (5) is rotatably connected to the first fastening bracket (31) by a virtual shaft or a real shaft,
the one end of the second rotation arm (7) is rotatably connected to the second fastening bracket (32) by a virtual shaft or a real shaft,
the other end of the first rotation arm (5) is rotatably connected to the main shaft assembly (1) by a virtual shaft or a real shaft,
the other end of the second rotation arm (7) is rotatably connected to the main shaft assembly (1) by a virtual shaft or a real shaft; wherein:
the one end of the first rotation arm (5) is rotatably connected to the first fastening bracket (31) by a virtual shaft, comprising: the one end of the first rotation arm (5) is rotatably connected to the first fastening bracket (31) by an arc groove;
the one end of the second rotation arm (7) is rotatably connected to the second fastening bracket (32) by a virtual shaft, comprising: the one end of the second rotation arm (7) is rotatably connected to the second fastening bracket (32) by an arc groove;
the other end of the first rotation arm (5) is rotatably connected to the main shaft assembly (1) by a virtual shaft, comprising: the other end of the first rotation arm (5) is rotatably connected to the main shaft assembly (1) by an arc groove; and
the other end of the second rotation arm (7) is rotatably connected to the main shaft assembly (1) by a virtual shaft, comprising: the other end of the second rotation arm (7) is rotatably connected to the main shaft assembly (1) by an arc groove.

4. The rotation mechanism (20) according to any one of claims 1 to 3, wherein: the one end of the first rotation arm (5) and the other end of the first rotation arm (5) is an integrally formed mechanical part; or, the one end of the first rotation arm (5) and the other end of the first rotation arm (5) are two mechanical parts independent of each other.

5. The rotation mechanism (20) according to any one of claims 1 to 4, wherein the main shaft assembly (1) has a support surface, the support surface of the main shaft assembly (1) is exposed relative to the first support plate (21) and the second support plate (22), and the support surface of the main shaft assembly (1) comprises a first arc surface region, a plane region, and a second arc surface region that are sequentially arranged in a direction from the first support plate (21) to the second support plate (22).

6. The rotation mechanism (20) according to claim 5, wherein when the rotation mechanism (20) is unfolded to an unfolded state, a support surface of the first support plate (21) and a support surface of the second support plate (22) are parallel to a plane region of a support surface of the main shaft assembly (1); and
when the rotation mechanism is folded to a closed state, the support surface of the first support plate (21) is inclined relative to the plane region of the support surface of the main shaft assembly (1), the support surface of the second support plate (22) is inclined relative to the plane region of the support surface of the main shaft assembly (1), and the support surface of the first support plate (21) and the support surface of the second support plate (22) are away from each other in a direction away from the support surface of the main shaft assembly (1).

7. The rotation mechanism (20) according to any one of claims 1 to 6, wherein the main shaft assembly (1) comprises a main inner shaft and a main outer shaft fastened to the main inner shaft, and the main outer shaft is partially exposed relative to the first support plate (21) and the second support plate (22);
the first transmission arm (4) and the main shaft assembly (1) are adapted to rotate relative to a first rotation center, wherein a distance between the first rotation center and the main inner shaft is less than a distance between the first rotation center and the main outer shaft;
the first rotation arm (5) and the main shaft assembly (1) are adapted to rotate relative to a second rotation center, wherein a distance between the second rotation center and the main outer shaft is less than a distance between the second rotation center and the main inner shaft;
the second transmission arm (6) and the main shaft assembly (1) are adapted to rotate relative to a third rotation center, wherein a distance between the third rotation center and the main inner shaft is less than a distance between the third rotation center and the main outer shaft;
the second rotation arm (7) and the main shaft assembly (1) are adapted to rotate relative to a fourth rotation center, wherein a distance between the fourth rotation center and the main outer shaft is less than a distance between the fourth rotation center and the main inner shaft.

8. The rotation mechanism (20) according to claim 7, wherein the main inner shaft and the main outer shaft jointly enclose a plurality of arc grooves;
the rotation end (42) of the first transmission arm (4) is in an arc shape and is disposed in a first arc groove of the plurality of arc grooves, and the end that is of the first rotation arm (5) and that is rotatably connected to the main shaft assembly (1) is in an arc shape and is disposed in a second arc groove of the plurality of arc grooves; and
the rotation end (62) of the second transmission arm (6) is in an arc shape and is disposed in a third arc groove of the plurality of arc grooves, and the end that is of the second rotation arm (7) and that is rotatably connected to the main shaft assembly (1) is in an arc shape and is disposed in a fourth arc groove of the plurality of arc grooves.

9. The rotation mechanism (20) according to any one of claims 1 to 8, wherein:
the first support plate (21) is fastened to a fixed portion of the first rotation arm (5) by using a first fastener;
the second support plate (22) is fastened to a fixed portion of the second rotation arm (7) by using a second fastener.

10. The rotation mechanism (20) according to any one of claims 1 to 9, wherein the rotation mechanism (20) further comprises a first shielding plate and a second shielding plate, the first shielding plate is located on a side that is of the first transmission arm (4) and that is away from the first support plate (21), and is fixedly connected to the sliding end (41) of the first transmission arm (4), and the second shielding plate is located on a side that is of the second transmission arm (6) and that is away from the second support plate (22), and is fixedly connected to the sliding end (61) of the second transmission arm (6);
when the rotation mechanism (20) is unfolded to the unfolded state, the first shielding plate is flush with the second shielding plate, the first shielding plate is lapped between the first fastening bracket (31) and the main shaft assembly (1), and the second shielding plate is lapped between the second fastening bracket (32) and the main shaft assembly (1); and
when the rotation mechanism is folded to the closed state, the first shielding plate is located between the first fastening bracket and a first housing, and the second shielding plate is located between the second fastening bracket and a second housing.

11. The rotation mechanism (20) according to any one of claims 1 to 10, wherein the rotation mechanism (20) further comprises a third fastening bracket, a fourth fastening bracket, a first synchronous swing arm, and a second synchronous swing arm;
the first synchronous swing arm comprises a rotation end and a movable end, the rotation end of the first synchronous swing arm is rotatably connected to the main shaft assembly (1), the movable end of the first synchronous swing arm is movably connected to the third fastening bracket; and
the second synchronous swing arm comprises a rotation end and a movable end, the rotation end of the second synchronous swing arm is rotatably connected to the main shaft assembly (1), the rotation end of the second synchronous swing arm is engaged with the rotation end of the first synchronous swing arm, the movable end of the second synchronous swing arm is movably connected to the fourth fastening bracket.

12. An electronic device, comprising a first housing, a second housing, a flexible display and the rotation mechanism (20) according to any one of claims 1 to 11, wherein
the first fastening bracket (31) is fastened to the first housing, the second fastening bracket (32) is fastened to the second housing;
the flexible display comprises a first non-bending part, a bending part, and a second non-bending part that are sequentially arranged, the first non-bending part is fastened to the first housing, the second non-bending part is fastened to the second housing, and the bending part is adapted to deform in a process in which the first housing and the second housing are folded or unfolded relative to each other.

13. The electronic device according to claim 12, wherein the flexible display is in an outer side of the electronic device when the electronic device is in a folded state.

14. The electronic device according to claim 12 or 13, wherein
when the rotation mechanism (20) is folded to the closed state, the first shielding plate is located between the first fastening bracket (31) and the first housing, and the second shielding plate is located between the second fastening bracket (32) and the second housing.

## Patentansprüche

1. Drehmechanismus (20), umfassend eine Hauptwellenbaugruppe (1), einen ersten Befestigungsbügel (31), einen ersten Übertragungsarm (4), einen ersten Dreharm (5), eine erste Stützplatte (21), einen zweiten Befestigungsbügel (32), einen zweiten Übertragungsarm (6), einen zweiten Dreharm (7) und eine zweite Stützplatte (22);
wobei der erste Übertragungsarm (4) ein gleitend verschiebbares Ende (41) und ein Drehende (42) umfasst, das gleitend verschiebbare Ende (41) des ersten Übertragungsarms (4) gleitend verschiebbar mit dem ersten Befestigungsbügel (31) verbunden ist, das Drehende (42) des ersten Übertragungsarms (4) drehbar mit der Hauptwellenbaugruppe (1) verbunden ist, ein Ende des ersten Dreharms (5) drehbar mit dem ersten Befestigungsbügel (31) verbunden ist, das andere Ende des ersten Dreharms (5) drehbar mit der Hauptwellenbaugruppe (1) verbunden ist und die erste Stützplatte (21) zwischen dem ersten Befestigungsbügel (31) und der Hauptwellenbaugruppe (1) eingeklemmt ist und mit dem ersten Dreharm (5) fest verbunden ist;
wobei der erste Dreharm (5) einen ersten Drehteil (51) und einen zweiten Drehteil (52) beinhaltet, der erste Drehteil 51 einen ersten festen Abschnitt (511) und einen ersten Drehabschnitt (512) beinhaltet, der zweite Drehteil (52) einen zweiten festen Abschnitt (521) und einen zweiten Drehabschnitt (522) beinhaltet, der erste feste Abschnitt (511) und der zweite feste Abschnitt (521) an der ersten Stützplatte (21) befestigt sind; das eine Ende des ersten Dreharms (5) drehbar mit dem ersten Befestigungsbügel (31) verbunden ist, das andere Ende des ersten Dreharms (5) drehbar mit der Hauptwellenbaugruppe (1) verbunden ist, Folgendes umfassend: der erste Dreharm (5) ist unter Verwendung des ersten Drehabschnitts (512) drehbar mit dem ersten Befestigungsbügel (31) verbunden und der erste Dreharm (5) ist unter Verwendung des zweiten Drehabschnitts (522) drehbar mit der Hauptwellenbaugruppe (1) verbunden;
der zweite Übertragungsarm (6) ein gleitend verschiebbares Ende (61) und ein Drehende (62) umfasst, wobei das gleitend verschiebbare Ende (61) des zweiten Übertragungsarms (6) gleitend verschiebbar mit dem zweiten Befestigungsbügel (32) verbunden ist, das Drehende (62) des zweiten Übertragungsarms (6) drehbar mit der Hauptwellenbaugruppe (1) verbunden ist, ein Ende des zweiten Dreharms (7) drehbar mit dem zweiten Befestigungsbügel (32) verbunden ist, das andere Ende drehbar mit der Hauptwellenbaugruppe (1) verbunden ist und die zweite Stützplatte (22) zwischen dem zweiten Befestigungsbügel (32) und der Hauptwellenbaugruppe (1) eingeklemmt ist und fest mit dem zweiten Dreharm (7) verbunden ist;
wobei der zweite Dreharm (7) einen dritten Drehteil (71) und einen vierten Drehteil (72) beinhaltet, der dritte Drehteil (71) einen dritten festen Abschnitt (711) und einen dritten Drehabschnitt (712) beinhaltet, das vierte Drehteil (72) einen vierten festen Abschnitt (721) und einen vierten Drehabschnitt (722) beinhaltet, wobei der dritte feste Abschnitt (711) und der vierte feste Abschnitt (721) an der zweiten Stützplatte (22) befestigt sind; und
das eine Ende des zweiten Dreharms (7) drehbar mit dem zweiten Befestigungsbügel (32) verbunden ist, das andere Ende des zweiten Dreharms (7) drehbar mit der Hauptwellenbaugruppe (1) verbunden ist, Folgendes umfassend: der zweite Dreharm (7) ist unter Verwendung des dritten Drehabschnitts (712) drehbar mit dem zweiten Befestigungsbügel (32) verbunden und der zweite Dreharm (7) ist unter Verwendung des vierten Drehabschnitts (722) drehbar mit der Hauptwellenbaugruppe (1) verbunden.

2. Drehmechanismus (20) nach Anspruch 1, wobei das Drehende (42) des ersten Übertragungsarms (4) durch eine erste Bogennut drehbar mit der Hauptwellenbaugruppe (1) verbunden ist, das Drehende (62) des zweiten Übertragungsarms (6) durch eine zweite Bogennut drehbar mit der Hauptwellenbaugruppe (1) verbunden ist.

3. Drehmechanismus (20) nach Anspruch 1 oder 2, wobei
das eine Ende des ersten Dreharms (5) durch eine virtuelle Welle oder eine reale Welle drehbar mit dem ersten Befestigungsbügel (31) verbunden ist,
das eine Ende des zweiten Dreharms (7) durch eine virtuelle Welle oder eine reale Welle drehbar mit dem zweiten Befestigungsbügel (32) verbunden ist,
das andere Ende des ersten Dreharms (5) durch eine virtuelle Welle oder eine reale Welle drehbar mit der Hauptwellenbaugruppe (1) verbunden ist,
das andere Ende des zweiten Dreharms (7) durch eine virtuelle Welle oder eine reale Welle drehbar mit der Hauptwellenbaugruppe (1) verbunden ist; wobei:
das eine Ende des ersten Dreharms (5) durch eine virtuelle Welle drehbar mit dem ersten Befestigungsbügel (31) verbunden ist, Folgendes umfassend: das eine Ende des ersten Dreharms (5) ist durch eine Bogennut drehbar mit dem ersten Befestigungsbügel (31) verbunden;
das eine Ende des zweiten Dreharms (7) durch eine virtuelle Welle drehbar mit dem zweiten Befestigungsbügel (32) verbunden ist, Folgendes umfassend: das eine Ende des zweiten Dreharms (7) ist durch eine Bogennut drehbar mit dem zweiten Befestigungsbügel (32) verbunden;
das andere Ende des ersten Dreharms (5) durch eine virtuelle Welle drehbar mit der Hauptwellenbaugruppe (1) verbunden ist, Folgendes umfassend: das andere Ende des ersten Dreharms (5) ist durch eine Bogennut drehbar mit der Hauptwellenbaugruppe (1) verbunden; und
das andere Ende des zweiten Dreharms (7) durch eine virtuelle Welle drehbar mit der Hauptwellenbaugruppe (1) verbunden ist, Folgendes umfassend: das andere Ende des zweiten Dreharms (7) ist durch eine Bogennut drehbar mit der Hauptwellenbaugruppe (1) verbunden.

4. Drehmechanismus (20) nach einem der Ansprüche 1 bis 3, wobei: das eine Ende des ersten Dreharms (5) und das andere Ende des ersten Dreharms (5) ein einstückig ausgebildeter mechanischer Teil sind; oder das eine Ende des ersten Dreharms (5) und das andere Ende des ersten Dreharms (5) zwei voneinander unabhängige mechanische Teile sind.

5. Drehmechanismus (20) nach einem der Ansprüche 1 bis 4, wobei die Hauptwellenbaugruppe (1) eine Stützfläche aufweist, die Stützfläche der Hauptwellenbaugruppe (1) relativ zu der ersten Stützplatte (21) und der zweiten Stützplatte (22) freiliegt und die Stützfläche der Hauptwellenbaugruppe (1) einen ersten Bogenflächenbereich, einen ebenen Bereich und einen zweiten Bogenflächenbereich umfasst, die in einer Richtung von der ersten Stützplatte (21) zu der zweiten Stützplatte (22) hin nacheinander angeordnet sind.

6. Drehmechanismus (20) nach Anspruch 5, wobei eine Stützfläche der ersten Stützplatte (21) und eine Stützfläche der zweiten Stützplatte (22) bei Entfaltung des Drehmechanismus (20) in einen entfalteten Zustand parallel zu einem ebenen Bereich von einer Stützfläche der Hauptwellenbaugruppe (1) verlaufen;
und
bei Faltung des Drehmechanismus in einen geschlossenen Zustand, die Stützfläche der ersten Stützplatte (21) relativ zu dem ebenen Bereich der Stützfläche der Hauptwellenbaugruppe (1) geneigt ist, die Stützfläche der zweiten Stützplatte (22) relativ zu dem ebenen Bereich der Stützfläche der Hauptwellenbaugruppe (1) geneigt ist und die Stützfläche der ersten Stützplatte (21) und die Stützfläche der zweiten Stützplatte (22) in einer Richtung von der Stützfläche der Hauptwellenbaugruppe (1) weg voneinander entfernt sind.

7. Drehmechanismus (20) nach einem der Ansprüche 1 bis 6, wobei die Hauptwellenbaugruppe (1) eine Hauptinnenwelle und eine an der Hauptinnenwelle befestigte Hauptaußenwelle umfasst und die Hauptaußenwelle teilweise relativ zu der ersten Stützplatte (21) und der zweiten Stützplatte (22) freigelegt ist;
der erste Übertragungsarm (4) und die Hauptwellenbaugruppe (1) dazu geeignet sind, sich relativ zu einem ersten Drehzentrum zu drehen, wobei ein Abstand zwischen dem ersten Drehzentrum und der Hauptinnenwelle geringer als ein Abstand zwischen dem ersten Drehzentrum und der Hauptaußenwelle ist;
der erste Dreharm (5) und die Hauptwellenbaugruppe (1) dazu geeignet sind, sich relativ zu einem zweiten Drehzentrum zu drehen, wobei ein Abstand zwischen dem zweiten Drehzentrum und der Hauptaußenwelle geringer als ein Abstand zwischen dem zweiten Drehzentrum und der Hauptinnenwelle ist;
der zweite Übertragungsarm (6) und die Hauptwellenbaugruppe (1) dazu geeignet sind, sich relativ zu einem dritten Drehzentrum zu drehen, wobei ein Abstand zwischen dem dritten Drehzentrum und der Hauptinnenwelle geringer als ein Abstand zwischen dem dritten Drehzentrum und der Hauptaußenwelle ist;
der zweite Dreharm (7) und die Hauptwellenbaugruppe (1) dazu geeignet sind, sich relativ zu einem vierten Drehzentrum zu drehen, wobei ein Abstand zwischen dem vierten Drehzentrum und der Hauptaußenwelle geringer als ein Abstand zwischen dem vierten Drehzentrum und der Hauptinnenwelle ist.

8. Drehmechanismus (20) nach Anspruch 7, wobei die Hauptinnenwelle und die Hauptaußenwelle gemeinsam eine Vielzahl von Bogennuten einschließen;
das Drehende (42) des ersten Übertragungsarms (4) bogenförmig ist und in einer ersten Bogennut der Vielzahl von Bogennuten angeordnet ist, und das Ende, das von dem ersten Dreharm (5) ist und das drehbar mit der Hauptwellenbaugruppe (1) verbunden ist, bogenförmig ist und in einer zweiten Bogennut der Vielzahl von Bogennuten angeordnet ist; und
das Drehende (62) des zweiten Übertragungsarms (6) bogenförmig ist und in einer dritten Bogennut der Vielzahl von Bogennuten angeordnet ist, und das Ende, das von dem zweiten Dreharm (7) ist und das drehbar mit der Hauptwellenbaugruppe (1) verbunden ist, bogenförmig ist und in einer vierten Bogennut der Vielzahl von Bogennuten angeordnet ist.

9. Drehmechanismus (20) nach einem der Ansprüche 1 bis 8, wobei:
die erste Stützplatte (21) unter Verwendung eines ersten Befestigungselements an einem festen Abschnitt des ersten Dreharms (5) befestigt ist;
die zweite Stützplatte (22) unter Verwendung eines zweiten Befestigungselements an einem festen Abschnitt des zweiten Dreharms (7) befestigt ist.

10. Drehmechanismus (20) nach einem der Ansprüche 1 bis 9, wobei der Drehmechanismus (20) ferner eine erste Abschirmplatte und eine zweite Abschirmplatte umfasst, sich die erste Abschirmplatte auf einer Seite befindet, die von dem ersten Übertragungsarm (4) ist und von der ersten Stützplatte (21) entfernt ist sowie fest mit dem gleitend verschiebbaren Ende (41) des ersten Übertragungsarms (4) verbunden ist, und sich die zweite Abschirmplatte auf einer Seite befindet, die von dem zweiten Übertragungsarm (6) ist und von der zweiten Stützplatte (22) entfernt ist sowie fest mit dem gleitend verschiebbaren Ende (61) des zweiten Übertragungsarms (6) verbunden ist;
bei Entfaltung des Drehmechanismus (20) in den entfalteten Zustand, die erste Abschirmplatte mit der zweiten Abschirmplatte bündig ist, die erste Abschirmplatte zwischen dem ersten Befestigungsbügel (31) und der Hauptwellenbaugruppe (1) eingeklemmt ist und die zweite Abschirmplatte zwischen dem zweiten Befestigungsbügel (32) und der Hauptwellenbaugruppe (1) eingeklemmt ist; und
bei Faltung des Drehmechanismus in den geschlossenen Zustand, sich die erste Abschirmplatte zwischen dem ersten Befestigungsbügel und einem ersten Gehäuse befindet und sich die zweite Abschirmplatte zwischen dem zweiten Befestigungsbügel und einem zweiten Gehäuse befindet.

11. Drehmechanismus (20) nach einem der Ansprüche 1 bis 10, wobei der Drehmechanismus (20) ferner einen dritten Befestigungsbügel, einen vierten Befestigungsbügel, einen ersten Synchronschwingarm und einen zweiten Synchronschwingarm umfasst;
der erste Synchronschwingarm ein Drehende und ein bewegliches Ende umfasst, das Drehende des ersten Synchronschwingarms drehbar mit der Hauptwellenbaugruppe (1) verbunden ist, das bewegliche Ende des ersten Synchronschwingarms beweglich mit dem dritten Befestigungsbügel verbunden ist; und
der zweite Synchronschwingarm ein Drehende und ein bewegliches Ende umfasst, das Drehende des zweiten Synchronschwingarms drehbar mit der Hauptwellenbaugruppe (1) verbunden ist, das Drehende des zweiten Synchronschwingarms mit dem Drehende des ersten Synchronschwingarms in Eingriff steht, das bewegliche Ende des zweiten Synchronschwingarms beweglich mit dem vierten Befestigungsbügel verbunden ist.

12. Elektronische Vorrichtung, umfassend ein erstes Gehäuse, ein zweites Gehäuse, eine flexible Anzeige und den Drehmechanismus (20) nach einem der Ansprüche 1 bis 11, wobei der erste Befestigungsbügel (31) an dem ersten Gehäuse befestigt ist und der zweite Befestigungsbügel (32) an dem zweiten Gehäuse befestigt ist;
die flexible Anzeige einen ersten nicht biegsamen Teil, einen biegsamen Teil und einen zweiten nicht biegsamen Teil umfasst, die nacheinander angeordnet sind, der erste nicht biegsame Teil an dem ersten Gehäuse befestigt ist, der zweite nicht biegsame Teil an dem zweiten Gehäuse befestigt ist und der biegsame Teil geeignet ist, sich in einem Prozess zu verformen, bei welchem das erste Gehäuse und das zweite Gehäuse relativ zueinander gefaltet oder entfaltet werden.

13. Elektronische Vorrichtung nach Anspruch 12, wobei sich die flexible Anzeige an einer Außenseite der elektronischen Vorrichtung befindet, wenn sich die elektronische Vorrichtung in einem gefalteten Zustand befindet.

14. Elektronische Vorrichtung nach Anspruch 12 oder 13, wobei bei Faltung des Drehmechanismus (20) in den geschlossenen Zustand, sich die erste Abschirmplatte zwischen dem ersten Befestigungsbügel (31) und dem ersten Gehäuse befindet und sich die zweite Abschirmplatte zwischen dem zweiten Befestigungsbügel (32) und dem zweiten Gehäuse befindet.

## Revendications

1. Mécanisme de rotation (20), comprenant un ensemble arbre principal (1), un premier support de fixation (31), un premier bras de transmission (4), un premier bras de rotation (5), une première plaque de support (21), un deuxième support de fixation (32), un second bras de transmission (6), un second bras de rotation (7) et une seconde plaque de support (22) ;
dans lequel le premier bras de transmission (4) comprend une extrémité coulissante (41) et une extrémité de rotation (42), l'extrémité coulissante (41) du premier bras de transmission (4) est reliée de manière coulissante au premier support de fixation (31), l'extrémité de rotation (42) du premier bras de transmission (4) est reliée de manière rotative à l'ensemble arbre principal (1), une extrémité du premier bras de rotation (5) est reliée de manière rotative au premier support de fixation (31), l'autre extrémité du premier bras de rotation (5) est reliée de manière rotative à l'ensemble arbre principal (1), et la première plaque de support (21) est encastrée entre le premier support de fixation (31) et l'ensemble arbre principal (1), et est reliée de manière fixe au premier bras de rotation (5) ;
dans lequel le premier bras de rotation (5) comporte une première pièce de rotation (51) et une deuxième pièce de rotation (52), la première pièce de rotation (51) comporte une première partie fixe (511) et une première partie de rotation (512), la deuxième pièce de rotation (52) comporte une deuxième partie fixe (521) et une deuxième partie de rotation (522), la première partie fixe (511) et la deuxième partie fixe (521) sont fixées à la première plaque de support (21) ;
l'extrémité du premier bras de rotation (5) est reliée de manière rotative au premier support de fixation (31), l'autre extrémité du premier bras de rotation (5) est reliée de manière rotative à l'ensemble arbre principal (1), comprenant : le premier bras de rotation (5) est relié de manière rotative au premier support de fixation (31) à l'aide de la première partie de rotation (512), et le premier bras de rotation (5) est relié de manière rotative à l'ensemble arbre principal (1) à l'aide de la deuxième partie de rotation (522) ;
le second bras de transmission (6) comprend une extrémité coulissante (61) et une extrémité de rotation (62), l'extrémité coulissante (61) du second bras de transmission (6) est reliée de manière coulissante au deuxième support de fixation (32), l'extrémité de rotation (62) du second bras de transmission (6) est reliée de manière rotative à l'ensemble arbre principal (1), une extrémité du second bras de rotation (7) est reliée de manière rotative au deuxième support de fixation (32), l'autre extrémité est reliée de manière rotative à l'ensemble arbre principal (1), et la seconde plaque de support (22) est encastrée entre le deuxième support de fixation (32) et l'ensemble arbre principal (1), et est reliée de manière fixe au second bras de rotation (7) ;
dans lequel le second bras de rotation (7) comporte une troisième pièce de rotation (71) et une quatrième pièce de rotation (72), la troisième pièce de rotation (71) comporte une troisième partie fixe (711) et une troisième partie de rotation (712), la quatrième pièce de rotation (72) comporte une quatrième partie fixe (721) et une quatrième partie de rotation (722), la troisième partie fixe (711) et la quatrième partie fixe (721) sont fixées à la seconde plaque de support (22) ; et
l'extrémité du second bras de rotation (7) est reliée de manière rotative au deuxième support de fixation (32), l'autre extrémité du second bras de rotation (7) est reliée de manière rotative à l'ensemble arbre principal (1), comprenant : le second bras de rotation (7) est relié de manière rotative au deuxième support de fixation (32) à l'aide de la troisième partie de rotation (712), et le second bras de rotation (7) est relié de manière rotative à l'ensemble arbre principal (1) à l'aide de la quatrième partie de rotation (722).

2. Mécanisme de rotation (20) selon la revendication 1, dans lequel l'extrémité de rotation (42) du premier bras de transmission (4) est reliée de manière rotative à l'ensemble arbre principal (1) par une première rainure en arc, l'extrémité de rotation (62) du second bras de transmission (6) est reliée de manière rotative à l'ensemble arbre principal (1) par une deuxième rainure en arc.

3. Mécanisme de rotation (20) selon la revendication 1 ou 2, dans lequel
l'extrémité du premier bras de rotation (5) est reliée de manière rotative au premier support de fixation (31) par un arbre virtuel ou un arbre réel,
l'extrémité du second bras de rotation (7) est reliée de manière rotative au deuxième support de fixation (32) par un arbre virtuel ou un arbre réel,
l'autre extrémité du premier bras de rotation (5) est reliée de manière rotative à l'ensemble arbre principal (1) par un arbre virtuel ou un arbre réel,
l'autre extrémité du second bras de rotation (7) est reliée de manière rotative à l'ensemble arbre principal (1) par un arbre virtuel ou un arbre réel ; dans lequel :
l'extrémité du premier bras de rotation (5) est reliée de manière rotative au premier support de fixation (31) par un arbre virtuel, comprenant : l'extrémité du premier bras de rotation (5) est reliée de manière rotative au premier support de fixation (31) par une rainure en arc ;
l'extrémité du second bras de rotation (7) est reliée de manière rotative au deuxième support de fixation (32) par un arbre virtuel, comprenant : l'extrémité du second bras de rotation (7) est reliée de manière rotative au deuxième support de fixation (32) par une rainure en arc ;
l'autre extrémité du premier bras de rotation (5) est reliée de manière rotative à l'ensemble arbre principal (1) par un arbre virtuel, comprenant : l'autre extrémité du premier bras de rotation (5) est reliée de manière rotative à l'ensemble arbre principal (1) par une rainure en arc ; et
l'autre extrémité du second bras de rotation (7) est reliée de manière rotative à l'ensemble arbre principal (1) par un arbre virtuel, comprenant : l'autre extrémité du second bras de rotation (7) est reliée de manière rotative à l'ensemble arbre principal (1) par une rainure en arc.

4. Mécanisme de rotation (20) selon l'une quelconque des revendications 1 à 3, dans lequel : l'extrémité du premier bras de rotation (5) et l'autre extrémité du premier bras de rotation (5) sont une pièce mécanique formée d'un seul tenant ; ou, l'extrémité du premier bras de rotation (5) et l'autre extrémité du premier bras de rotation (5) sont deux pièces mécaniques indépendantes l'une de l'autre.

5. Mécanisme de rotation (20) selon l'une quelconque des revendications 1 à 4, dans lequel l'ensemble arbre principal (1) a une surface de support, la surface de support de l'ensemble arbre principal (1) est exposée par rapport à la première plaque de support (21) et la seconde plaque de support (22), et la surface de support de l'ensemble arbre principal (1) comprend une première région de surface en arc, une région plane et une seconde région de surface en arc qui sont agencées séquentiellement dans une direction allant de la première plaque de support (21) à la seconde plaque de support (22).

6. Mécanisme de rotation (20) selon la revendication 5, dans lequel lorsque le mécanisme de rotation (20) est déplié dans un état déplié, une surface de support de la première plaque de support (21) et une surface de support de la seconde plaque de support (22) sont parallèles à une région plane d'une surface de support de l'ensemble arbre principal (1) ; et
lorsque le mécanisme de rotation est plié dans un état fermé, la surface de support de la première plaque de support (21) est inclinée par rapport à la région plane de la surface de support de l'ensemble arbre principal (1), la surface de support de la seconde plaque de support (22) est inclinée par rapport à la région plane de la surface de support de l'ensemble arbre principal (1), et la surface de support de la première plaque de support (21) et la surface de support de la seconde plaque de support (22) sont éloignées l'une de l'autre dans une direction s'éloignant de la surface de support de l'ensemble arbre principal (1).

7. Mécanisme de rotation (20) selon l'une quelconque des revendications 1 à 6, dans lequel l'ensemble arbre principal (1) comprend un arbre interne principal et un arbre externe principal fixé à l'arbre interne principal, et l'arbre externe principal est partiellement exposé par rapport à la première plaque de support (21) et à la seconde plaque de support (22) ; le premier bras de transmission (4) et l'ensemble arbre principal (1) sont conçus pour tourner par rapport à un premier centre de rotation, dans lequel une distance entre le premier centre de rotation et l'arbre interne principal est inférieure à une distance entre le premier centre de rotation et l'arbre externe principal ;
le premier bras de rotation (5) et l'ensemble arbre principal (1) sont conçus pour tourner par rapport à un deuxième centre de rotation, dans lequel une distance entre le deuxième centre de rotation et l'arbre externe principal est inférieure à une distance entre le deuxième centre de rotation et l'arbre interne principal ;
le second bras de transmission (6) et l'ensemble arbre principal (1) sont conçus pour tourner par rapport à un troisième centre de rotation, dans lequel une distance entre le troisième centre de rotation et l'arbre interne principal est inférieure à une distance entre le troisième centre de rotation et l'arbre externe principal ;
le second bras de rotation (7) et l'ensemble arbre principal (1) sont conçus pour tourner par rapport à un quatrième centre de rotation, dans lequel une distance entre le quatrième centre de rotation et l'arbre externe principal est inférieure à une distance entre le quatrième centre de rotation et l'arbre interne principal.

8. Mécanisme de rotation (20) selon la revendication 7, dans lequel l'arbre interne principal et l'arbre externe principal enferment conjointement une pluralité de rainures en arc ;
l'extrémité de rotation (42) du premier bras de transmission (4) est en forme d'arc et est disposée dans une première rainure en arc de la pluralité de rainures en arc, et l'extrémité qui est du premier bras de rotation (5) et qui est reliée de manière rotative à l'ensemble arbre principal (1) est en forme d'arc et est disposée dans une deuxième rainure en arc de la pluralité de rainures en arc ; et
l'extrémité de rotation (62) du second bras de transmission (6) est en forme d'arc et est disposée dans une troisième rainure en arc de la pluralité de rainures en arc, et l'extrémité qui est du second bras de rotation (7) et qui est reliée de manière rotative à l'ensemble arbre principal (1) est en forme d'arc et est disposée dans une quatrième rainure en arc de la pluralité de rainures en arc.

9. Mécanisme de rotation (20) selon l'une quelconque des revendications 1 à 8, dans lequel :
la première plaque de support (21) est fixée à une partie fixe du premier bras de rotation (5) à l'aide d'une première attache ;
la seconde plaque de support (22) est fixée à une partie fixe du second bras de rotation (7) à l'aide d'une seconde attache.

10. Mécanisme de rotation (20) selon l'une quelconque des revendications 1 à 9, dans lequel le mécanisme de rotation (20) comprend en outre une première plaque de protection et une seconde plaque de protection, la première plaque de protection est située sur un côté qui est du premier bras de transmission (4) et qui est éloigné de la première plaque de support (21), et est reliée de manière fixe à l'extrémité coulissante (41) du premier bras de transmission (4), et la seconde plaque de protection est située sur un côté qui est du second bras de transmission (6) et qui est éloigné de la seconde plaque de support (22) et est reliée de manière fixe à l'extrémité coulissante (61) du second bras de transmission (6) ;
lorsque le mécanisme de rotation (20) est déplié dans l'état déplié, la première plaque de protection affleure la seconde plaque de protection, la première plaque de protection est encastrée entre le premier support de fixation (31) et l'ensemble arbre principal (1), et la seconde plaque de protection est encastrée entre le deuxième support de fixation (32) et l'ensemble arbre principal (1) ; et
lorsque le mécanisme de rotation est plié dans l'état fermé, la première plaque de protection est située entre le premier support de fixation et un premier boîtier, et la seconde plaque de protection est située entre le deuxième support de fixation et un second boîtier.

11. Mécanisme de rotation (20) selon l'une quelconque des revendications 1 à 10, dans lequel le mécanisme de rotation (20) comprend en outre un troisième support de fixation, un quatrième support de fixation, un premier bras oscillant synchrone et un second bras oscillant synchrone ;
le premier bras oscillant synchrone comprend une extrémité de rotation et une extrémité mobile, l'extrémité de rotation du premier bras oscillant synchrone est reliée de manière rotative à l'ensemble arbre principal (1), l'extrémité mobile du premier bras oscillant synchrone est reliée de manière mobile au troisième support de fixation ; et
le second bras oscillant synchrone comprend une extrémité de rotation et une extrémité mobile, l'extrémité de rotation du second bras oscillant synchrone est reliée de manière rotative à l'ensemble arbre principal (1), l'extrémité de rotation du second bras oscillant synchrone est en prise avec l'extrémité de rotation du premier bras oscillant synchrone, l'extrémité mobile du second bras oscillant synchrone est reliée de manière mobile au quatrième support de fixation.

12. Dispositif électronique, comprenant un premier boîtier, un second boîtier, un affichage flexible et le mécanisme de rotation (20) selon l'une quelconque des revendications 1 à 11, dans lequel
le premier support de fixation (31) est fixé au premier boîtier, le deuxième support de fixation (32) est fixé au second boîtier ; l'affichage flexible comprend une première pièce non pliante, une pièce pliante et une seconde pièce non pliante qui sont agencées séquentiellement, la première pièce non pliante est fixée au premier boîtier, la seconde pièce non pliante est fixée au second boîtier, et la pièce pliante est conçue pour se déformer dans un processus dans lequel le premier boîtier et le second boîtier sont pliés ou dépliés l'un par rapport à l'autre.

13. Dispositif électronique selon la revendication 12, dans lequel l'affichage flexible se trouve sur un côté externe du dispositif électronique lorsque le dispositif électronique est dans un état plié.

14. Dispositif électronique selon la revendication 12 ou 13, dans lequel
lorsque le mécanisme de rotation (20) est plié dans l'état fermé, la première plaque de protection est située entre le premier support de fixation (31) et le premier boîtier, et la seconde plaque de protection est située entre le deuxième support de fixation (32) et le second boîtier.
